(19) Europäisches Patentamt

European Patent Office

Office européen des brevets

(11) **EP 1 003 948 B1**

## (12) EUROPÄISCHE PATENTSCHRIFT

(45) Veröffentlichungstag und Bekanntmachung des Hinweises auf die Patenterteilung:
**14.01.2004   Patentblatt 2004/03**

(21) Anmeldenummer: **98946334.4**

(22) Anmeldetag: **13.08.1998**

(51) Int Cl.⁷: $E04H\ 9/02$, $E02D\ 27/34$

(86) Internationale Anmeldenummer:
**PCT/EP1998/005158**

(87) Internationale Veröffentlichungsnummer:
**WO 1999/009278 (25.02.1999 Gazette 1999/08)**

(54) **ERDBEBENSICHERUNG DURCH SCHWINGUNGSENTKOPPELTE LAGERUNG VON GEBÄUDEN UND OBJEKTEN ÜBER VIRTUELLE PENDEL MIT LANGER PERIODENDAUER**

EARTHQUAKE PROTECTION CONSISTING OF VIBRATION-ISOLATED MOUNTING OF BUILDINGS AND OBJECTS USING VIRTUAL PENDULUMS WITH LONG CYCLES

PROTECTION ANTISISMIQUE PAR POSE, DECOUPLEE DES ONDES, DES BATIMENTS ET OBJETS SUR UN PENDULE VIRTUEL DE LONGUE PERIODE

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **13.08.1997   DE 19734993**

(43) Veröffentlichungstag der Anmeldung:
**31.05.2000   Patentblatt 2000/22**

(73) Patentinhaber: **Plandesign International LLC Charlestown (KN)**

(72) Erfinder: **Bierwirth, Friedhelm**
**45964 Gladbeck (DE)**

(74) Vertreter: **Stenger, Watzke & Ring Patentanwälte Kaiser-Friedrich-Ring 70 40547 Düsseldorf (DE)**

(56) Entgegenhaltungen:
**US-A- 3 997 976          US-A- 4 328 648**

• **PATENT ABSTRACTS OF JAPAN vol. 018, no. 677 (M-1727), 20. Dezember 1994 & JP 06 264960 A (KAJIMA CORP), 20. September 1994**

**Beschreibung**

1 Anwendungsbereich der Erfindung

1.1 Allgemeine Anwendung

Die vorliegende Erfindung bezieht sich auf ein Verfahren und darauf basierende Vorrichtungen als Erdbebenschutz zur Schadensverhinderung an Gebäuden und sonstigen Objekten.

Die erfindungsgemäßen Lasttrag-Vorrichtungen, neuartige Erdbebenschutz-Module sind relativ einfach auszuführende Tragstrukturen, die jeweils einen Laststützpunkt eines Gebäudes oder anderen Objekts tragen, z.B. jeweils anstelle einer Säule.

Die Erdbebenschutz-Module auf der Basis virtueller Pendel können für sehr verschiedene Anwendungen entworfen werden zur Abstützung von leichten bis zu schwersten Objekten.

Diese Erdbebenschutz-Module basieren auf einem neuen Verfahren, virtuelle Pendel zu gestalten und sind besonders vorteilhaft einzusetzen zur erdbebenunempfindlichen Lagerung und Stützung von Gebäuden und Strukturen aller Art, von Mobilheimen bis zu Wohnhäusern, Einkaufszentren, Parkhäusern, Krankenhäusern, Wolkenkratzern, Türmen, Brücken, Hochstraßen, Wasser-Hochbehälter, Lagertanks, Silos, Seilbahnen und Seilbahnmasten, Hochspannungsmasten, Beleuchtungseinrichtungen, Industrie-, Chemie- und Nuklear-Anlagen, Rohrbrücken und hochgelegte Rohrstraßen, Pipelines oder sonstiger Objekte, um sie von den horizontalen Erdbebenbewegungen und Beschleunigungen zu isolieren und vor den daraus hervorgerufenen Kräften und den zerstörerischen Einwirkungen zu schützen.

Besonders bei der Errichtung von sicherheitssensitiven Anlagen, bei denen Zerstörungen oder Beschädigungen zu weitergehenden Folgeschäden führen können, wie bei nukleartechnischen Einrichtungen und Chemieanlagen mit gefährlichen Stoffen hat die Sicherung gegen Erdbebenschäden eine besonders wichtige Bedeutung.

Das System ist auch besonders für Brücken geeignet. Es werden die Probleme völlig beseitigt, für die bisher bekannte Systeme keine Lösung bereitstellen.

Auch bringt die Anwendung des Erdbebenschutz-Systems Vorteile bei Industrieeinrichtungen mit empfindlichen Produktionsprozessen, wie in der Chip-Fertigung.

Der Schutz der Objekte ist hierbei so weitgehend, daß die zu schützenden Gebäude oder Anlagen von der Bodenbewegung völlig isoliert werden und auf derselben Stelle in Ruhelage bleiben, selbst bei Erdbeben größter Magnitude.

Der so weitgehende Schutz wäre auch besonders nützlich bei Krankenhäusern, die bei Erdbeben nicht schnell evakuiert werden können und die im Katastrophenfall ungestört in Funktion bleiben können, wenn bereits Katastrophenopfer medizinisch zu versorgen sind. Operationen würden sogar während eines starken Nachbebens nicht behindert.

Die Anwendung der vorliegenden Erfindung verringert die Gefahr der Bodenverflüssigung, die bei Erdbeben und bestimmten Bau-Untergründen auftreten kann, in hohem Maße, weil die reaktive Wirkung der Gebäudemasse auf den Untergrund bei Bodenschwingungen auf extrem geringe Werte reduziert wird.

Die Wirkung einer Explosion in der Nähe eines durch ein System entsprechend der vorliegenden Erfindung gestützten Objekts wird ebenfalls gemindert.

Hängende Objekte wie Beleuchtungseinrichtungen, von denen Brandgefahren und Gefährdungspotential ausgehen, lassen sich durch Aufhängung an virtuellen Pendeln auch vor Beschädigung oder Zerstörung schützen.

Objekte auf Pfählen und Masten, die durch Erdbeben auch gefährdet sind, können durch das erfindungsgemäße Verfahren auch geschützt werden.

Schwingungstilgung an Türmen, hohen Masten und Industrie-Kaminen durch aktiv oder passiv bewegte Massen läßt sich ebenfalls vorteilhaft mittels virtueller Pendel erreichen.

Das Erdbebenschutz-Modul auf der Basis virtueller Pendel ist ein Basis-Isolations-System, eine kompakte, passiv wirkende, lasttragende Vorrichtung, die im Untergeschoß oder Erdgeschoß eines Gebäudes eingebaut wird. Das System verhütet die Übertragung von Schwingungen und Stößen des Erdbodens auf das gestützte Objekt bei Erdbeben. Durch das Erdbebenschutz-Modul wird ein Gebäude von allen Bewegungen des Untergrunds entkoppelt.

Zusätzlich hat das System folgende Charakteristiken: Es zentriert sich selbst und erlaubt keine horizontalen Verschiebungen durch geringere Kräfte, die durch Wind oder Sturm verursacht werden. Für hohe Gebäude verhindert vertikale Steifheit eine Nickneigung. Bei Gebäuden bis zu einem bestimmten Verhältnis von Höhe zu Breite kann wahlweise eine weitere Komponente eingebaut werden, um auch vertikale Schwingungen zu absorbieren. Das System kann für jede notwendige horizontale Schwingamplitude ausgelegt werden. Das Erdbebenschutz-Modul läßt sich wartungsfrei gestalten.

Bei geringer Bauhöhe ermöglicht ein solches Erdbebenschutz-Modul dem getragenen Objekt eine große Schwingweite in allen Richtungen und hat eine lange Periodendauer der Eigenschwingung. Die maximal auf den Baukörper oder das getragene Objekt einwirkenden Beschleunigungen werden reduziert auf Werte kleiner als 0,01g. Dies ist mathematisch ermittelt und das System danach auslegbar. Die Erwartungen wurden durch Modell-Versuche auf einem Rütteltisch auf Anhieb bestätigt.

In einem extrem starken Erdbeben, wie sie gelegentlich auch in gewissen Regionen vorkommen, reicht der Schutz bisheriger Schutzsysteme und der konventionellen Design-Methoden entsprechend den Bauvorschriften nicht aus, Zerstörungen sind beträchtlich.

Im Gegensatz hierzu hat bei Anwendung des Erdbebenschutz-Systems auf der Basis virtueller Pendel die Magnitude eines Bebens, die Schwingweite und die Schwingfrequenz des Bodens keinen Einfluß auf das Verhalten des Systems und die geradezu ruhende Lage eines durch die neuen Erdbebenschutz-Module mit langer Periodendauer der Eigenschwingung getragenen Objekts.

1.2 Nachrüstung bestehender Häuser

Die nachträgliche Ausrüstung mit Erdbebenschutz-Modulen ist ebenfalls möglich.

Bei bestehenden Gebäuden in Skelettbauweise ist die Nachrüstung grundsätzlich gut möglich, und in vielen Fällen läßt sie sich relativ einfach durchführen.

Bei alter Bausubstanz in Massivbauweise ist die Erdbebenertüchtigung durch Nachrüstung grundsätzlich auch möglich. Mit konventionellen Mitteln ist eine solche Maßnahme jedoch mit einem relativ hohen Aufwand verbunden.

Mit einem neuartigen in Entwicklung stehenden Verfahren und dafür vorgesehenen speziellen Maschinen und Ausrüstungen für die Nachrüstung mit Erdbebenschutz-Modulen wird es möglich werden, in einem hochmechanisierten Arbeitsablauf die Erdbebenertüchtigung von bestehenden und auch antiken Gebäuden und anderen Objekten mit dieser neuen Erdbebenschutz-Technologie wirtschaftlich und rationell mit vertretbaren Kosten durchzuführen. Dieses innovative Nachrüstverfahren wird bei Gebäuden sowohl auf normalen Böden als auch auf Felsgrund gebauten Häusern anwendbar sein.

2 Hintergrund

Die Kontinentalplatten-Verschiebung, ein Phänomen der Geophysik, erzeugt immer wieder vorkommende Erdbeben.

Weltweites Problem durch Erdbeben

Da Erdbeben sehr häufig viele Todesopfer fordern und immense volkswirtschaftliche Schäden verursachen, ist eine Verbesserung der Sicherheit gegen Erdbebenauswirkungen wünschenswert. Es sollten Möglichkeiten geschaffen werden, die geeignet sind, zukünftig das Problem weitgehend zu entschärfen. Allein in diesem Jahrhundert sind ca. 1,6 Millionen Menschen ums Leben gekommen. Weltweit sind mehr als 40 Länder von Erdbeben ständig bedroht.

Diesen Gefahren soll mit der vorliegenden Erfindung der Schrecken genommen werden. Angewandte Mechanik aus der Physik macht dies möglich und entschärft die Gefährdung aus der Geophysik.

3 Stand der Technik

3.1 Bauvorschriften zur Erdbebensicherheit

Die Gebäude-Konstruktionsrichtlinien in erdbebengefährdeten Regionen berücksichtigen in der Regel eine festgelegte geringere Erdbebenstärke, wie sie aus statistischen Betrachtungen in häufigeren Vorkommnissen wahrscheinlich ist, und bestimmen danach die Auslegung für die notwendige Festigkeit der Gebäudestrukturen.

Hierbei werden zunehmend besonders Möglichkeiten berücksichtigt, die darauf abzielen, in bestimmten Bereichen der Gebäudestruktur Elastizitäten vorzusehen, wodurch bei elastischen Verformungen der Gebäudetragstruktur die Kräfte, die durch die Struktur zu übertragen sind, örtlich gemindert werden können, dadurch daß die darüber befindlichen Masseanteile des Gebäudes durch die elastischen Verformungen gegenüber der einleitenden Bewegung zurückbleiben und hierdurch die Spitzenwerte der Beschleunigungen reduziert werden.

Bei einem Erdbeben, bei dem die den Bauvorschriften zugrundeliegenden Belastungswerte überschritten werden, ist Beschädigung oder Zerstörung der Gebäude und Gefahr für Menschenleben zu erwarten, wie Erdbebenvorkommnisse der letzten Zeit deutlich gezeigt haben.

Man muß somit feststellen, daß die Methoden der erdbebensicheren Auslegung der Gebäude durch entsprechende Berechnung und Dimensionierung bei stärkeren Beben unzureichend sind.

Nach den Erdbebensicherheits-Bauvorschriften werden sogenannte Referenzbeben definiert, für die nach den Methoden der Auslegungsberechnung eine Sicherheit für die zugrundegelegten Lastfälle nachgewiesen werden muß.

Die hierbei zu treffenden Annahmen bezüglich des Gebäudeverhaltens und der Struktur-Elastizitäten haben einen hohen Grad an Unsicherheit.

Die diesen Referenzbeben zugrundeliegenden Beschleunigungen werden bei realen Beben häufig überschritten, mitunter auch erheblich.

Eine Auslegung auf solche Extremfälle wäre ohnehin technisch nicht durchführbar. Bei Extrembeben versagen alle konventionell gestalteten Strukturen.

Die bisherige Meinung der Fachwelt, daß die zerstörerischen Einflüsse der Erdbodenbewegungen und der hierdurch einwirkenden Kräfte auf ein Bauwerk durch eine äußerst feste Konstruktion oder durch Anwendung von elastischen und schwingungsdämpfenden Gliedern ausgeschaltet werden können, hat sich augenscheinlich nicht bestätigt.

Auch die Vorstellung, daß durch Reibung bzw. Dämpfung ein schädlicher Einfluß aus der Erdbebenbewegung gemindert werden kann, erscheint aussichtslos.

Die Berechnungsmethoden nach den gesetzlichen Baunormen gehen von stark vereinfachten Lastfall-Modellen aus. Diese vereinfachten Verfahren liefern auch ungenügende Genauigkeit der Resultate. Es ist auch nicht möglich, durch Analyse herauszufinden, welches Bauteil als erstes versagen wird und damit ein Einstürzen des Gebäudes einleitet. Diese Auslegungsberechnungsmethoden für Gebäude können allenfalls dazu dienen, daß in jeweiligen Regionen regelmäßig wiederkehrende schwache Erdbeben von den Gebäuden ohne gefährdende Schädigungen ertragen werden.

Die Schlußfolgerung daraus ist, daß diese Methoden unzureichend sind, wirklich erdbebensichere Gebäude zu erstellen.

Die umfangreichen Zerstörungen durch Erdbeben weltweit auch in jüngster Zeit, die materiellen Schäden und nicht zuletzt die Opfer an Menschenleben machen deutlich, daß es Ziel sein muß, eine Verbesserung des Erdbebenschutzes zu erreichen.

3.2 Bewertung konventioneller Methoden zur Erdbebensicherheit

Der Schwerpunkt eines Baukörpers liegt durchweg oberhalb seiner Grundfläche. Die Bewegung der Basis muß also auf den Schwerpunkt des Gebäudes übertragen werden. Die durch den Baukörper zu leitende Kraft in Form von Schub ist die Reaktion der Trägheit der Masse in der Größe des Produkts aus Masse und der auf die Masse einwirkenden Beschleunigung.

Abhängig von dem zur Anwendung gelangten Baustoff können bei irgendeiner Größe der auftretenden Beschleunigung die Grenzwerte der Festigkeit der Struktur erreicht und überschritten werden.

Deswegen ist bei einer üblichen starr mit der Basis verbundenen Gebäudestruktur keine wirkliche Erdbebensicherheit erreichbar.

Bei irgendeiner Erdbebenstärke und der damit verbundenen Beschleunigung wird jede Gebäudestruktur, die über Fundamente fest mit der Basis verbunden ist oder nur geringe Verschiebbarkeit gegenüber der Basis zuläßt, versagen müssen.

Auch die Vorstellung, daß durch Reibung bzw. Dämpfung ein schädlicher Einfluß aus der Erdbebenbewegung gemindert werden kann, erscheint bei stärksten Beben aussichtslos.

Von der Energie, die durch die Erdbebenbewegung in das Gebäude transferiert wird, kann der Anteil, welcher der Zerstörungsarbeit durch Wegführen, oder richtiger ausgedrückt, durch Umwandlung in Wärme z. B. durch Dämpfung entzogen werden könnte, nur bei einem relativ geringen Prozentsatz bleiben. Bei starken Beben kann eine angewendete Dämpfungsreibung die zerstörerische Wirkung eines Erdbebens nicht verhindern.

Moderne Lösungen, wie elastische Stahlrahmen-Konstruktionen, die einen kostspieligen Schaden beim Northridge-Erdbeben erlitten, und Basis-Isolations-Systeme, sollen einen gewissen Prozentsatz der Energie absorbieren oder wegleiten, die die Erdbewegungen auf die Struktur eines Gebäudes übertragen. Jüngste Studien des U.S. Geological Survey und des California Instituts of Technology (CalTech) drücken die Befürchtung aus, daß auch diese Art von Gebäuden möglicherweise beschädigt werden oder sogar zusammenbrechen könnten im Falle eines wirklich starken Erdbebens, wenn sie nahe genug zum Epizentrum liegen.

3.3 Fundament-Isolation der Gebäudestruktur

Das Bemühen, die Erdbebensicherheit für Gebäude zu erhöhen, hat zu einer großen Zahl von neuen Lösungen geführt, die ihren Niederschlag finden in den Patent-Veröffentlichungen.

Unter den technischen Lösungen zur Sicherung von Gebäuden gegen Erdbebenschäden sind Einrichtungen bekannt, die zusätzlich zur üblichen Strukturauslegung und Bemessung nach Regelwerken zur Anwendung kommen, die das Gebäude vom Fundament trennen und

Eine Gruppe von technischen Lösungen, die zu Fundament- oder Basis-Isolations-Systemen gehören, ermöglichen dem Baukörper gegenüber der Basis eine Beweglichkeit in gewissen Grenzen. Alle Lösungen übertragen durch Reibung und Dämpfungskräfte in das getragene Gebäude Schubkräfte, die bei hohen Frequenzen und großen Schwingweiten auch kritisch werden können. Einige dieser Lösungen übertragen keine negativen Vertikalkräfte und sind damit nicht für schlanke Hochbauten und Türme geeignet.

Bei einer Art der Fundament-isolation wird der Baukörper auf horizontal elastischen Blöcken gelagert, die aus horizontal geschichteten Lamellen aus wechselweise Stahl und Kautschuk bestehen. ( US-Patents 4,527,365 ; 4,599,834 ; 4,593,502 ) Diese Blöcke haben vertikal eine hohe Lastaufnahmefähigkeit und ermöglichen horizontal eine Verschiebbarkeit der oberen gegenüber der unteren Platte des Isolationsblocks, haben aber horizontal einen sehr begrenzten Hub der Beweglichkeit. Mit zunehmender Verschiebung aus der Mittellage nimmt die Steilheit der Federkennung zu, es erfolgt eine Versteifung der Blöcke mit Wirkung auf die Gebäudestruktur durch Anstieg der Schubkraft, die von der Basis auf den Baukörper übertragen wird. Hierdurch können in Extremfällen auch durch die Versteifung der Gummiblöcke Schäden an Struktur und Interieur entstehen.

Diese Blöcke haben bei starken Erdbeben den Nachteil eines horizontal zu geringen Hubs in der seitlichen Beweglichkeit, wodurch auch noch Gefährdungen des Bauwerks auftreten können. Außerdem sind diese Elastikblöcke nicht in der Lage, nennenswerte negative Vertikallasten aufzunehmen. Es besteht die Gefahr des Abreißens.

Bei Lagerung von Gebäuden auf solchen horizontal elastischen Blöcken werden die Spitzenwerte der Beschleunigungen gemindert durch Federung und Dämpfung. Die Übertragung der Bewegung des Bodens auf das Gebäude erfolgt dennoch in einem bestimmten Ausmaß. Übersteigt die horizontale Schwingamplitude des Bodens den seitlichen Federhub der horizontal elastischen Blöcke, so wird die Geschwindigkeit des Bodens in voller Größe durch die Stahl-Elastomer-Blöcke auf das gestützte Objekt übertragen und es besteht die Gefahr, daß die Blöcke zwischen den Stahllamellen abscheren.

Bei großen Schwingamplituden des Bodens können die Bewegungen des auf Elastomer-Blöcken gestützten Baukörpers erheblich sein, und die Bewegungen des Gebäudes in oberen Bereichen können durch eine Art Peitscheneffekt verstärkt werden.

Bei einer anderen Art von Fundament-Isolation wird der Baukörper auf der Basis über rollende oder gleitende Körper gestützt, die sich zwischen zwei konkaven Platten oder einer ebenen und einer konkaven Platte bewegen können, so daß dieser Stützpunkt des Gebäudes auf der oberen Platte sich bewegt wie an einem Pendel aufgehängt. ( US Patents 4,644,714 ; 4,881,350 ) Diese Vorrichtungen übertragen keine Negativkräfte und sind nicht zur Aufnahme von Kräftepaaren aus Biegemomenten am Bauwerk geeignet.

Bei der Abstützung über Rollkörper ergeben sich Probleme im Hinblick auf die damit verbundenen hohen Hertz'schen Pressungen an den Berührungsflächen. Hierdurch werden besondere Anforderungen an die Materialien und die Oberflächen der beteiligten Bauteile gestellt. Außerdem können bei dieser Art der Abstützung keine negativen Kräfte übertragen werden.

Es können auch zwischen ebenen Platten Stützkörper angeordnet sein, deren Krümmungsradius an den Berührungsflächen zu den Platten größer ist als die Höhe des Körpers. ( DPA Offenlegungsschrift 2021031 )

Hierdurch wird die obere Platte, ein Stützpunkt des Getragenen, beim pendelnden Abrollen des Stützkörpers angehoben und es entsteht auch ein Bewegungsverhalten des Stützpunktes wie an einem Pendel hängend. Die Schwingweiten solcher Lösungen sind schon bei mittleren Erdbeben unzureichend. Die Eigenschwingung dieser Lösungen liegen zu nahe bei den möglichen Erdbebenschwingungen, eine hinreichende Schwingungsentkopplung entsteht nicht, Resonanzschwingung ist möglich, Negativkräfte können nicht übertragen werden.

Bei einer weiteren Art der Fundament-Isolation werden Stützpunkte der Gebäudestruktur an Pendeln aufgehängt. ( US Patents 1,761,321 ; 1,761,322 ; 2,035,009 ; 4,328,648 ) Der Ausführung großer Pendellängen sind praktische Grenzen gesetzt. Die Schwingungsentkopplung von der schwingenden Basis ist unzureichend.

Durch die Pendelgeometrie ist das Bewegungsverhalten des Systems festgelegt. Die Abmessung der Pendel bestimmt die Periodendauer der Eigenschwingung. Der Grad der Verschiedenheit der Eigenschwingung von der Schwingung des Bodens bestimmt das Bewegungsverhalten der an Pendeln aufgehängten Masse des Baukörpers.

Wird ein Gegenstand oder ein Baukörper an Pendeln aufgehängt wie in den Beispielen nach FIG.2. FIG.3 oder FIG.4, so hat dieser ein eigendynamisches Bewegungsverhalten wie ein mathematisches Pendel. Die Masse des Gebäudekörpers oder des Objekts 1 wird anteilig entsprechend der Massenverteilung auf die verschiedenen Stützpunkte im unteren Gelenkpunkt 3 des Pendels 2 durch die Erdgravitation und evtl. eine zusätzliche Beschleunigung als Kraft wirksam. Die Pendel 2 werden an einem oberen Gelenkpunkt 4 von einer adäquat ausgestalteten Stützstruktur 5 getragen. Die Gelenke 3 und 4 sind entweder Kugelgelenke oder Kardangelenke und erlauben dem Pendel Schwenkbewegungen in zwei Achsen, relativ zur Last tragenden Aufhängung und relativ zum getragenen Objekt oder Gebäude. Das Bewegungsverhalten der gezeigten Beispiele läßt sich reduzieren auf das Modell des mathematischen Pendels.

Bei allen zitierten Lösungen handelt es sich um schwingungsfähige Systeme, deren Eigenschwingungen in der Nähe von Erdbeben-Anregungsschwingungen liegen. Bei maximal auftretenden Amplituden der Erdbebenschwingung ist ein Resonanzfall im Erdbeben-Frequenzbereich nicht ausschließbar, wobei zusätzliche Probleme entstehen, die Gefährdungen des Gebäudes hervorrufen können.

Macht das Gebäudesystem in der Nähe der Resonanzschwingung zur Erdbeben-Schwingung noch zusätzlich Kippbewegungen zur Hochachse des Gebäudes, so erfahren die dem Erdboden weiter entfernt liegenden Gebäudeteile eine Zunahme der Beschleunigung und der daraus resultierenden Belastungskräfte.

Mit hochelastischen Isolatoren zwischen dem Gebäudeoberteil und seinem Fundament und einer damit verbundenen horizontal weichen Lagerung des Baukörpers lassen sich bei stärksten Erschütterungen mit dieser Anordnung dennoch keine vollkommen zufriedenstellenden Ergebnisse erzielen, wenn die Frequenzentkoppelung nicht weitreichend

Die mögliche Nähe der Resonanzschwingung zu möglicher Schwingung des Erdbeben-Antwortspektrums lassen große Amplitudenverstärkungen in oberen Gebäudeteilen aufkommen.

Hierdurch ist es möglich, daß die von solchen Vorrichtungen getragenen Baukörper mit der entsprechenden Frequenz in verstärktes Schwingen geraten.

Bei solchen Vorgängen sind auch noch Gebäudeschäden möglich, und die Gefahr bleibt bestehen, daß bewegliche Einrichtungsgegenstände innerhalb des Gebäudes hin und her geschleudert werden und damit auch Schäden und Gefährdungen von Personen herbeiführen können.

3.4 Abgrenzung der neuen Lösung zum Stand der Technik

Bei besonders starken Erdbeben, mitunter BigShake oder MegaShake genannt, wird der Schutz der bekannten Schutzsysteme und aller anderen konventionellen Design-Methoden entsprechend den Bauvorschriften nicht ausreichend sein und sie werden versagen. Zerstörungen und die Anzahl von Todesopfern können katastrophale Ausmaße annehmen. Es hat Beben mit mehreren Hunderttausend Toten gegeben.

Bekannte Lösungen der Basisisolation ermöglichen der Gebäudestruktur gegenüber der Basis eine Verschiebbarkeit in engen Grenzen. Mit größer werdenden Schwingamplituden nimmt bei bekannten Schutzsystemen der Grad der Impuls-Reduktion ab. Bei Extrembeben besteht die Möglichkeit des Versagens.

Abgrenzend von bekannten Erdbebenschutz-Systemen ist die erfindungsgemäße Lösung weder eine Roll-, Gleit- oder Elastomer-Vorrichtung, die Energie absorbiert oder wegleitet, es ist ein Impuls nicht weiterleitendes System, das freie Bewegung gegenüber der Basis in jeder Richtung zuläßt, es erfolgt keine Energieabsorbtion oder -verteilung. Die erfindungsgemäße Lösung bewirkt, daß keine Übertragung der Bodenbewegung und kein Energietransfer auf das Gebäude erfolgt.

Die Erfindung zeichnet sich dadurch aus, daß horizontale Erdbebenschwingungen der Basis nicht auf das Bauwerk übertragen werden, das Objekt der oszillierenden Erdbebenbewegung der Basis nicht mehr folgen kann und das Gebäude in Ruhelage bleibt. Erdbebenschäden werden effektiv verhütet.

Die Erdbebenfrequenz und die Eigenfrequenz der von virtuellen Pendeln getragenen Struktur sind so weit entkoppelt, daß die Bewegung des Bodens nicht auf die gestützte Struktur übertragen werden kann. Das Prinzip ist ohne Änderung des Verhaltens voll wirksam bei jeder Erdbeben-Schwingfrequenz. Aus der in Ruhelage verbleibenden getragenen Masse wirken keine Reaktionskräfte aus Beschleunigungen auf die Gebäudestruktur zurück. Es entstehen keine Beschädigungen an dem Gebäude oder dem Interieur, selbst bei dem denkbar stärksten Erdbeben.

Dagegen übertragen elastomere Lager und reibungsbehaftete Gleitlager doch noch nicht geringe Schubkräfte in die Gebäudestruktur, was im Extremfall auch kritisch werden kann. Auch wenn im Einzelfall die Struktur noch standhält, so können die Beschädigungen im Inneren des Gebäudes beträchtlich sein.

Während Basis-Isofations-Lager mit Wälzkörpern, Elastomer-Blöcken oder Gleitfüßen keine vertikale Zuglasten aufnehmen können, sind Erdbebenschutz-Module auf der Basis virtueller Pendel geeignet, negative Vertikallasten zu übertragen.

Das erfindungsgemäße Erdbebenschutz-System ist ein perfektes Basis-Isolations-System, eine kompakte, passiv wirkende, lasttragende Vorrichtung, die im Untergeschoß oder Erdgeschoß eines Gebäudes eingebaut wird und das freie Bewegung gegenüber der Basis in jeder Richtung zuläßt, wobei dennoch Windkräfte abgestützt bleiben.

Das perfekte Verhalten der Erdbebenschutz-Module wird nicht beeinflußt von der Impulsgröße, der Magnitude des Erdbebens, der Basisbeschleunigung, der Schwingweite und der Frequenz der Erdbeben-Schwingung, ob harmonisch oder disharmonisch. Das Ergebnis ist immer dasselbe; das Gebäude steht still, es bewegt sich nicht. Alle Ansprüche werden mathematisch gestützt.

Das erfindungsgemäße Erdbebenschutz-Modul ist keine Vorrichtung, die Energie aufnimmt, oder weiterleitet, sondern eine Vorrichtung, die keinen horizontalen Impuls überträgt und Verschiebungen gegenüber der Basis frei zuläßt. Es ist möglich, die Schwingungen des gestützten Objekts, die ein Erdbeben verursacht, auf nahezu Null (weniger als 0,01 g) zu reduzieren, unabhängig von der Stärke des Erdbebens und unabhängig von den Frequenzen und Amplituden der Erdbewegung. Folglich wird keine Energie aus der Erdbewegung auf das Gebäude übertragen. Die Scherungskräfte, die auf das Gebäude einwirken, werden reduziert auf belanglose Werte.

Selbst stärkste Erdbeben würden keine Schäden an der Struktur, der Fassade oder im Inneren des Gebäudes verursachen. Eine Person im Gebäude würde möglicherweise noch nicht einmal bemerken, daß sich ein Erdbeben ereignet hat.

Die Schutzfunktion für das Gebäude ist so weitgehend, daß unabhängig von der Stärke eines Erdbebens keine Kräfte mit zerstörerischer Wirkung auf das Gebäude übertragen werden können. Mit der neuen Methode ist es möglich, ein Verhalten des so gestützten Objekts zu erzielen, daß es nahezu in Ruhelage verbleibt, auch wenn der Boden mit großen Amplituden und hohen Beschleunigungen sich bewegt.

Elastomer-Lager und Reibungs-Gleitlager haben keine Aufnahmefähigkeit für vertikale Zuglasten. Wenn ein Erdbeben hohe vertikale Beschleunigungen hervorruft, können Beschädigungen der Lager oder der Struktur entstehen oder gar ein Abheben von der Lagerstelle mit schwerwiegenden Folgen bewirken. Diese Probleme stehen der Anwendung solcher Basis-Isolatoren bei schlanken Hochhäusern entgegen, die Kippmomente bei starkem Wind oder bei Erdbeben durch hohe Beschleunigungen der Basis bei großen Bewegungsamplituden erfahren können.

Erdbebenschutz-Module in Form virtueller Pendel lösen dieses Problem von Abhebekräften durch formschlüssige Verbindung des Gebäudes mit dem Fundament selbst bei größten Schwingweiten der Basis.

Mit dieser neuen Technologie ist es nun auch möglich, die höchsten Hochhäuser vollständig von Erdbebenbewegungen zu isolieren.

Ein solcherart geschütztes schlankes Hochhaus erfährt keinen Peitscheneffekt durch Erdbeben, keine Fenster bersten, im Innern fliegen keine Einrichtungsgegenstände umher.

Aufgrund seines Design-Prinzips ist ein Hochhaus mit dieser Technologie ebenso stabil und robust wie ein konventionell konstruiertes Stahl-Skelett-Bauwerk mit dem zusätzlichen Vorzug, daß es die Bodenbewegungen nicht mitmacht und somit keine Verformungen mit Ausbaubeschädigungen erfährt und somit perfekte Erdbebensicherheit erhält.

Mit dem erfindungsgemäßen Verfahren, Gebäude und Objekte auf Stützvorrichtungen zu lagern, die für den Laststützpunkt eine Bewegungsmöglichkeit herstellen wie das untere Ende eines Pendels mit langer Periodendauer und somit ein virtuelles Pendel darstellt, wird seismische Sicherheit auf ein Niveau von Perfektion gebracht.

Maximale Bewegungsauslenkungen bei bekannten Isolatoren sind bei starken Erdbeben nicht ausreichend. Werden diese Werte überschritten, kann das Gebäude beschädigt oder zerstört werden.

Selbst nahe dem Epicenter starker Beben, wo große Schwingweiten des Bodens vorkommen können, die alle bisher existierenden Schutzsysteme überfordern können, bietet das erfindungsgemäße System Sicherheit, weil es für größte Schwingamplituden ausgelegt werden kann.

Das System der vorliegenden Erfindung erfüllt eine hohe Schutzfunktion, indem die von der Basis auf das Gebäude übertragbare horizontale Beschleunigung auf bedeutungslose Werte von weniger als 0,01 g begrenzt wird.

Mit diesem Leistungsvermögen und der Systemcharakteristik bietet die hier dargestellte Erdbebenschutz-Technologie im Vergleich zur bereits vorhandenen Technik einzigartige vorteilhafte Eigenschaften.

Es ist kein weiteres Verfahren bekannt, welches vergleichbares Verhalten bewirkt.

Mit diesem neuen revolutionierenden Prinzip ist der Durchbruch zur Lösung des weltweiten Problems gelungen, der Bedrohung durch Erdbeben erfolgreich zu begegnen.

4 Übersicht der Erfindung

Die Erfindung stellt ein Basis-Isolations-System dar und ist eine kompakte, passiv wirkende, lasttragende Vorrichtung, die im Fundament oder Erdgeschoß eines Gebäudes eingebaut wird. Das System verhindert die Übertragung von Schwingungen und Stößen des Erdbodens auf das gestützte Objekt.

Das geschützte Gebäude wird durch die neuartige Tragkonstruktion vollständig von der horizontalen Bewegung des Bodens isoliert, die Eigenschwingung des Objekts von der schwingenden Basis dissonant entkoppelt.

Erdbebenschäden werden effektiv verhütet. Das Prinzip des virtuellen Pendels ist wirksam bei jeder Erdbeben-Schwingfrequenz und jeder Erdbeben-Basisbeschleunigung und kann für jede erforderliche Schwingamplitude ausgelegt werden.

Die nach dem Verfahren des virtuellen Pendels gestaltete Tragvorrichtung kann für jede erforderliche Schwingamplitude und für alle in Frage kommenden Vertikallasten ausgelegt und wartungsfrei gestaltet werden. Die Vorrichtung ist geeignet für die Erdbebensicherung von Objekten jeglicher Art, um sie von den Bodenschwingungen abzukoppeln, und läßt sich einsetzen, um bestehende Objekte durch Nachrüstung erdbebensicher zu machen.

Diese neu definierte Aufgabe wird durch ein Verfahren gemäß dem Anspruch 1 und eine Vorrichtung gemäß dem Anspruch 2 gelöst. Dabei ist der Baukörper oder das zu schützende Objekt auf Tragkonstruktionen, die hier Erdbebenschutz-Module genannt werden, gelagert, die mit dem Boden über ein durchgehendes gemeinsames Fundament oder auch über jeweils einzelne Fundamentgründungen für das einzelne Erdbebenschutz-Modul fest mit dem Boden verbunden sind. Diese Erdbebenschutz-Module tragen den Baukörper an mehreren Punkten und ermöglichen ihm an den Stützpunkten auf den Erdbebenschutz-Modulen ein räumliches Bewegungsverhalten in allen Richtungen mit großer Schwingamplitude mit geringer Rückstellkraft, die nur minimale Beschleunigungen begründet.

Bevorzugte Weiterbildungen sind durch die abhängigen Ansprüche eingeführt.

Die Erfindung stellt ein erdbebenunempfindliches Tragsystem dar zur Lagerung und Stützung von Strukturen aller Art wie Gebäude, Brücken, Türme, Industrie- und Nuklear-Anlagen oder sonstiger Objekte, das zwischen Fundament und getragener Struktur angeordnet ist und verhindert, daß diese den wechselnden horizontalen Erdbebenbewegungen und Beschleunigungen und den daraus hervorgerufenen Kräften aus der Dynamik der schwingenden Bewegung ausgesetzt wird, um sie so vor den zerstörerischen Einwirkungen durch Erdbeben zu schützen.

Für die Dämpfung oder Tilgung vertikaler Erdbebenschwingungen kommen im Bedarfsfall mechanische, hydropneumatische oder viskoelastische Federungssysteme mit sehr flacher Federkennung in Kombination mit der Lagerung durch virtuelle Pendel zur Anwendung.

4.1 Aufgabenstellung und Zielsetzung

Der vorliegenden Erfindung liegt die Aufgabe zugrunde, ein Verfahren und eine Vorrichtung zur Erdbebensicherung bereitzustellen, um ein Gebäude oder Objekt so weitgehend von der Bewegung des Bodens zu isolieren, daß unabhängig von der Stärke eines Erdbebens keine Kräfte mit zerstörerischer Wirkung auf das Gebäude übertragen werden können.

Es muß Resonanzfreiheit des Gebäudes bei Bodenschwingungen erreicht werden und die Eigenfrequenz des Objekts in seiner Lagerung muß von der Schwingfrequenz des Bodens so unterschiedlich sein, daß beide Schwingsysteme voneinander entkoppelt und die horizontalen Beschleunigungs- und Stoßkräfte aus der Bewegung des Bodens nicht mehr auf den Gebäudekörper übertragen werden.

Sind die Frequenzen der Erdbebenschwingung und die des Eigenschwingverhaltens der Tragkonstruktion mit der getragenen Struktur verschieden um den Faktor 20 und höher, so ist nicht mehr zu erwarten, daß die wesentlich höherfrequente Anregung durch den Boden ein Schwingen des Getragenen herbeiführt. Im übrigen wäre ein Schwingen der getragenen Struktur mit einer Periodendauer von 20 Sek. und länger nicht mehr bedeutsam in Hinblick auf eine Gefährdung der Struktur. Ein solch träges Verhalten und die hiermit verbundenen geringen Beschleunigungen sind kaum noch physisch wahrnehmbar.

4.2 Deduktion zur Lösung der sich stellenden Aufgabe

Vorab dienen die folgenden grundsätzlichen Betrachtungen zur Herleitung der angestrebten Lösung des Problems.

Ausgangspunkt der Überlegung ist die Aufhängung einer Masse an Pendeln.

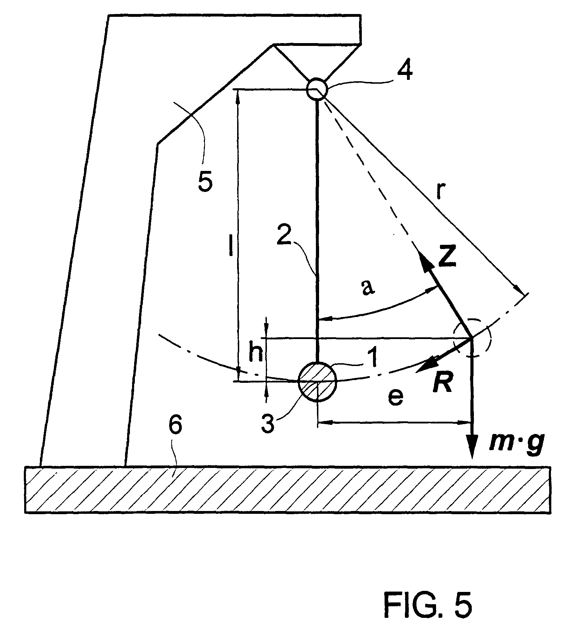

**FIG.5** Die Masse 1 wirkt wie eine Punktmasse am unteren Ende des Pendels. Wird die am unteren Ende des Pendels angreifende Masse **1** um einen Betrag **e** aus ihrer statischen Ruhelage verschoben, so erfährt sie gleichzeitig eine Anhebung um den Betrag h, weil das Pendel **2** mit der Länge **l** mit dem unteren Pendelende **3** einen Kreis um den oberen Aufhängepunkt **4** mit dem Radius **r = l** beschreibt. Da die Bewegungen in jeder Richtung zweiachsig erfolgen können, beschreibt das untere Pendelende, der Aufhängepunkt der Masse eine von oben gesehen konkave sphärische Fläche.

Die Anhebung der Masse **1** um den Betrag h führt dazu, daß die Masse eine höhere potentielle Energie erhält. Bei Verschwinden der Krafteinwirkung, die zur Auslenkung der Masse **1** um den Betrag e und zur Anhebung der Masse um den Betrag h geführt hat, bewirken die Zugkraft im Pendel **Z** und die Kraft aus der Erdgravitation und der Masse (m • g) eine resultierende Rückstellkraft **R**, welche die Masse am Pendelende **3** in die mittlere Ruhelage zurückführt. Hierbei überschwingt die Masse **1** die Ruhelage, und durch Reibungsdämpfung kommt das Schwingen zum Stillstand.

Die gleichen Relationen treten auf, wenn nicht die Masse aus ihrer Ruhelage bewegt wird, sondern auch, wenn der obere Aufhängepunkt **4** des Pendels **2** über die Tragstruktur **5** durch seitliches Bewegen der Basis **6** verschoben wird. Hierdurch erfährt das Pendel zunächst eine Schrägstellung durch Zurückbleiben der aufgehängten Masse aufgrund der Trägheit, und die Masse wird hierbei angehoben. Die dann einsetzende Bewegung der Masse erfolgt nach dem Schwingverhalten des Pendels.

Hierbei ist die Kreisfrequenz der Schwingung

$$\omega = \sqrt{\frac{g}{l}} \qquad (1)$$

*g* Gravitationsbeschleunigung
*l* Länge des Pendels

Das Schwingverhalten des Pendels ist also ausschließlich durch die Pendellänge bestimmt.

Die Pendelfrequenz ist

$$f = \frac{\omega}{2\pi} = \frac{\sqrt{\dfrac{g}{l}}}{2\pi} \qquad (2)$$

Die Schwingungszeit beträgt

$$T = \frac{1}{f} = \frac{2\pi}{\omega} = \frac{2\pi}{\sqrt{\dfrac{g}{l}}} \qquad (3)$$

Eine große Pendellänge bedeutet also eine geringe Pendel-Schwingfrequenz und eine lange Periodendauer einer Schwingung.

Sind die Schwingfrequenz des Pendels und die Schwingfrequenz der Basis sehr verschieden, so werden die Bewegungen voneinander weitgehend entkoppelt.

Wird z. B. der obere Aufhängepunkt des Pendels durch eine horizontale Schwingung der Basis im Falle eines Erdbebens mit einer Frequenz üblicherweise zwischen 0,5 Hz und 2 Hz bewegt und hat das Pendel bei einer großen Länge eine sehr niedrige Eigenfrequenz gegenüber der Erregungsfrequenz, so vermag die Masse des Objekts der Bewegung der Basis nicht mehr zu folgen, sie verbleibt nahezu auf der Stelle. Wenn die Masse sich mit sehr geringer Geschwindigkeit bei einer langen Periodendauer der eigenen Schwingung in Bewegung setzt, erfolgt bereits mit wesentlich höherer Frequenz eine Deplacierung des Aufhängepunkts des Pendels in der entgegengesetzten Richtung bevor sich der Massepunkt wesentlich von seiner ursprünglichen Lage entfernt hat. Diese Umkehrung vollzieht sich bei anhaltender Schwingung im ständigen Wechsel, so daß die Masse nahezu auf derselben Stelle verbleibt.

Um die gewünschte Entkopplung zu erreichen, werden große Pendellängen erforderlich.

Der Realisierung besonders großer Pendellängen stehen jedoch praktische Gesichtspunkte entgegen.

Das bis hier betrachtete Pendel, welches an seinem oberen Ende gelenkig aufgehängt ist, stellt ein stabiles Tragelement dar, da es eine stabile Lage oder Ruhelage mit tiefster Schwerpunktlage der getragenen Masse selbsttätig durch die Gravitations-Beschleunigung anstrebt.

Die Realisierung eines sogenannten virtuellen Pendels, das eine geringe Bauhöhe ermöglicht, aber die Wirksamkeit eines Pendels großer Pendellänge und damit eine lange Periodendauer einer Schwingung hat, basiert auf dem Prinzip, daß die Wirkung von stabilen, die Masse anhebenden und labilen, die Masse absenkenden Tragelementen in einer Weise gekoppelt wird, daß der anhebende, stabilisierende Einfluß geringfügig aber hinreichend überwiegt.

Bei einem stabilen Tragelement strebt eine getragene Masse im Bereich seiner Bewegungsfreiheit unter dem Einfluß einer Gravitations-Beschleunigung die Lage geringster potentieller Energie an.

Ist eine Masse durch eine Bahn oder Fesselung z. B. durch ein Pendel so in der Bewegungsmöglichkeit geführt, daß eine Deplacierung aus der Ruhelage ihre potentielle Energie erhöht, so kehrt sie unter dem Einfluß der Gravitations-Beschleunigung in ihre ursprüngliche Ruhelage zurück.

Die Lage der Masse ist stabil.

Wird bei Deplacierung der Masse aus der Ausgangslage durch die vorgegebene Bewegungsbahn die potentielle Energie verringert, so strebt die Masse unter Einfluß der Gravitations-Beschleunigung einer weiteren Verringerung der potentiellen Energie zu.

Die Lage der Masse ist instabil.

Mit der Koppelung und Überlagerung beider Einflüsse, der stabilen und der labilen Masseverlagerung wird durch geeignete Wahl der geometrischen Größen der Koppelglieder erreicht, daß die resultierende Bewegung der Masse zu einer geringen Anhebung und nur geringfügigen Erhöhung der potentiellen Energie führt, woraus eine langsame Rückführung in die Ruhelage und somit eine lange Periodendauer der Eigenschwingung resultiert.

Dies ist die Wirkung eines langen Pendels.

Wenn erfindungsgemäß physikalisch kein langes Pendel vorhanden ist, jedoch die Wirksamkeit eines langen Pendels mit langer Periodendauer erreicht wird, so ist hier die Rede von einem virtuellen Pendel langer Periodendauer.

Das sogenannte virtuelle Pendel hat bei geringer Bauhöhe jedoch die Wirksamkeit eines langen Pendels mit langer Periodendauer der Eigenschwingung.

Wenn nun bei einer konstruktiv verfügbaren Raumhöhe und einer davon abhängigen Länge **l** des Pendels **2** die Anhebung **h** zu groß wird, so muß die Anhebung durch additive Überlagerung eines negativen Wertes also einer Absenkung eine resultierende geringe Anhebung erreicht werden, die dem Zielergebnis entspricht. Dies ist möglich, wenn man ein stabiles, hängendes Pendel und instabiles stehendes Pendel in geeigneter Weise miteinander koppelt und bei einer horizontalen Auslenkung der gekoppelten Stützglieder deren jeweiligen vertikalen Hübe, der einmal positiv und einmal negativ ist, addiert.

Da der Hubverlauf beider Stützglieder über der horizontalen Auslenkung harmonisch verläuft, weil sie unmittelbar von einer Kreisfunktion abhängen, so ist die Differenz beider Vertikalhübe ebenfalls über der horizontalen Auslenkung im Verlauf harmonisch, was der Anwendung des Prinzips für die Zielsetzung entgegenkommt.

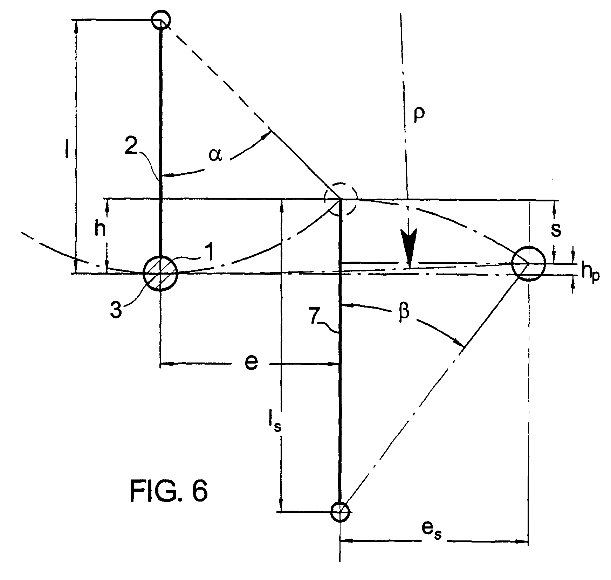

**FIG.6** veranschaulicht diesen Zusammenhang. Der Massepunkt **3** des stabilen Pendels **2** mit der Länge **l** erfährt bei der horizontalen Auslenkung **e** die Anhebung **h**.

$$h = l\left(1 - arctg\,\frac{e}{l}\right) \tag{4}$$

Das obere Ende des stehenden instabilen Pendels **7** mit der Länge $\mathbf{l_s}$ wird über der horizontalen Auslenkung $\mathbf{e_s}$ und den Betrag **S** vertikal abgesenkt.

$$s = l_s\left(1 - arctg\,\frac{e}{l_s}\right) \tag{5}$$

Werden die Vertikalbewegungen beider Stützglieder addiert, erfolgt eine resultierende Anhebung mit dem Betrag $\mathbf{h_{res}}$.

Die Relationen von $\alpha$: $\beta$ und e : $e_s$ werden beeinflußt von der Art der benutzten Koppelung und der frei wählbaren Relation von l:$\mathbf{l_s}$.

In der unmittelbaren Addition der Vertikalhübe der stabilen und labilen Stützpendel werden die Zusammenhänge im Ergebnis, wie in FIG.6 dargestellt, erreicht.

Die Koppelung der stabilen und labilen Stützpendel kann in unterschiedlichster Art geschehen. Es können durch Hebeleinflüsse zu den Anhebungen und Absenkungen proportional übersetzte Beträge an den Stützelementen oder an den Koppelgliedern benutzt werden, um geeignete Laststützpunkte zu definieren, die durch die Koppelung unter dem gemeinsamen Einfluß der proportionalen Anhebung und Absenkung beider Arten von Stützpendeln die gewünschte Anhebung erfahren.

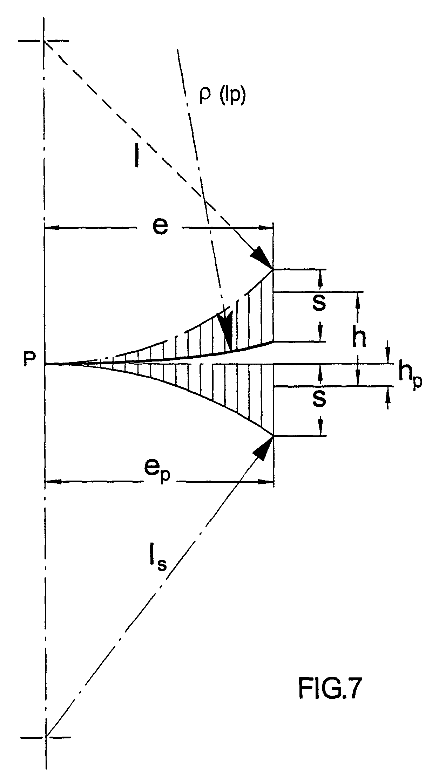

**FIG.7** Die horizontale Auslenkung $\mathbf{e_p}$ des gewählten Laststützpunktes des unteren Endes des virtuellen Pendels ist eine Funktion oder in erster Näherung proportional zu der Auslenkung e am hängenden stabilen physischen Pendel.

Ebenso sind die Anhebung und die überlagerte Absenkung des Laststützpunktes, des unteren Endpunkts des virtuellen Pendels Funktions- oder Proportionalwerte der Anhebung oder der Absenkung der Massewirkpunkte an den hängenden stabilen und den stehenden labilen physischen Pendeln.

Die Anhebung $\mathrm{h_p}$ des Massewirkpunktes **P** am virtuellen Pendel in Funktion über der Auslenkung aus der Mittellage entspricht in erster Näherung einer Kreisbahn und zweiachsig pendelnd beschreibt der Punkt **P** eine Ortsfläche in Form einer von oben gesehen konkaven Sphäre.

Der Krümmungsradius $\rho$ ist die Länge $\mathrm{l_p}$ des virtuellen Pendels.

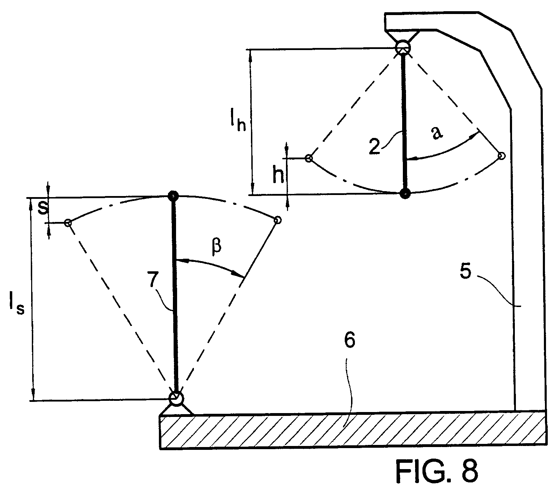

**FIG.8** Das Stützelement **2** stellt ein stabiles, hängendes Pendel mit der Länge $\mathrm{l_h}$ dar und Stützelement **7** ein labiles, stehendes Pendel mit der Länge $\mathrm{l_s}$.

Beim hängenden Pendel, Stützelement **2** wird das frei bewegliche Ende des Pendels beim Pendeln um den Winkel $\alpha$ angehoben um den Betrag **h**. Beim stehenden Pendel, Stützelement **7** wird bei einer Pendelbewegung um den Winkel $\beta$ das frei bewegliche Ende des Pendels abgesenkt um den Betrag **s**. Beim hängenden Pendel, Stützelement **2** beschreibt das freie Ende eine von oben gesehen konkave sphärische Fläche. Beim stehenden Pendel, Stützelement **7** beschreibt das freie Ende eine von oben gesehen konvexe sphärische Fläche.

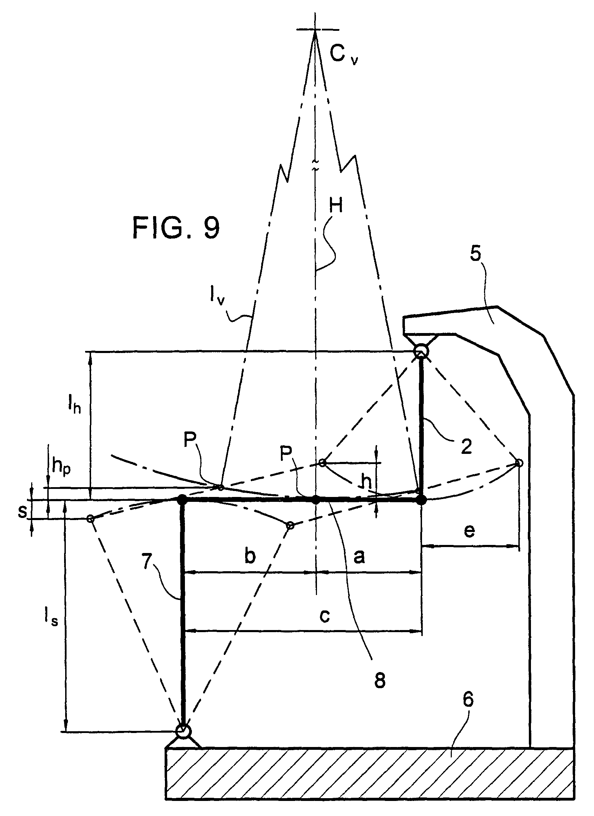

**FIG.9** Erfindungsgemäß werden nun das hängende Pendel, Stützelement **2** und das stehende Pendel, Stützelement **7** mittels eines Koppelelements **8** gekoppelt. Beim gekoppelten Pendeln beider Pendel wird der Teil des Koppelelements **8,** der nah am stehenden Pendel, Stützelement **7** ist, abgesenkt. Der Teil des Koppelelements **8,** der näher am hängenden Pendel, Stützelement **2** ist, wird während des Pendelns angehoben.

Auf irgendeinem Teil des Koppelelements **8** mit der Länge **c** wird an einem Punkt **P** des Koppelelements **8** im Teilungsverhältnis von a zu b der Lagerpunkt **P** des getragenen Objekts während des Pendelns beider gekoppelter Stützelemente in beiden Bewegungsrichtungen im Bereich der zugrunde gelegten Horizontalamplitude um geringe Strecken angehoben.

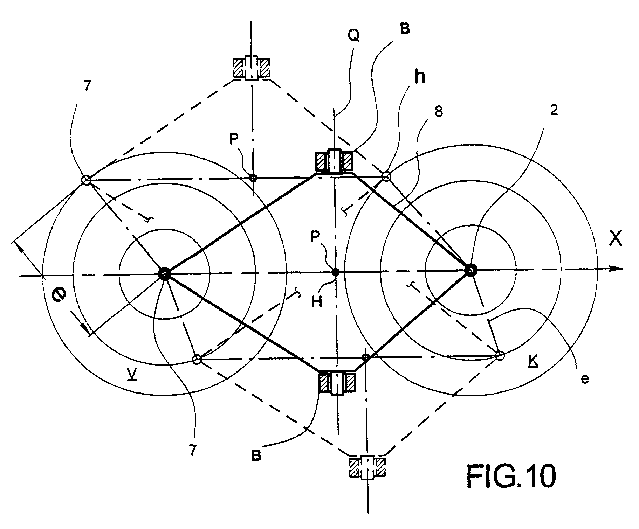

Dies wird beeinflußt von der Wahl der Größen und der Verhältnisse zueinander von $l_s$, $l_n$, c und dem Verhältnis a zu b. Eine geringere Länge $l_h$ des hängenden Pendels, Stützelement **2** führt bei gleichem Pendelausschlag **e** zu einer größeren Anhebung **h** des Pendelendes. Eine Vergrößerung der Länge $l_s$ des stehenden Pendels, Stützelement **7** führt bei gleicher Auslenkung **e** zu einer Verringerung der Absenkung **s.** Die Wahl der Lage des Punktes **P** auf dem Koppelelement **8** mit der Länge **c** im Teilungsverhältnis a zu b erfolgt so, daß die Anhebung des Punktes **P** bei der Auslenkung **e** des hängenden Pendels, Stützelement **2** in jedem Fall positiv wird aber minimal bleibt. Wird das Koppelelement **8** durch entsprechende Lagerung daran gehindert, sich um die Hochachse **H** zu drehen, so gelten die bis jetzt gemachten Betrachtungen gleichermaßen auch, wenn das Pendeln der Stützelemente **2** und **7** sich in einer anderen Richtung ereignet, wie FIG.10, welche die Situation in der Draufsicht zeigt, veranschaulicht.

F1G.10 Das Koppelelement **8** ist in fest mit der getragenen Masse verbundenen Lagern **B** drehbar um die Achse **Q** gelagert und dadurch an einer Drehung um die Hochachse **H** gehindert. Das freie Ende des hängenden Pendels, Stützelement 2 beschreibt eine von oben gesehen konkave sphärische Fläche **K.** Das stehende Pendel, Stützelement **7** beschreibt in der Draufsicht eine von oben gesehen konvexe Sphäre **V.** Bei Auslenkung des freien Endes des hängenden Pendels, Stützelement **2** um einen Betrag **e** in jedwelcher Richtung wird der Punkt **P** des Koppelelements **8** und somit die Achse **Q** in gleicher Weise angehoben wie bei einer Auslenkung in Richtung der X-Achse.

Der Gelenkpunkt des Koppelelements **8** am Stützelement **7** erfährt ebenso eine Absenkung in jedwelcher Richtung der Auslenkung der Pendel, Stützelemente **2** und **7** wie in der Richtung der X-Achse. Damit erfährt der Punkt **P** auf dem Koppelelement **8** bei einer Auslenkung der gekoppelten Pendel in jedwelcher Richtung eine Anhebung.

Wie FIG.9 zeigt, bewegt sich der Punkt **P** wie der freie Endpunkt eines hängenden langen Pendels mit der Länge $l_v$, er stellt das freie Ende eines virtuellen Pendels großer Länge dar.

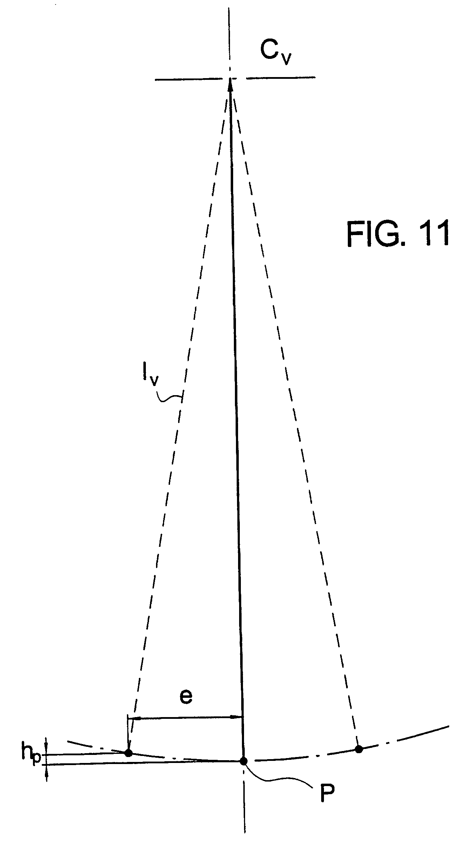

**FIG.11** Bei einer Auslenkung **e** des Koppelelements **8** in FIG.9 aus der Ruhelage um den Betrag **e** und einer Anhebung des Punktes **P** um den Wert $h_p$ wird nach FIG.11 die Länge des virtuellen Pendels

$$l_v = \frac{e^2 + h_p^2}{2h_p} \qquad (6)$$

Die Kreisfrequenz des virtuellen Pendels ist

$$\omega = \sqrt{\frac{2g \cdot h_p}{e^2 + h_p^2}} \qquad (7)$$

Die Pendelfrequenz des virtuellen Pendels ist

$$f = \frac{1}{2\pi} \sqrt{\frac{2g \cdot h_p}{e^2 + h_p^2}} \qquad (8)$$

Die Periodendauer der Schwingung des virtuellen Pendels ist

$$T = 2\pi \sqrt{\frac{e^2 + h_p^2}{2g \cdot h_p}} \qquad (9)$$

Die maximale Geschwindigkeit des Punktes **P** des freien Endes des virtuellen Pendels beträgt

$$v_{max} = \sqrt{\frac{2g \cdot h_p}{1 + \left(\frac{h_p}{e}\right)^2}} \qquad (10)$$

Die maximale Beschleunigung des freien Endes des virtuellen Pendels und damit des hierdurch gestützten Objekts beträgt

$$a_{\max} = \frac{2g \cdot h_p}{e + \dfrac{h_p{}^2}{e}} \qquad (11)$$

Die Stützelemente **2** können ebenso bei annähernd gleicher Wirksamkeit auch aus Seilstrukturen bestehen und dabei auf gelenkige Aufhängungen verzichten, sofern die Stützelemente **2** bei allen Belastungsfällen nur durch Zugkräfte belastet werden.

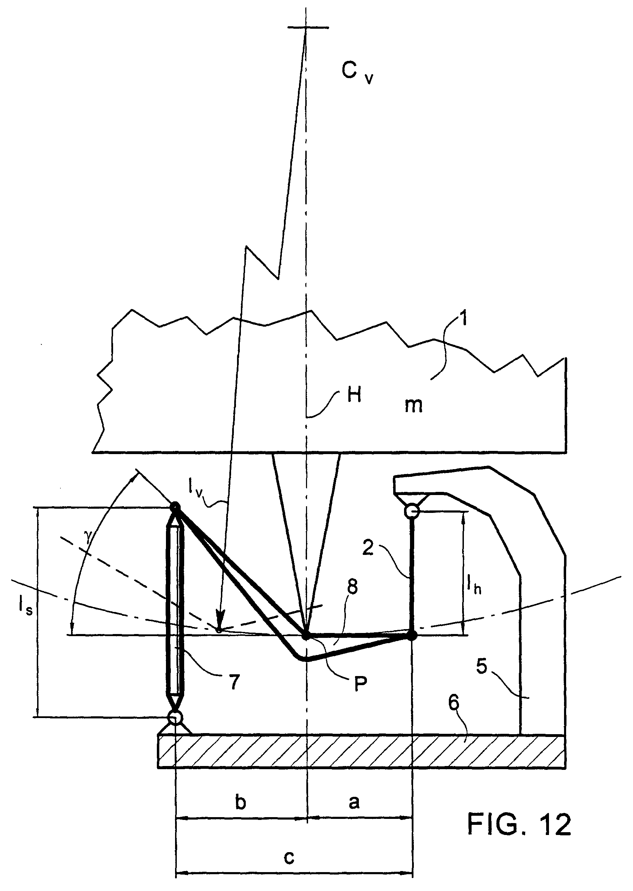

**FIG.12** zeigt eine Variante des Prinzips.

Neben der Wahl der Relationen von $l_h$ zu $l_s$, und a zu b läßt sich über einen Winkel $\gamma$ des Wirkhebels **b** des Koppelelements **8** und ebenso auch durch Einführung eines Winkels am Wirkhebel **a** des Koppelelements **8** die Charakteristik der Anhebung des Punktes **P** beeinflussen und damit die wirksame Länge des virtuellen Pendels bestimmen.

Die Auslegung der Dimensionen kann so erfolgen, daß die wirksame Länge $l_v$ des virtuellen Pendels ein Vielfaches der Bauhöhe der das Objekt stützenden Vorrichtung beträgt.

Hierdurch ist es möglich, daß die Schwingfrequenz des virtuellen Pendels und seine von ihm getragene Masse m sehr wesentlich niedriger liegt als die Schwingfrequenz der Basis 6 bei Auftreten von durch Erdbeben hervorgerufenen horizontalen Bewegungen.

Dies bedeutet eine Entkopplung der Lage des von den virtuellen Pendeln getragenen Objekts von den horizontalen Bewegungen des Bodens.

Die maximal auf den Baukörper oder das getragene Objekt einwirkenden Beschleunigungen ergeben sich aus dem Bewegungsverhalten des mathematischen Pendels gemäß Gleichung (*10*).

Durch entsprechende Auslegung und Dimensionierung ist es möglich, diese maximale horizontale Beschleunigung auf so geringe Werte zu reduzieren, daß sie vom Menschen nicht mehr physisch wahrnehmbar ist. Diese Wirksamkeit ist unabhängig davon, welche horizontalen Beschleunigungen die Basis 6 durch ein Erdbeben erfährt.

Die Magnitude eines Bebens hat keinen Einfluß auf die geradezu ruhende Lage eines durch virtuelle Pendel großer wirksamer Pendellänge und langer Periodendauer getragenen Baukörpers.

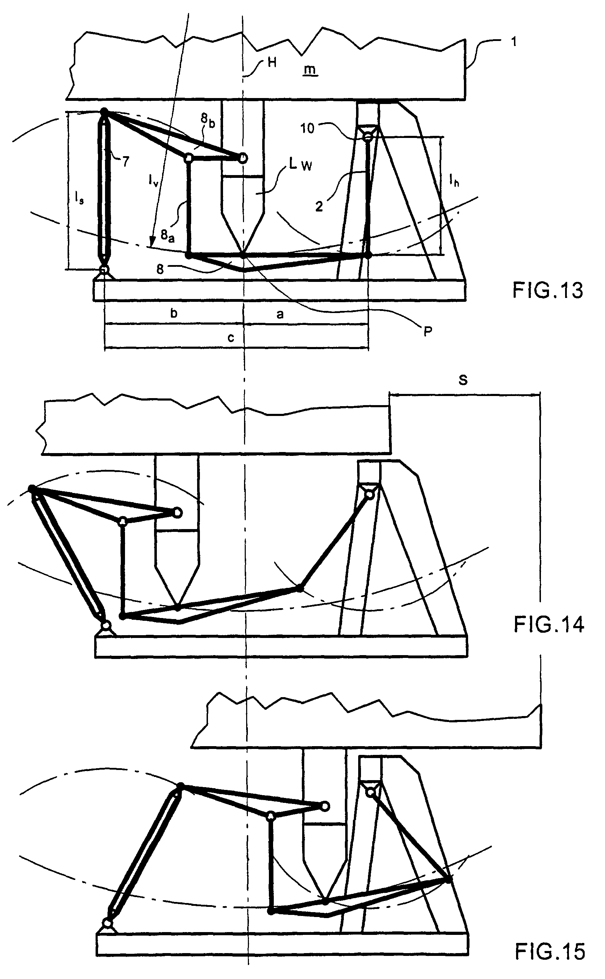

**FIG.13** entspricht im Grundprinzip der Lösung nach FIG.9 und FIG.12. Hierbei wird jedoch der Hebel mit der Wirklänge **b** von dem Hebel mit der Länge **a** getrennt und erhält eine eigene einachsige Lagerung in höherer Position an der Laststütze $L_w$, die anteilig die getragene Masse **m** stützt.

Bei dieser Lösung nehmen das hängende stabile Stützelement Pendel **2** und das stehende labile Stützelement Pendel **7** mit ihren jeweiligen Wirklängen $l_h$ und $l_s$ einen größeren Anteil von der verfügbaren Raumhöhe in Anspruch. Dadurch wird erreicht, daß bei gleich großem maximalen Winkelausschlag der zweiachsig gelenkig gelagerten Stützelemente **2** und **7** die verfügbare horizontale Schwingweite des Systems in Relation zur vertikalen Raumhöhe vergrößert wird.

Der Träger, Koppelelement **8**, wird über die Koppelstütze $8_a$, die beidseitig einachsig gelenkig gelagert ist, mit dem Träger, Koppelelement $8_b$, verbunden, das seinerseits einachsig gelenkig an der Laststütze gelagert ist und sich zweiachsig gelenkig gelagert auf dem labilen Stützelement, dem stehenden Pendel **7**, abstützt. Das Bewegungsverhalten entspricht dem Schema nach **FIG.7** und **FIG.8**.

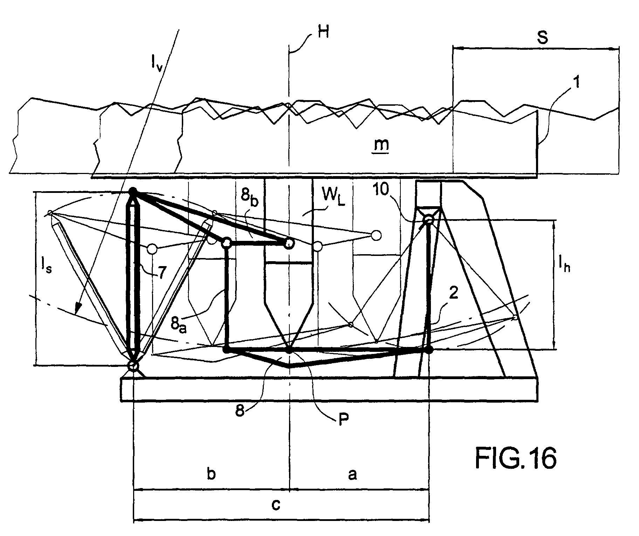

**FIG.14** und **FIG.15** zeigen in zwei Richtungen die Schwingweitenmöglichkeit der getragenen Masse gegenüber der Basis.

**FIG.16** zeigt die Schwingmöglichkeit des getragenen Objekts gegenüber der Basis in drei Bewegungsphasen mit einem Schwinghub **S.**

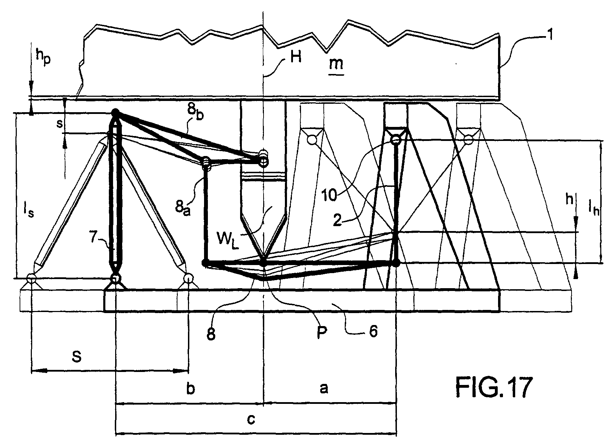

**FIG.17** stellt dar, wie bei einem Schwinghub **S** der Basis **6** und des mit der Basis verbundenen virtuellen Lagerpunkts $C_v$ des virtuellen Pendels $P_v$ das stabile Stützelement, das hängende Pendel **2,** durch die Pendelschwenkbewegung den unteren Laststützpunkt um den Betrag h anhebt und wie das labile Stützelement, das stehende Pendel **7**, den oberen Laststützpunkt um den Betrag **s** absenkt, während das getragene Objekt **O** eine Anhebung $h_p$ entsprechend der Hubbewegung des virtuellen Pendels $P_v$ erfährt.

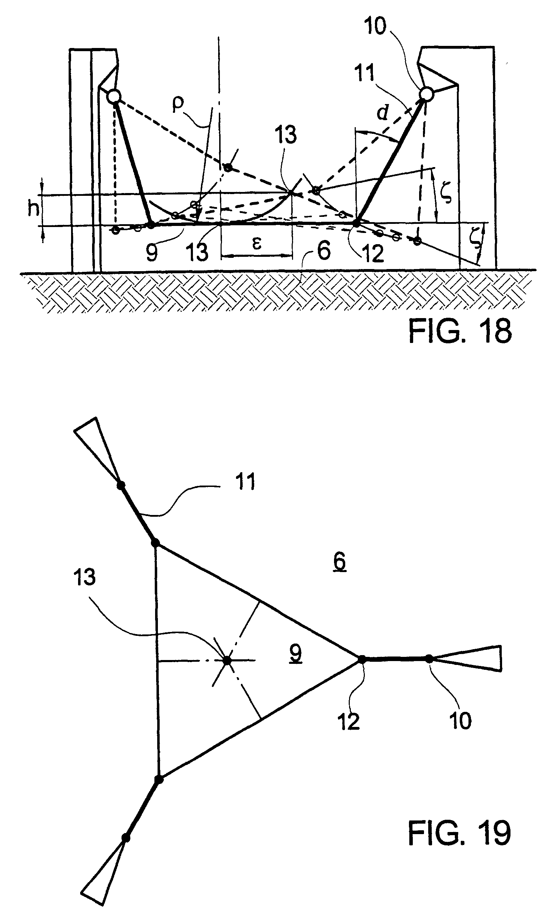

**FIG.18** Bei diesem Beispiel wird ein System mit einem Koppelelement **9** in der Form eines Dreiecks betrachtet.

**FIG.19** zeigt die Draufsicht des Systems nach FIG.18. Das dreieckige Koppelelement **9** ist an drei schräg unter einem Winkel $\delta$ angeordneten an drei Stützpunkten **10** an der Basis **6** zweiachsig gelenkig aufgehängten Stützelementen **11** zweiachsig gelenkig gelagert.

Wird an einer Seite des Koppelelements **9** ein Stützelement **11** an seinem unteren Gelenkpunkt **12** angehoben, dadurch daß sein oberer Stützpunkt **10** durch Verschiebung der Basis **6** vom Zentrum des Koppelelements **9** weg nach außen verschoben wird, und dadurch, daß das Koppelelement **9** wegen seines Beharrungsvermögens und der im Zentrum **13** auf dem Koppelelement **9** abgestützten Masse eines Objekts gegenüber der Bewegung der Basis **6** zurückbleibt, so werden über das Koppelelement **9** auf seiner gegenüberliegenden Seite die unteren Gelenkpunkte **12** der angelenkten Stützelemente **11** aufgrund der Schrägstellung in der Ausgangslage der Stützelemente **11** abgesenkt.

Da wegen der unter dem Winkel δ geneigten Ausgangslage der Stützelemente **11** die Absenkung auf einer Seite des Koppelelements **9** geringer ist als die Anhebung auf der gegenüberliegenden Seite, erfährt das Zentrum **13** des Koppelelements **9** eine Anhebung.

Das Verhältnis der Anhebung des Koppelelements **9** auf einer Seite zu der Absenkung auf seiner gegenüberliegenden Seite wird beeinflußt durch die Wahl des Winkels δ bei der mittleren Ruhelage des Koppelelements **9** und der Wahl der Relationen der geometrischen Größen der Stützelemente und des Koppelelements.

Bei omnidirektionaler Verschiebung der Basis bewegt sich das Zentrum **13** des Koppelelements **9** auf einer Ortsfläche in der Form einer nach oben offenen konkaven Fläche, mit dem Krümmungsradius ρ.

Das Zentrum **13** des Koppelelements **9** bewegt sich wie an einem virtuellen Pendel mit der Länge ρ aufgehängt. Das Zentrum **13** des Koppelelements **9** erfährt bei einer Verschiebung um den Betrag ε eine Anhebung um den Betrag **h**, und das Koppelelement **9** eine Schrägstellung um den Winkel ζ.

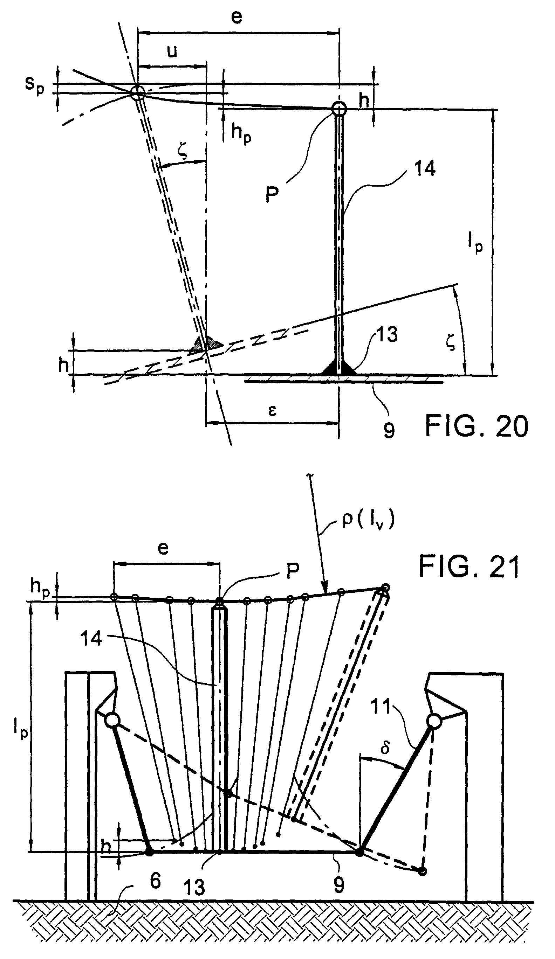

**FIG.20** ist mit dem Koppelelement **9** ein vertikales Stützelement **14** mit der Höhe $I_p$ im Zentrum **13** fest verbunden, so stellt diese Einheit für sich allein ein stehendes physikalisch instabiles Pendel dar, weiches unterhalb seiner physischen Ausdehnung virtuell zweiachsig gelenkig gestützt und bei Kippen um den unteren momentanen Drehpunkt durch die Koppelung über Koppelelement **9** an die Stützelemente **11** in FIG.19 um den Betrag **h** angehoben wird.

Der stütz-bzw. Lagerpunkt **P** der zu stützenden Masse am oberen Ende des Stützelements **14** mit der Höhe $I_p$ in Einheit mit dem Koppelelement **9** erfährt durch das Kippen um den Winkel ζ eine relative Absenkung um den Betrag

$$s_p = I_p(I - \cos \zeta) \qquad (12)$$

und eine zusätzliche exzentrische Verlagerung

$$u = I_p \bullet \sin \zeta \qquad (13)$$

Die gesamte exzentrische Verlagerung des Punktes P wird

$$e = \varepsilon + u$$

$$e = \varepsilon + I_p \bullet \sin \zeta \qquad (14)$$

Die resultierende Anhebung des Punktes **P** wird

$$h_p = h - s_p$$

$$h_p = h - I_p (I - \cos \zeta) \qquad (15)$$

**FIG.21** Der Punkt **P**, das obere Ende des Stützelements **14**, bewegt sich auf einer nach oben offenen konkaven Fläche mit einer flachen Wölbung. Diese Wölbungskrümmung und die Reststabilität wird von den Relationen der Abmessungen der einzelnen Glieder der Baugruppe zueinander, insbesondere durch die Größe der vertikalen Länge bestimmt.

Die Wahl der Größe $I_p$ wird begrenzt durch die Höhe, bei welcher das System instabil wird. Die Vorrichtung nach FIG.21 stellt ein virtuelles Pendel dar zur zweiachsig gelenkig gelagerten Abstützung eines Objekts im Punkt **P,** so als wenn das Objekt an einem langen Pendel mit der Länge $I_v$ beziehungsweise ρ aufgehängt wäre, mit der Bewegungsfähigkeit auf einer gekrümmten Fläche mit dem Krümmungsradius ρ.

Mit **e** und $h_p$ aus den Gleichungen (14) und (15) wird die Länge des virtuellen Pendels aus der Beziehung nach Gleichung (6) bestimmt.

Des weiteren gelten die Gleichungen (7) bis (11).

Die Stützelemente **11** können ebenso bei annähernd gleicher Wirksamkeit auch aus Seilstrukturen bestehen und dabei auf gelenkige Aufhängungen verzichten, sofern die Stützelemente **11** bei allen Belastungsfällen nur durch Zugkräfte belastet werden.

Dieser Laststützpunkt an den Erdbebenschutz-Modulen hat eine räumliche Bewegungsmöglichkeit, als wäre er das untere Ende eines sehr langen Pendels. Er bewegt sich also in einer flach gewölbten virtuellen sphärischen Schale.

In dieser Schale strebt der Laststützpunkt immer der tiefsten Stelle, dem Zentrum der Schale zu.

Je flacher die Schale gekrümmt ist, umso geringer ist die aus der Erdanziehung hervorgerufene Rückstellkraft zur Mitte hin und umso langsamer bewegt sich der Laststützpunkt in Richtung zum Zentrum.

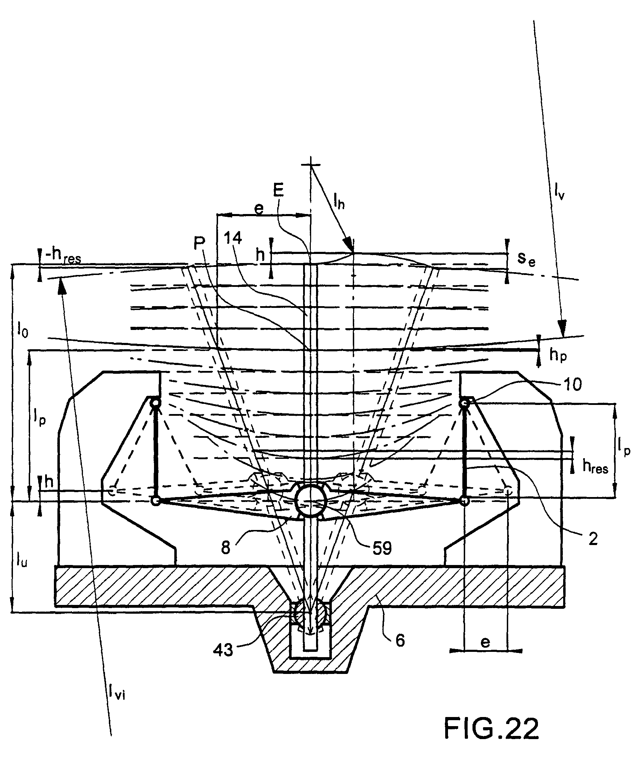

**FIG.22** zeigt ein weiteres Beispiel eines nach im Anspruch **1** definierten Verfahren gestalteten virtuellen Pendels.

An mit der Basis **6** verbundenen Tragstrukturen 5 werden mindestens zwei oder mehrere zweiachsig gelenkig gelagerte stabile Stützelemente, vertikal parallel hängende Pendel **2** gehalten, die einen an ihrem unteren Ende gelagerten Träger, oder ein Plattform-Koppelelement **8** tragen.

Im Zentrum des Koppelelements **8** ist ein in einem Vertikallast aufnehmenden Lager **59** gehaltenes vertikales Stützelement **14** angeordnet, das sich an seinem unteren Ende um zwei waagerechte Achsen schwenkbar in einem Gelenklager **43** axial verschiebbar, horizontal abstützt. in diesem Gelenklager **43** kann das vertikale Stützelement **14** um horizontale Achsen kippen.

Das Zentrum des Lagers **59** hat die gleiche räumliche Bewegungsfähigkeit wie die unteren Enden der hängenden Pendel **2** mit der Länge $I_h$ und erfährt bei horizontaler Auslenkung **e** eine Anhebung um den Betrag **h**.

Das obere Ende des vertikalen Stützelements 14 erfährt in Einheit mit seiner Lagerung im Lager **59** die Anhebung **h**, der sich gleichzeitig die Absenkung $s_e$ überlagert. Die resultierende Anhebung ist $h_{res} = h - s_e$.

In dem Beispiel der FIG.22 wird für das obere Ende des Stützelements **14** die resultierende Anhebung negativ, es erfolgt also eine Absenkung. Dieser obere Punkt wäre somit als Laststützpunkt negativ.

Der obere Punkt beschreibt bei Verlagerung aus der Mittellage in allen Richtungen eine von oben gesehen konvexe Fläche, wie das obere Ende eines am unteren Ende gelagerten Pendels. Dies bildet ein umgedrehtes, instabiles virtuelles Pendel mit der Länge $I_{vi}$.

Das Stützelement **14** ist bei vertikaler Belastung am oberen Ende in dieser Dimensionierung in Relation zu den Dimensionen der anderen gekoppelten Elemente **2** und **8** instabil.

Für sich allein ist das Stützelement 14 ohne Koppelung an andere Elemente ohnehin instabil. Erst durch Koppelung an andere Elemente, deren stabilisierender Einfluß unter Lasteinwirkung überwiegt, wird das Gesamtsystem stabil und bildet als Tragvorrichtung ein virtuelles Pendel.

Es muß, um Laststütz-Stabilität zu erzielen, die Länge $I_o$ so gewählt werden, daß eine positive Anhebung $h_{res}$ des oberen Punktes entsteht. Damit bewegt sich der Laststützpunkt in einer von oben gesehen konkaven Fläche. Dieser so gewählte Laststützpunkt mit dem Abstand $I_p$ von dem Lagerpunkt **59** erfährt bei Verlagerung aus der Mittellage eine geringe Anhebung $h_p$ und stellt den Endpunkt eines virtuellen Pendels mit der Länge $I_v$ dar.

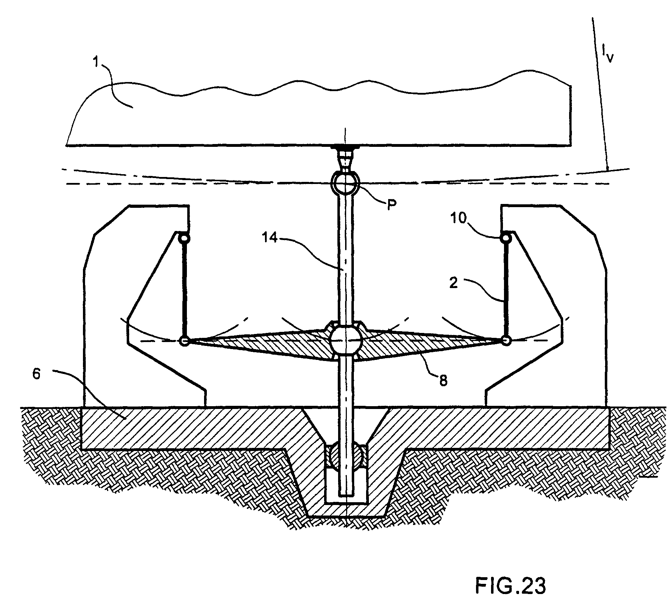

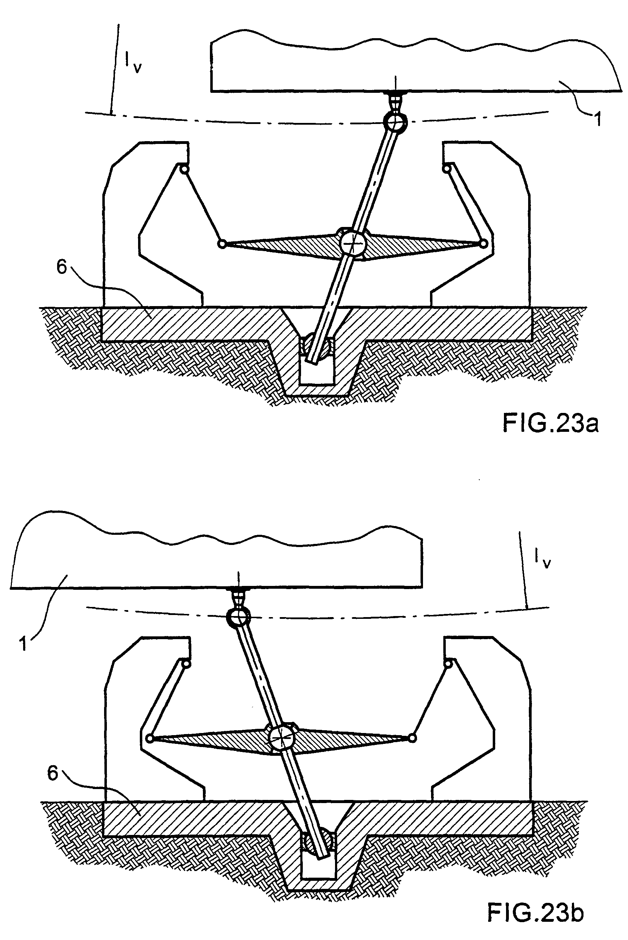

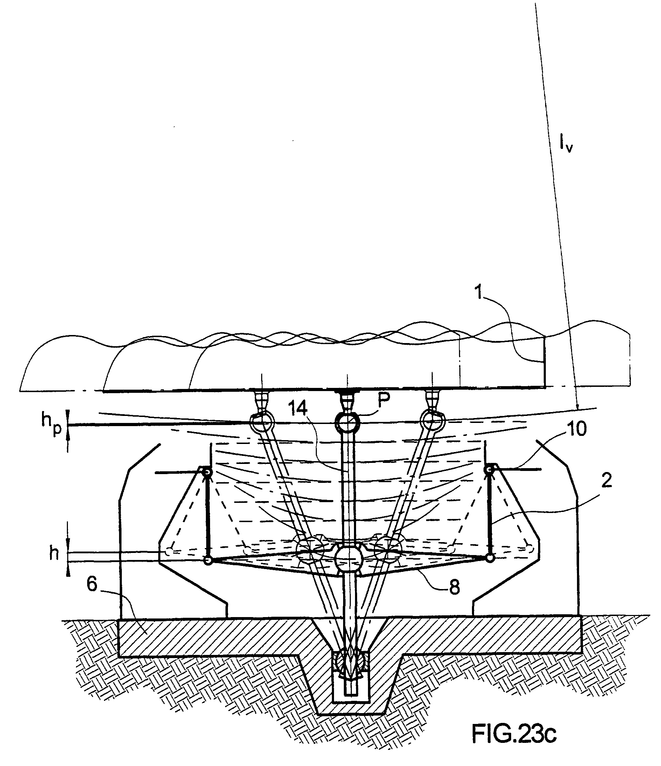

**FIG.23** zeigt die Krümmungen der Bewegungsbahnen der Traglastpunkte der hängenden Pendel **2**, des Zentrums des Koppelelements **8** und des Laststützpunktes am oberen Ende des vertikalen Stützelements **14.**

**FIG.23a, 23b, 23c** zeigen Bewegungsphasen des getragenen Objekts **1** relativ zur Basis **6** in den Extremlagen und überlagert.

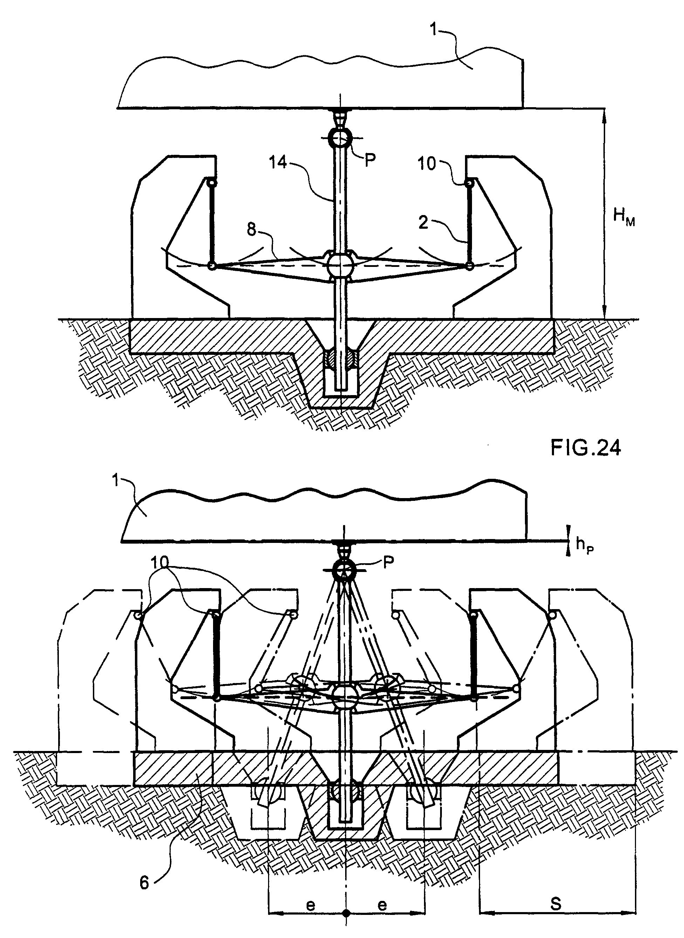

**FIG.24** stellt in schematischer Darstellung ein virtuelles Pendel nach dem in FIG.22 und 23c erklärten Wirkungsprinzip dar, wobei die Stellung in Mittellage gezeigt wird sowie die Bewegungsphasen der Basis **6** in Relation zum getragenen Objekt 1. Bei der schwingenden horizontalen Verlagerung **e** der Basis **6** durch Erdbeben erfährt das getragene Objekt **1** durch das virtuelle Pendel eine Anhebung um den geringen Betrag $h_p$.

Die Relation der Größe des Schwinghubs **s** der Basis **6** zur Bauhöhe des Erdbebenschutz-Moduls $H_M$ zeigt, daß bei einer durchschnittlichen Geschoßhöhe bereits relativ große Schwingweiten des Systems möglich sind.

Das Bewegungsverhalten entspricht dem des mathematischen Pendels. Die Zeitdauer der Eigenschwingung wird nur durch die wirksame Länge des virtuellen Pendels bestimmt.

Das Uhrenpendel zeigt dies anschaulich.

Bewegt sich der mit der schwingenden Basis verbundene obere Aufhängepunkt des Pendels bei einem Erdbeben schnell hin und her, so kann die an dem unteren Ende des virtuellen Pendels hängende Masse wegen seiner durch das Pendel bestimmten Bewegungs-Trägheit der schnellen Umkehr der Bewegung des oberen Aufhängepunktes nicht mehr folgen. Bei schnellem Wechsel der Bewegungsrichtung verbleibt die getragene Masse nahezu auf der Stelle.

4.3 Ergebnis der Problemlösung

Diese Aufgabe ist erfindungsgemäß durch ein Verfahren mit den Schritten gemäß Anspruch 1 und die daraus abgeleiteten und beschriebenen Vorrichtungen gelöst.

Vorteilhafte Ausgestaltungen der Erfindung bilden die Gegenstände der Unteransprüche.

Die Erfindung gewährleistet eine Resonanzfreiheit des Gebäudes bei Bodenschwingungen durch Erdbebenbewegungen, wobei die horizontalen Beschleunigungs- und Stoßkräfte aus der Bewegung des Bodens nicht mehr auf den Gebäudekörper übertragen werden. Dies stellt damit einen integralen Erdbebenschutz sicher, der auch bei stärksten horizontalen Bodenschwingungen den Baukörper oder das Objekt zuverlässig schützt.

Mit dem erfindungsgemäßen Verfahren ist es bei entsprechender Wahl der Auslegungsparameter möglich, ein Verhalten des gestützten Objekts zu erzielen, daß es nahezu in Ruhelage verbleibt, auch wenn der Boden mit großen Amplituden und hohen Beschleunigungen sich bewegt.

Das zur Anwendung gelangende Verfahren bewirkt, daß die Periode der Eigenschwingung so verlängert wird, daß die damit verbundene Bewegungsträgheit dazu führt, daß das Objekt der oszillierenden Erdbebenbewegung der Basis nicht mehr folgen kann. Der Schutz der Objekte ist hierbei so weitgehend, daß die zu schützenden Gebäude oder Anlagen in Ruhelage bleiben, selbst bei Beben größter Magnitude.

Die Wirksamkeit ist mathematisch transparent nachweisbar.

Die Funktion der Erfindung und der integrale Schutz konnte bereits durch Modell-Simulation mit Beschleunigungen bis 1,2 g demonstriert werden.

Somit wird das Objekt gegenüber der horizontalen Bewegung des Bodens vollständig isoliert, es handelt sich also um eine wirkungsvolle Basis-Isolation durch Abstützung über eine Tragstruktur, die bei geringer eigener Bauhöhe an den Stützpunkten dem getragenen Objekt die räumliche Bewegung ermöglicht, als hinge es an sehr langen Pendeln. Die Abstützung erfolgt somit über virtuelle Pendel langer Periodendauer.

Die Auslegungsparameter sind in weiten Grenzen wählbar. Hierdurch kann der Unterschied zwischen der Frequenz der Eigenschwingung des Systems und den Frequenzen üblicher Erdbebenschwingung frei bestimmt und so groß gewählt werden, daß die Schwingsysteme des Gebäudes und der Basis weitestgehend entkoppelt werden, so daß die getragene Struktur in Ruhelage verbleibt.

Da der Baukörper den schnell wechselnden Bewegungen des Bodens nicht folgt, werden auch keine aus Beschleunigungen hervorgerufenen Massenkräfte wirksam. Es entstehen keine gefährlichen Schubspannungen und Erdbebenschäden werden verhütet.

Erdbebenschutz-Module in Form virtueller Pendel bieten einen effektiven Schutz selbst gegen Erdbeben mit größter Magnitude und mit dem größten Zerstörungspotential. Erstmals ist es möglich, jede Art von Gebäuden auch Hochhäuser und andere Strukturen völlig erdbebensicher zu planen und ebenso bestehende Objekte nachzurüsten.

Die Gebäudemasse hängt gleichsam an virtuellen Pendeln mit großer wirksamer Pendellänge, wobei der Aufhängepunkt hoch über dem Gebäude im Raum sich befindet.

Das neuartige Erdbebenschutz-Modul realisiert das Bewegungsverhalten eines sehr langen Pendels ohne eine große vertikale Erstreckung zu haben, es stellt damit ein virtuelles Pendel mit großer wirksamer Pendellänge dar. Mit einer nur geringen Bauhöhe findet es in einer Geschoßhöhe Platz und kann zu ebener Erde oder im Keller angeordnet werden.

Der obere Aufhängepunkt des virtuellen Pendels ist durch das Erdbebenschutz-Modul mit der Basis fest verbunden.

Eine an einem sehr langen Pendel hängende Masse kann sich nur langsam bewegen. Die Zeit für eine Schwingung ist groß. Die Periodendauer einer Schwingung kann mit dieser Technik frei gewählt und die Bauteile danach ausgelegt werden z. B. für 20 Sekunden oder länger. Die Zeit einer Erdbebenschwingung liegt typischerweise im Bereich von 0,5 bis 2 Sekunden. Wenn sich der Aufhängepunkt des Pendels schnell oder sprunghaft verlagert, so folgt eine an dem Pendel hängende Masse in die neu bestimmte Position nur mit der Geschwindigkeit, die dem Schwingverhalten des Pendels großer Länge entspricht.

Die Magnitude des Erdbebens hat keinen Einfluß. Es spielt keine Rolle, wie schnell die Erde sich bewegt, wie stark das Fundament des Gebäudes beschleunigt wird, wie hoch oder wie niedrig die Frequenz der Erdbebenschwingung ist oder wie harmonisch oder disharmonisch die Bewegung abläuft, das Ergebnis ist immer dasselbe.

Die auf das Gebäude übertragbare Beschleunigung wird reduziert auf Werte von weniger als 0,01 g, ein Wert, der physisch kaum wahrgenommen wird.

Die schützende Wirksamkeit dieses Prinzips ist immer gleich bei allen vorkommenden Bodengeschwindigkeiten und Beschleunigungen.

So bewegt sich auch bei den allerstärksten Erdbeben das Gebäude ebenso wenig wie bei schwachen Beben.

Bei der erfindungsgemäßen Lösung werden keine Energien umgeleitet, umgewandelt oder absorbiert, vielmehr wird keine Bewegungsenergie in den Baukörper übertragen.

Da dem Baukörper keine schnell wechselnden Bewegungen aufgezwungen werden, werden auch keine aus Beschleunigungen hervorgerufenen Massenkräfte wirksam, Erdbebenschäden werden verhütet.

Somit wird das Objekt gegenüber der horizontalen Bewegung des Bodens vollständig isoliert, es handelt sich also um eine höchst wirkungsvolle Basis-Isolation.

Aus diesem Grund werden auch keine erdbebenbedingten konstruktiven Verstärkungsmaßnahmen für die Gebäudestruktur notwendig, wie sie für Standard-Bauweisen durch Bauvorschriften zum Erdbebenschutz gefordert werden.

Eine Modell-Simulation hat die vorausberechnete und erwartete Wirkungsweise bereits unter Beweis gestellt.

4.4 Stark verringerte Reibung bei horizontaler Verschiebung

Bei der vorliegenden Erfindung wird die physikalisch vorhandene Reibung an den Lagerstellen der Strukturelemente der konstruktiven Lösung, bedingt durch den prinzipiellen Aufbau der Problemlösung nur stark reduziert wirksam bei der effektiven Reibung, die als Verschiebewiderstand der bewegten Masse in Erscheinung tritt.

Es stellt sich ein extrem niedriger effektiver Reibungskoeffizient ein. Hierdurch werden somit auch durch Reibung keine nennenswerten Beschleunigungskräfte von der Basis auf den getragenen Baukörper übertragen. Das Gebäude hat demzufolge somit auch eine leichte Verschiebbarkeit gegenüber der Basis. Windkräfte können das getragene Objekt aus seiner Mittellage des Bewegungsbereichs verschieben und damit in einer Richtung bei Auftreten von Basisverschiebung bei Erdbeben den verfügbaren Schwingausschlag relativ zur Basis verkürzen.

Die Konzeption der Tragstruktur der neuen Lösung führt dazu, daß die physikalisch wirksame Reibung durch einen hohen Reduktionsfaktor auf sehr geringe Werte reduziert wird. Der Verschiebewiderstand ist

$$W = m * g * \mu_{red} \qquad (16)$$

erreichbar sind Werte: $\mu_{red} = 0,002 \ ...... \ 0,004$

Hierdurch werden auch über die noch wirksame Reibung nur sehr geringe Kräfte zur Beschleunigung der gestützten Masse übertragen.

In keinem Fall darf durch diesen Einfluß der mögliche Schwingausschlag kleiner werden als die eventuelle Schwingamplitude eines Erdbebens oder gar zu Null werden.

Es ist also notwendig zur primären Aufgabe, das zu schützende Objekt von den Bodenbewegungen isoliert zu tragen, zusätzlich in die Gesamtlösung Elemente zu integrieren, weiche die zentrierte Ausgangslage bei Einsetzen von Erdbebenschwingungen sicherstellen.

4.5 Zentrierung des getragenen Objekts und Windkraftabstützung

Die Bewegung der Lagerpunkte des getragenen Objekts auf den Erdbebenschutz-Modulen erfolgt in einer sehr flachen, von oben konkaven sphärischen Fläche, wobei die Sphäre keinen exakten Kugelschatenausschnitt darstellt, sondern nur näherungsweise. Die Krümmung der Fläche ist über der Auslenkung aus der Mittellage nicht konstant, was aber der Funktionalität des Systems keinen Abbruch tut. Aufgrund der Anhebung bei vollem Ausschlag erfolgt eine Rückstellkraft durch die Gravitation, wodurch eine selbstzentrierende Wirkung des Lagerpunktes bewirkt wird. Allerdings erfolgt die Rückführung in die Mitte nicht vollständig aufgrund der vorhandenen Reibung, obwohl sie sehr gering ist.

Der horizontal wirksame Schub, die Rückstellkraft bei Auslenkung aus der Mittellage aus der Massenkraft des an virtuellen Pendeln hängenden Objekts ist

$$S_H = m \cdot g \cdot \frac{e}{l_v} \cdot \cos\left[ \arcsin\left( \frac{e}{l_v} \right) \right] \qquad (17)$$

$S_H$ horizontaler Schub durch Gravitation

$m$ getragene Masse

$g$ Erdbeschleunigung

$e$ Auslenkung von der Mittellage

$l_v$ Länge des virtuellen Pendels

Der horizontale Widerstand durch Reibung gegen Verschiebung ist

$$W_H = m \cdot g \cdot \mu_{red} \qquad (18)$$

$W_H$ horizontaler Widerstand gegen Verschiebung

$\mu_{red}$ reduzierter Reibungskoeffizient

Der horizontale Widerstand gegen Verschiebung ist bedingt durch die Konzeption der Erdbebenschutz-Module extrem niedrig.

Der Reibungs-Koeffizient wird reduziert im Verhältnis der halben Lagerdurchmesser der Pendellagerungen der Stützelemente zu der wirksamen Länge der Pendel.

Der reduzierte Reibungskoeffizient wird

$$\mu_{red} = \mu \cdot \frac{D_L/2}{l_P} \qquad (19)$$

$\mu$ Reibungskoeffizient der Lagerausführung der Pendel

$D_L$ Durchmesser der Lager der Stützelemente, Pendel

$L_P$ Länge des Stützelements, Pendels

Da auslegungsgemäß die Krümmung der Bewegungsfläche des Endpunktes des virtuellen Pendels wegen der angestrebten Wirkung der Entkopplung von den Bodenbewegungen im Mittelbereich sehr flach ist, entsteht dennoch trotz der extrem niedrigen Reibung nach Ausschwingen eine Hysterese mit einer horizontalen

Ablage von der Mittellage

$$A_H = l_v/\sin (\text{arc sin} \cdot \text{arc cos } \mu_{red}) \qquad (20)$$

$A_H$ horizontale Ablage vom Mittelpunkt

Die Konzeption der Erdbebenschutz-Module läßt es zu, daß die vorzusehenden Schwingweiten großzügig ausgelegt werden können, so daß im Falle von extremen Bodenbewegungen genügend Freiraum zum Schwingen relativ zur Basis vorhanden ist, auch wenn die Ausgangslage zur Schwingung nicht der Mittelpunkt war. So kann unter dem Einfluß von Driftung durch Windkräfte und durch das jeweilige Ausschwingen nach einem Beben die Position des Gebäudes verschieden sein. Wo dies nicht stören würde, könnte man ohne eine zusätzliche Zentrierung des Gebäudes und Abstützung gegen Windkräfte auskommen. Wo aber die Forderung besteht, daß das Gebäude immer auf dem gleichen Punkt bleibt, ist eine zusätzliche Einrichtung zur exakteren Zentrierung notwendig.

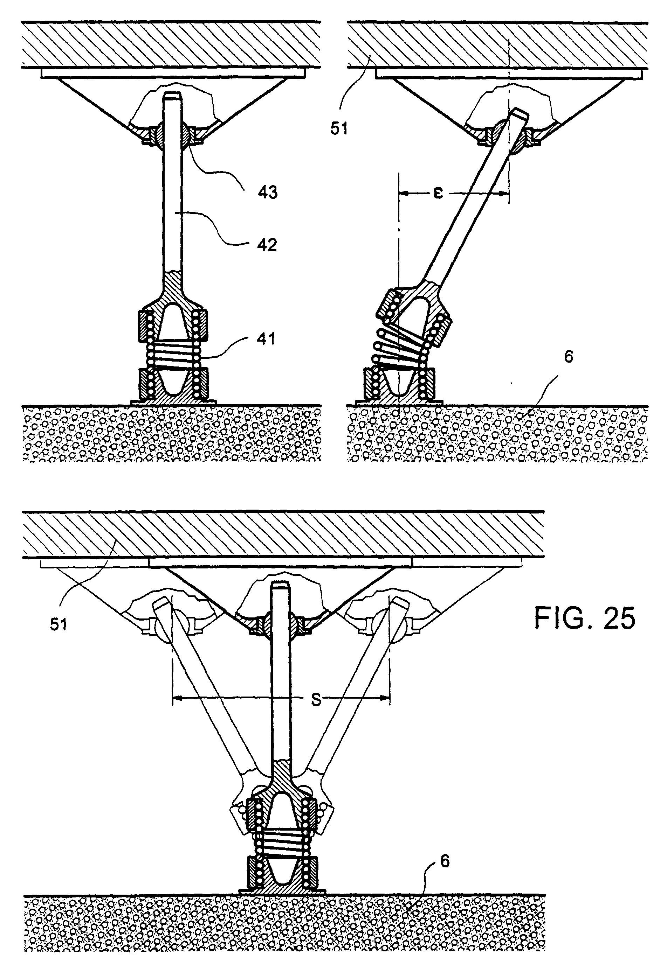

**FIG.25** zeigt eine einfache Lösung einer Horizontal-Abstützung. Eine solche Vorrichtung wird an mindestens zwei Stellen des Gebäudes benötigt, kann aber auch in die einzelnen Erdbebenschutz-Module integriert werden.

Eine vorgespannte Zugfeder **41** ist mit ihrem unteren Ende mit der Basis verbunden. An ihrem oberen Ende trägt die Zugfeder den Zapfen **42,** der in ein sphärisches Gelenklager **43** axial verschiebbar hineinragt, welches fest mit der getragenen Struktur verbunden ist. Die Zugfeder **41** ist soweit vorgespannt, daß die horizontale Hebelkraft in der Höhe des Gelenklagers **43** der maximal erwartbaren Windkraft entgegenwirkt, ohne daß durch Biegung der Zugfeder **41** und Abheben der Windungen auf einer Seite der Feder der Zapfen **42** eine Schrägstellung erfährt. Erfolgt jedoch eine horizontale Bewegung der Basis gegenüber der getragenen Gebäudemasse durch ein Erdbeben mit einer hohen Beschleunigung, wodurch ein Impuls aus der Gebäudemasse entsteht, der die Wirkung von Windfast deutlich übersteigt, so wird durch das hervorgerufene Moment über den Hebel des Zapfens **42** die Feder **41** gebogen. Die Basis erfährt gegenüber dem Gebäude eine Verlagerung $\varepsilon$. Bei weiterer Verschiebung nach Überwindung dieses Anfangsmoments nimmt die Größe der Kraft nicht mehr linear, sondern degressiv zu. Auf diese Weise wird die Reaktionskraft aus der Feder über den Schwinghub **S** klein gehalten.

Diese Horizontal-Abstützung kann auch in umgekehrter Anordnung Anwendung finden, wobei das Gelenklager **43** mit der Basis **6** verbunden oder in dem Fundament bündig eingelassen ist, und das Ende des Zapfens **42** mit der Feder **41** hängend an einer getragenen Gebäudestruktur **51** befestigt ist.

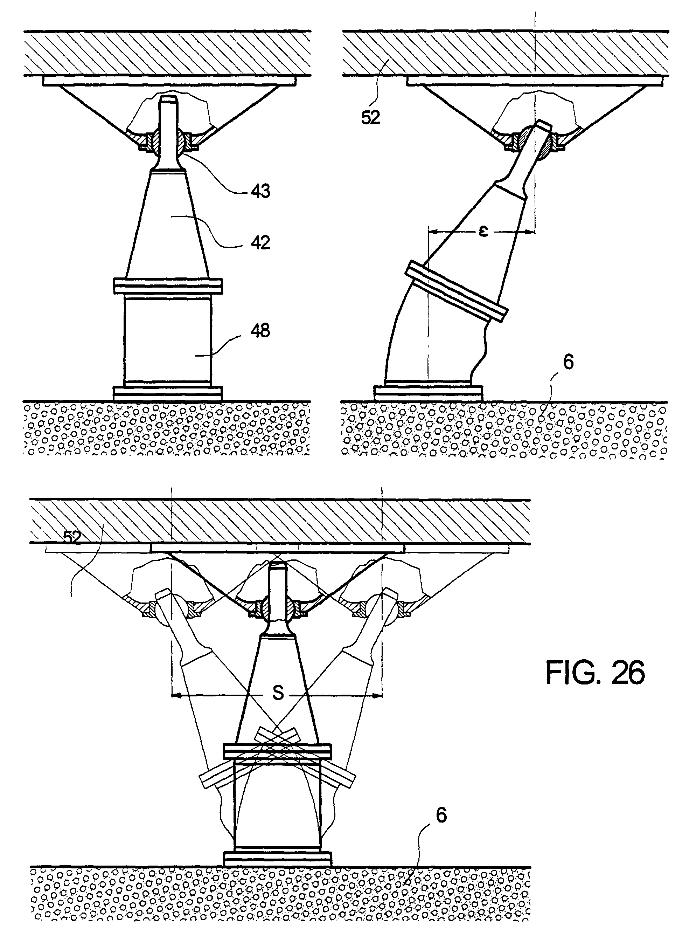

**FIG.26** zeigt eine vergleichbare Lösung zur Zentrierung des Gebäudes mit einem Federblock **48** aus Elastomer-Werkstoff. Bei entsprechender Dimensionierung des Federblocks ist das Verhalten vergleichbar mit der Lösung in FIG.25. Nur ist kein ausgeprägtes Losbrechmoment wirksam. Von Anfang an erfolgt die Bewegung stetig in Abhängigkeit von der Horizontalkraft. Die umgedrehte Anordnung ist auch bei dieser Ausführung möglich.

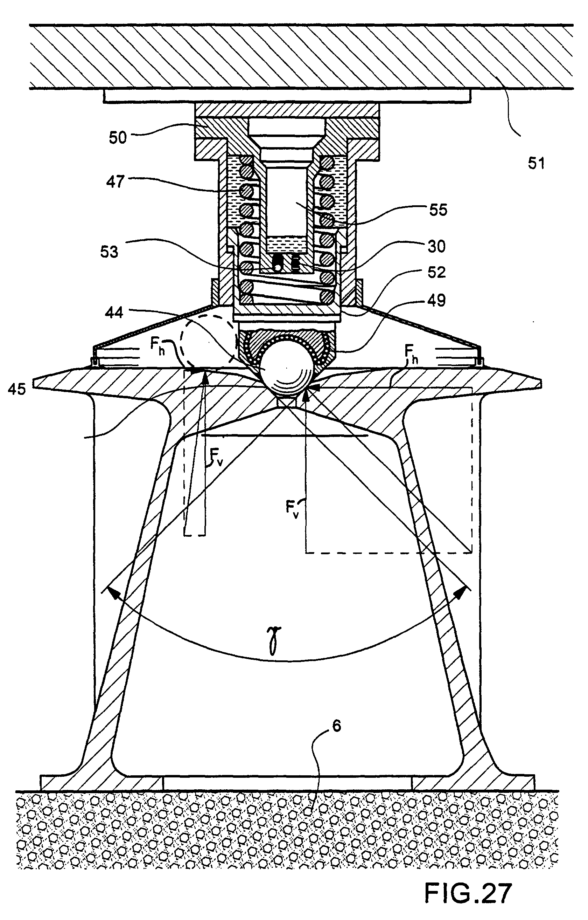

**FIG.27** zeigt eine Vorrichtung zur Zentrierung des Gebäudes, bei der eine Haltevorrichtung **50** sich an mindestens zwei Punkten fest verbunden unter der getragenen Gebäudestruktur **51** befindet. Eine in einem Kugelbett **49** gelagerte Rollkugel **44** wird in einen Zentriertrichter **45** durch eine Feder **47** mit der Vertikalkraft $F_v$ gedrückt, die mit der maximal erwartbaren durch Luftkräfte am Gebäude bewirkten Horizontalkraft $F_h$ im Gleichgewicht steht.

$$F_v = F_h \, tg \, (\gamma/2) \qquad (21)$$

$F_v$ Vertikalkraft

$F_h$ Horizontalkraft

$\gamma$ Öffnungswinkel des Zentriertrichters

Wird die Kraft $F_v$ größer, als sie durch Windkraft hervorgerufen werden kann, und die dann aus dem Impuls beim Erdbeben herrührt, wird durch horizontales Verschieben des Zentriertrichters **45** mit der Basis **6** die Rollkugel **44** gegen die Feder **47** über einen Kolben **52** zurückgedrückt und gelangt in den Bereich des Zentriertrichters **45** mit abnehmender Neigung beziehungsweise größer werdenden Öffnungswinkel $\gamma$. Hierdurch nimmt die horizontal übertragbare Kraft ab und wird Null, sobald die Kugel den Bereich des Trichters verläßt und auf der ebenen Fläche rollt.

Das durch den Kolben **52** verdrängte Fluid gelangt über ein Rückschlagventil **53** in einen externen Vorratsbehälter oder in den integrierten Ausgleichsraum **55.** Beim möglichen Zurückfedern wird die Geschwindigkeit des Ausfahrens des Kolbens dadurch gebremst, daß das Fluid nur über eine Drosselblende **30** zurückfließen kann.

Beim schnellen Schwingen der Basis landet die langsam zurückkommende Rollkugel **44** nicht wieder im steileren Zentrum des Zentriertrichters **45,** sondern im Bereich mit geringer Neigung. Demzufolge sind die übertragbaren horizontalen Kräfte gering.

Wenn das Schwingen zum Stillstand kommt, setzt sich die Rollkugel 44 im steileren Bereich des Zentriertrichters ab und zentriert das getragene Objekt mit der dann wieder wirkenden erhöhten horizontalen Haltekraft $F_h$.

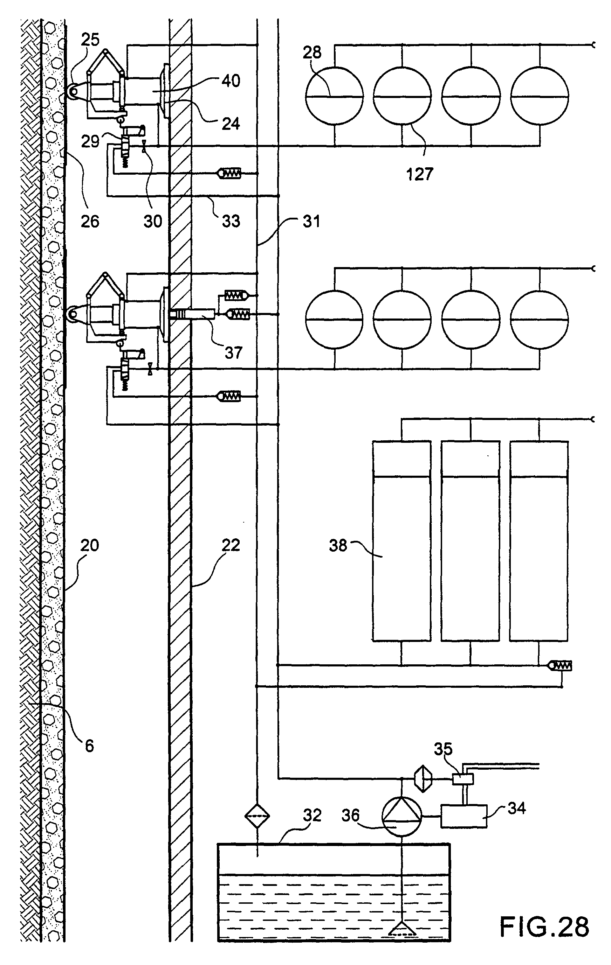

**Fig.28** stellt eine andere Form der Gebäudezentrierung und Windkraftabstützung dar. Zwischen einer Seitenwand eines Gebäudeuntergeschosses **22** und einer Fundamentwand 20 an der Basis 6 sind an zwei sich gegenüberliegenden Seiten mindestens zwei und an den übrigen beiden Seiten eines rechteckigen Gebäudes mindestens je ein Abstützelement, Horizontalabstützung **24** angeordnet. Die Horizontalabstützung **24** ist in der vertikalen Draufsicht der horizontalen Lage dargestellt, wobei die Laufrichtung der Rolle **25** horizontal ist und auf gleicher Höhe der vertikalen Fundamentwand **20** verläuft. Alle übrigen Objekte der schematischen Darstellung sind in horizontaler Sicht eines vertikalen Schnitts gezeigt. Die Horizontalabstützung **24** besteht aus einem Hydraulik-Zylinder **40** mit voll gegen Anschlag ausgefahrener Kolbenstange, die an ihrem Ende mit einem Fahrwerk versehen ist mit einer Rolle **25** oder mehreren Rollen. Zwischen Rolle und einer Lamelle **26** an der Wand der Basis als Rollbahn ist ein minimaler Luftspalt vorgesehen bei genau zentriertem Gebäudeunterteil innerhalb der Basis. Die Rollrichtung der Rollen ist horizontal ausgerichtet. Damit die Kolbenstange mit dem Rollenfahrwerk seine Richtung beibehält, ist das Ende der Kolbenstange mit dem Zylinder **40** über ein Kniegelenk-Gestänge als Drehsicherung verbunden. Wenn die Wand des Fundaments **20** sich auf das Untergeschoß **22** des Baukörpers zubewegt, wird über die Rolle **25** und Kolbenstange der Kolben in den Zylinder **40** eingefahren und verdrängt darin vorhandenes Fluid und fördert es in einen oder mehrere Hydraulik-Akkumulatoren **127,** die als Membran-, Blasen- oder Kolbenspeicher ausgebildet sein können, und verdichten auf der anderen Seite der Membran 28 ein Gas, Luft oder Stickstoff. Damit wirkt der Hydraulik-Zylinder wie eine Federstütze mit Gasfederung. Ist die Kolbenstange voll ausgefahren gegen den mechanischen Anschlag im Zylinder **40,** so befindet sich ein über die Kolbenstange gesteuertes Regelventil **29** in Öffnungsstellung. Der Gasdruck in den Akkumulatoren drückt das Fluid durch die Drosselblende **30** über das geöffnete Ventil in den Rücklauf zum Vorratsbehälter **32.** Wird die Kolbenstange durch die Annäherung der Fundamentwand **20** an das Untergeschoß **22** des Gebäudekörpers in den Zylinder eingefahren, so wird das Regelventil **29** geöffnet und aus der Druckleitung **33** gelangt Fluid in die Hydraulik-Akkumulatoren **27,** so daß sich ein Druck aufbaut solange, bis die daraus resultierende Kraft im Zylinder die Kolbenstange ausfährt und den Gebäudekörper wieder in seine Nullstellung bringt. Somit wird das Gebäude in seine Mittelstellung gebracht. Dieser Vorgang ist wirksam, wenn durch Windkraft das Gebäude wegen seiner leichten Verschiebbarkeit gegenüber der Basis aus seiner Mittelstellung geschoben wird. Da die Windkräfte sich nicht sprunghaft ändern, sondern zum Auf- und Abbau immer eine gewisse Zeit notwendig ist, ist der Vorgang mit dem Zufluß und Abfluß von Fluid über die Drosselblende hinreichend schnell, um den Regelvorgang beim Sollwert, das heißt, das Gebäude in der Mittelstellung zu halten. Erfolgt die Annäherung der Basiswand an das Gebäude in schnellerer Folge, wie dies beim Erdbeben der Fall sein würde, so sind mit dem schnellen Einfedern des Kolbens und damit Öffnen und jeweils Schließen des Ventils in schneller Folge über die Drosselblende **30** die Zu- und Abflüsse von Fluid in das Luftfeder-System und wieder heraus gering. Die Gasfederkraft im Zylinder 40, die mit der jeweiligen Luftkraft zunächst in Balance war, variiert durch die flache Federkennung und das Ein- und Ausströmen durch die Drosselblende **30** in der Frequenz des Bebens bei Bewegen des Kolbens und des Regelventils **29** nur gering. Das System kann so ausgelegt werden, daß diese zur Beschleunigung wirksam werdenden Kräfte so klein bleiben, daß sie bezogen auf die Gebäudemasse nur sehr geringe wirksame Beschleunigungen in schneller Folge im Wechsel der Frequenz des Bebens zur Folge haben. Das Hydraulik-System wird zentral versorgt aus einem Vorratsbehälter **32** und über eine Pumpe **36**, die von einem Motor **34** angetrieben wird, der über einen Druckregelschalter **35** gesteuert wird. Die Energieversorgung für den Antrieb könnte autonom durch Solar- oder Windenergie bereitgestellt werden. Die Hydraulik-Energie wird in einer Batterie von Hydraulik-Druckspeichern **38** gepuffert, so daß die Leistung der Pumpe **36** gering gehalten werden kann. Während eines Bebens steht reichlich externe Energie zur Verfügung, die in dieser Anlage gleichzeitig genutzt werden kann, so daß in einer Variante der Kolben der Horizontalabstützung mit einer Kolbenpumpe **37** kombiniert wird. Während der schnellen Bewegung der Basis gegenüber dem Baukörper fördert somit diese Kolbenpumpe **37** Fluid aus dem Vorratsbehälter **32** in die Druckspeicher **38** und deckt damit den Massenstrom ab, der dadurch entsteht, daß Fluid aus dem Federungssystem, bestehend aus Zylinder **40** und Akkumulator **27,** über die Drosselblende **30** durch das mit der Frequenz des Bebens während einer Halbschwingung öffnende Regelventil **29** in den Rücklauf fließt.

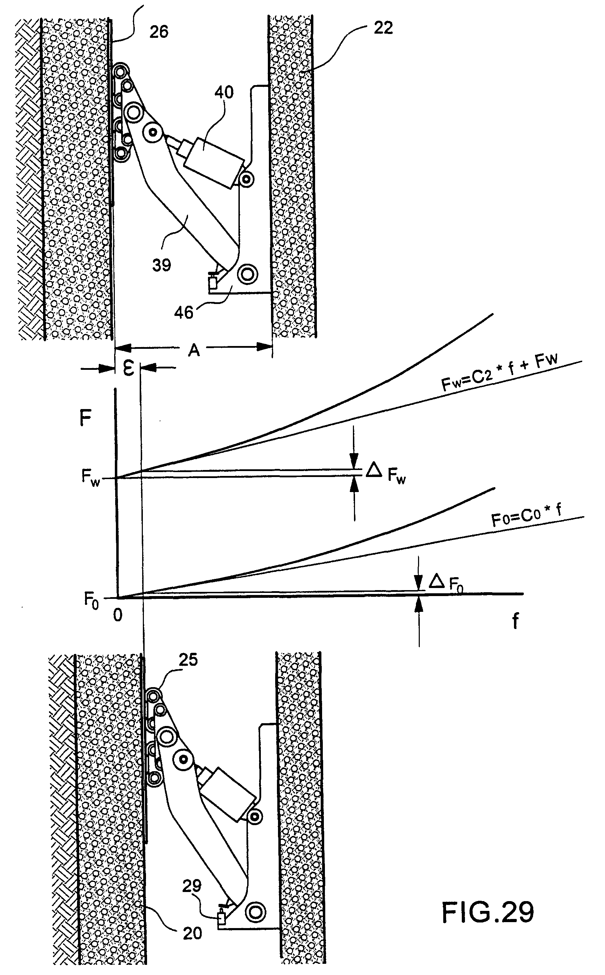

**Fig.29** zeigt eine Horizontalabstützung über eine Schwinge **39**. Mit einer solchen Ausführung sind besonders große Schwingausschläge und Abstandsänderungen zur Fundamentwand möglich. Die Schwinge **39** ist an einem am Gebäudekörper befestigten Gestell **46** gelagert und über einen Zylinder **40** oder mehrere Zylinder an der Gebäudewand des Untergeschosses **22** abgestützt und trägt am Ende ein Rollenfahrwerk mit einer oder je nach Abstützungslast mehreren Rollen **25,** die sich auf einer Lamellen-Laufbahn **26** an der Wand des Fundaments **20** bewegen können. Anstelle von Rollen können auch Gleitschuhe Verwendung finden mit entsprechenden Gleitwerkstoffen. An dem Gestell **46** befindet sich ein Regelventil **29,** welches von der Schwinge **39** betätigt wird und die gleiche Funktion hat, wie in dem Beispiel nach Fig.28. Im übrigen entspricht die hydraulische Ausrüstung dem Beispiel in Fig.28.

Auch diese Vorrichtung wird pro Bauwerk in mindestens sechs Exemplaren benötigt, um die Soll-Lage des Gebäudes in drei Achsen, nämlich in zwei horizontalen und einer vertikalen Achse zu erhalten. Diese Schwingausführung der Horizontatabstützung ermöglicht große Beträge der Schwingweite des Gebäudes gegenüber der Basis.

Das Federungssystem, bestehend aus dem Hydraulik-Zylinder **40** und nachgeschalteten Hydraulik-Akkumulatoren wie dem Beispiel gemäß Fig.28, hat ohne äußere horizontale Verschiebekräfte durch Wind eine Anfangs-Federkennung nach der Funktion

$$F_0 = C_0 \cdot f \qquad (22)$$

wobei *f* der Federweg ist. Bei größeren Federwegen erfolgt die Kennlinie nicht linear, sondern aufgrund der Verdichtung des Gases entsprechend der Funktion einer polytropen Kompression. Bei wechselnder Verlagerung des Fundaments gegenüber dem getragenen Baukörper um den Betrag ε wird die durch die Federung entstehende Kraft $\Delta F_0$ wirksam als Beschleunigungskraft auf die Baukörpermasse. Bei Wind steigt die Abstützkraft des Systems entsprechend der Windkraft selbsttätig an, wie im Beispiel nach Fig.28 beschrieben, ohne daß der Baukörper sich wesentlich in seiner Lage verändert hat. Erfolgt nun, während eine Windlast $F_w$ abgestützt wird, gleichzeitig eine Bewegung durch Erdbeben und eine Verlagerung der Basis gegenüber dem Gebäude um den Betrag ε, so steigt die Kraft in dem Abstütz-Federungssystem an nach der Funktion

$$F_w = C_2 \cdot f + F_w \qquad (23)$$

Diese Funktion hat eine etwas höhere Steilheit als die, die vom Nullpunkt ausgeht, weil sich das Verhältnis von verdrängtem Fluid-Volumen bei Einfederung zum Gasvolumen verändert hat. Bei der Einfederung um den Betrag ε ist nun die Abstützkraft um den Wert $\Delta F_W$ angestiegen und nur diese Differenzkraft $\Delta F_W$ wirkt sich als Beschleunigungskraft auf die Gebäudemasse aus und ist nicht viel größer als die Kraft $\Delta F_0$ bei Windstille.

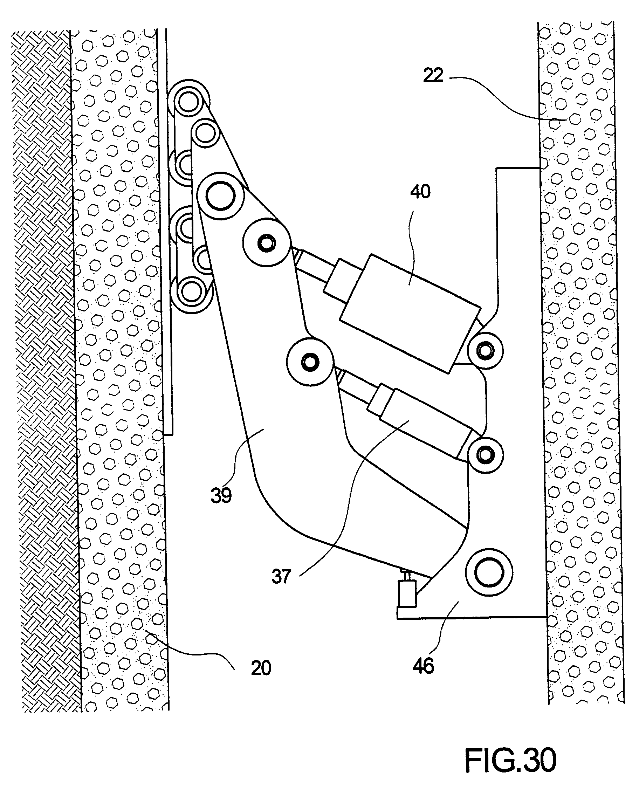

**Fig.30** stellt im wesentlichen eine gleiche Horizontalabstützung über eine Schwinge dar, wie sie für Fig.29 beschrieben ist. Diese Vorrichtung ist zusätzlich ausgerüstet mit einer Kolbenpumpe, die zwischen der Schwinge **39** und dem Gestell **46** angeordnet ist wie der Zylinder **40**. Die Kolbenpumpe **37** hat die gleiche Funktion, wie sie bei der Vorrichtung gemäß Fig.28 beschrieben ist.

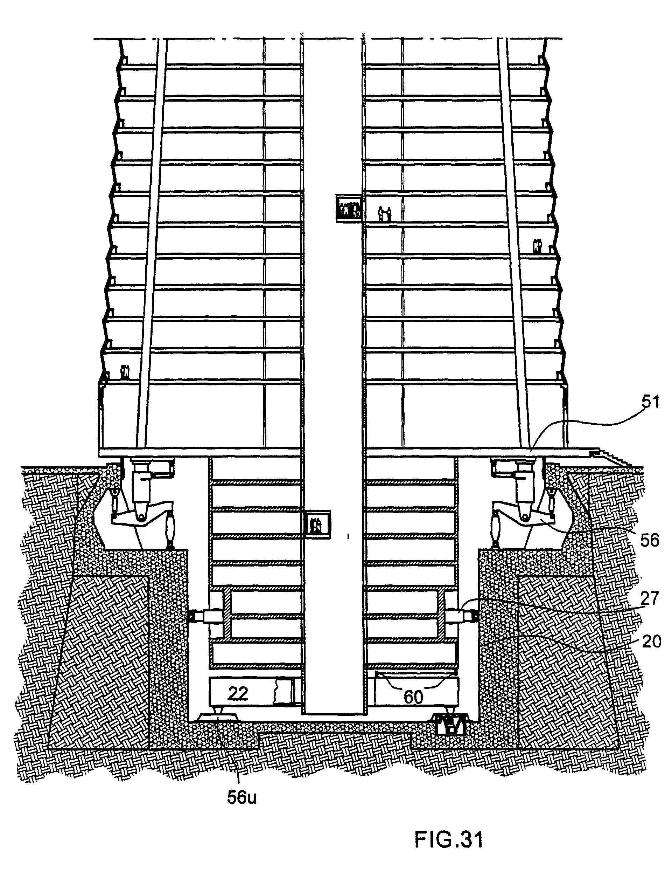

**FIG.31** zeigt das Prinzip eines Zentrier- und Windkraftkompensations-Systems, bei dem unter den Untergeschossen eines Gebäudes **51,** das von Erdbebenschutz-Modulen **56** gestützt wird und das gegenüber der Fundamentwand **20** gegen Windkraft durch Zentrierung und Windkraft-Haltevorrichtungen **27** horizontal abgestützt wird, ein separater Gebäudeteil mit einem oder mehreren Untergeschossen **22** von dem oberen Gebäude getrennt auf eigenen Erdbebenschutz-Modulen **56** vertikal gestützt wird.

Da dieser Gebäudeteil **22** besonders reibungsarm und setbstzentrierend gelagert und keiner Winddrift ausgesetzt ist, benötigt er auch keine Windkraft-Haltevorrichtung, ist immer in seiner Mittelstellung auch bei schwingender Basis und dient als Lage-Referenz für die Zentrierung. Durch mechanische oder berührungslose Distanzmessung in zwei Achsen zwischen jeweils zwei Referenzpunkten **60** am jeweils oberen und unteren Gebäudeteil wird die Stellgröße für die Regelung der Windkraft-Haltevorrichtung **27** ermittelt.

4.6 Vertikale Schwingungsisolation des gestützten Objekts

Für Bauwerke mit einem bestimmten Verhältnis der Höhe zur Breite, bei denen keine gravierende Kippneigung der Gebäude-Hochachse besteht, kann eine zusätzliche Einrichtung vorgesehen werden, um vertikale Beschleunigungen zu reduzieren oder weitgehend zu eliminieren.

Dies wäre vorteilhaft bei Krankenhäusern und Industrieeinrichtungen mit empfindlichen Produktionsprozessen und bei Chemie- und Nuklearanlagen.

Ein mit dieser Technologie gestütztes Gebäude bleibt nahezu still im Raum stehen.

Die Massenträgheit des Gebäudes gegenüber den Beschleunigungen der horizontal schwingenden Basis ruft als Reaktion Schubkräfte in der Gebäudestruktur hervor, die bei Erdbeben häufig zur Überschreitung der in den Baustoffen ertragbaren Schubspannungen führen. Die durch die Horizontalschwingungen bedingten Scherkräfte sind hauptsächlich Ursache für das Versagen der Gebäudestruktur. Dagegen werden vertikale Beschleunigungen von einem Gebäude eher, ohne Schaden zu nehmen, ertragen, weil bei der Festigkeitsauslegung eines Gebäudes den statischen Eigen- und Betriebslasten über einen Sicherheitsfaktor oder Werkstoff-Anstrengungsgrad ein Lastvielfaches hinzugerechnet wird. Somit resultiert aus der Vertikalbeschleunigung der Basis im allgemeinen keine Strukturgefährdung, es sei denn, daß bei Überschreiten von 1g-Vertikalbeschleunigung bei ungenügender Befestigung das Objekt aus seiner Fundamentverankerung gerissen wird und durch weitere Einflüsse geschädigt wird.

Wird dennoch eine vertikale Schwingungsdämpfung als zweckmäßig erachtet, so kann das Erdbebenschutz-Modul mit einer zusätzlichen Vertikal-Federung ausgerüstet werden.

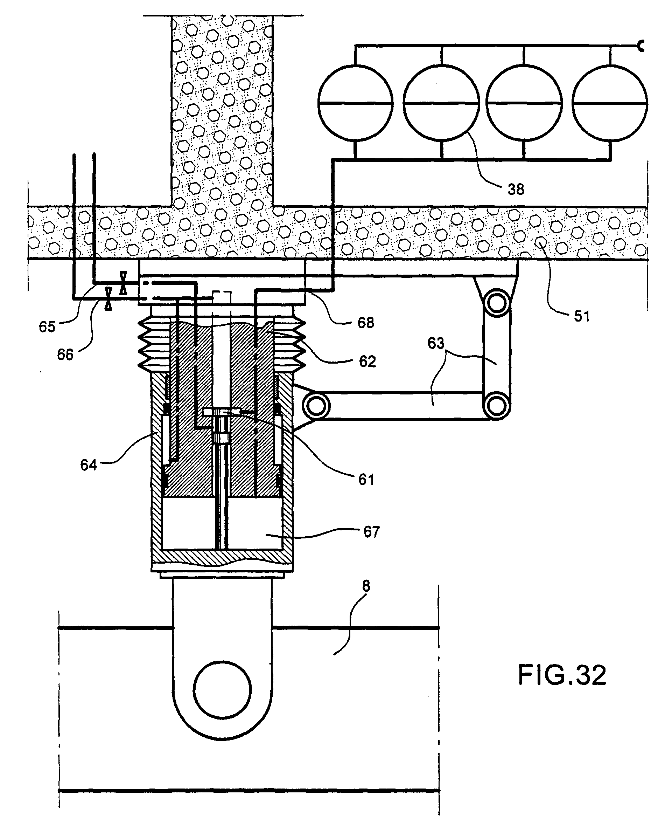

**FIG.32** zeigt schematisch ein Beispiel einer Federung der getragenen Gebäudestruktur **51.** Die Gebäudestütze **16** ist als Hydraulikzylinder **64** mit integriertem Niveauregelschieber **61** ausgebildet und trägt auf der Kolbenstange **62** die Traglast. Am unteren Ende des Zylinders ist das Koppelelement **8** des Erdbebenschutz-Moduls einachsig gelenkig gelagert. Die Schwinghebel **63** wirken als Drehsicherung für den auf- und abgleitenden Zylinder **64,** damit das Koppelelement **8** keine Drehung um die Vertikalachse machen kann.

Der Zufluß des Fluids erfolgt über den Druckanschluß **65**, über den Rückfluß **66** wird der Fluid-Kreis der Federungsstütze entlastet. Der Zylinderdruckraum **67** ist über den Leitungsanschluß **68** mit einem oder mehreren Hydraulik-Druckspeichern **38** verbunden. Mit dem Volumen der Hydraulik-Druckspeicher wird die hydropneumatische Federkennung bestimmt.

Wenn über dem Hub des Zylinders durch eine Vertikalbewegung der Basis das Volumen des im Zylinder verdrängten Fluids im Verhältnis zum Volumen im Hydro-Druckspeicher gering ist, so steigt der Druck im Hydraulik-Druckspeicher nur gering an.

Der Quotient aus Druckanstieg zum Ausgangsdruck stellt den Beschleunigungsgrad bezogen auf 1g dar, mit dem die getragene Masse eine Vertikalbeschleunigung bei vertikalen Bodenbewegungen erfährt. Durch entsprechende Auslegung kann so jede gewünschte Beschleunigungs-Reduzierung erreicht werden. Besonders vorteilhaft lassen sich mit viskoelastischen Fluids sehr flache Federungskennungen erzielen.

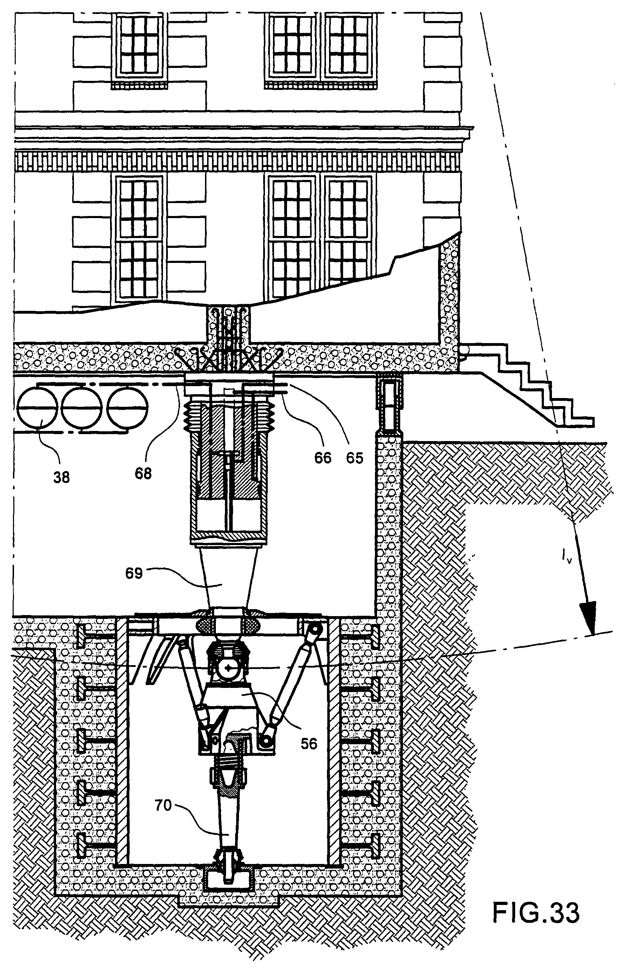

**FIG.33** zeigt eine der Ausführung nach FIG.32 vergleichbare Vertikalfederung, nur daß hier die Federstütze 69 auf einem Erdbebenschutz-Modul **56** nach dem Schema gemäß FIG.21 gestützt ist, in das eine Zentrier- und Windkraft-Abstützvorrichtung 70 nach dem Schema gemäß FIG.25 integriert ist. Die Hydraulik-Anschlüsse **65, 66,** und **68** sind wie im Beispiel nach FIG.32 Zu- und Rückfluß für das Fluid sowie die Verbindung zu Hydraulik-Druckspeichem **38.**

4.7 Erdbebensicherung von Objekten auf Pfählen durch virtuelle Pendel

Objekte wie Beleuchtungskörper oder Anzeigetafeln auf Masten oder Pfählen laufen bei starken horizontalen Bodenschwingungen Gefahr abzuknicken oder abzubrechen, da Bewegungsverstärkung und Zunahme von maximaler Beschleunigung durch Schwingungsresonanz entstehen kann.

Während die Basis bei Bodenschwingungen in horizontaler und vertikaler Richtung im wesentlichen in ihrer Lage der Ausgangslage parallel bleibt, so erfährt das obere Ende eines Pfahles oder Mastes als Basis eines Objekts oder eines Erdbebenschutz-Moduls eine zusätzliche Bewegungsachse durch Biegung des Pfahls und eine Neigung der erhöhten Basis durch Schiefstellung, wie.

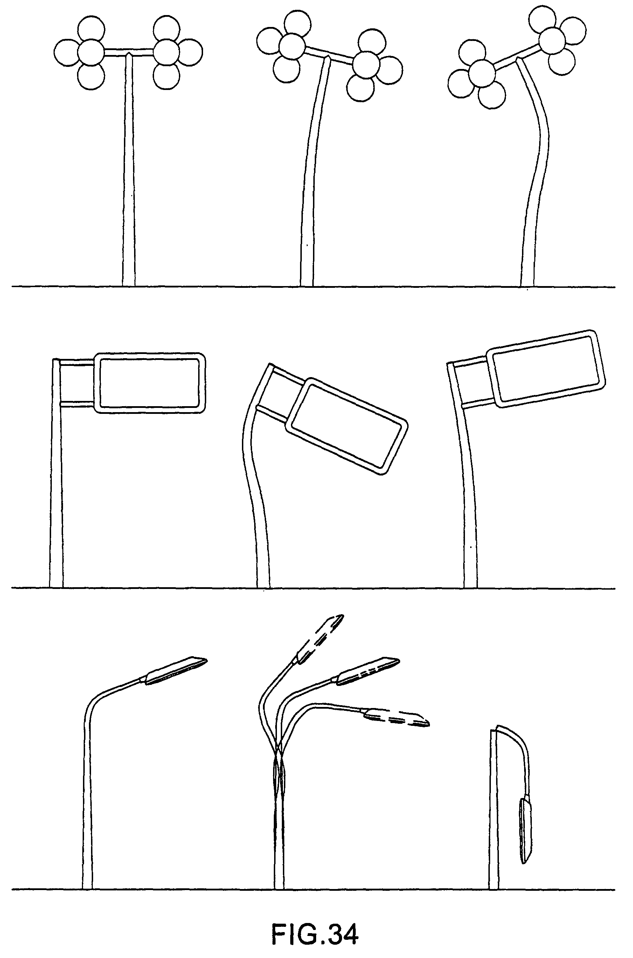

**FIG. 34** dies veranschaulicht. Die Größe der an der Mastspitze getragenen Masse hat einen starken Einfluß auf das Schwingverhalten des Mastes. Das Biegemoment aus der Massenreaktionskraft bei Horizontal-Beschleunigung ist bei Masten ohne Toplast geringer und nur durch die eigene Masse verursacht, die Biegung und der Neigungswinkel des oberen Ende des Mastes werden geringer.

Wird zwischen Mastende und getragenem Objekt ein Erdbebenschutz-Modul angeordnet, so wird die Mastspitze nur noch zusätzlich durch die Masse des Erdbebenschutz-Moduls belastet, die wesentlich geringer sein kann als die Masse des getragenen Objekts. Der Biegewinkel des Mastendes wird dadurch geringer.

Damit das getragene Objekt nicht der noch vorhandenen Neigungsänderung des Mastendes ausgesetzt wird, weil ein dadurch bedingtes Schütteln um eine Kippachse das Objekt dennoch gefährden oder funktionsuntüchtig machen kann, muß auch die restliche Neigungsänderung durch ein Erdbebenschutz-Modul kompensiert oder wenigstens weitgehend verringert werden.

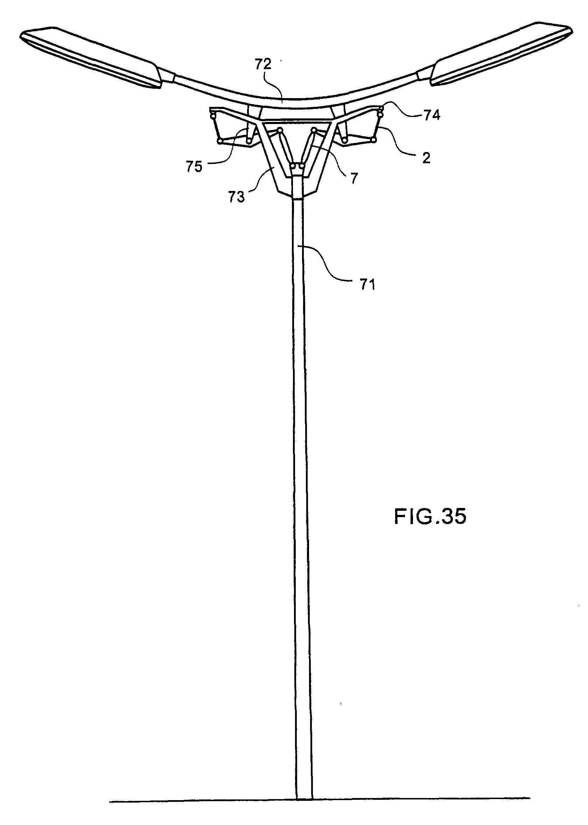

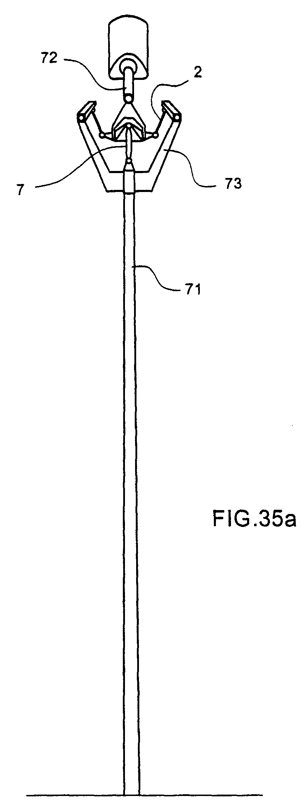

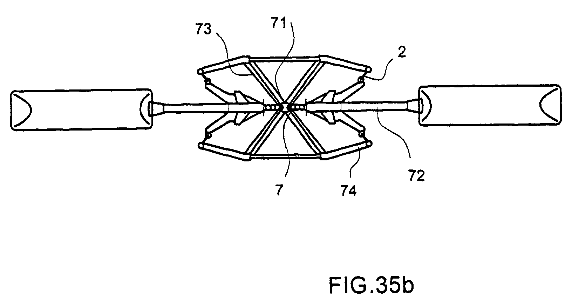

**FIG.35** zeigt die Lateralansicht und einen Teilschnitt einer Erdbebenschutz-Vorrichtung am oberen Ende des Mastes **71.** Die Vorrichtung stützt den Träger **72,** der zur Aufnahme von z.B. Beleuchtungskörpern dienen kann.

**FIG.35a** stellt einen Querschnitt zur Fig.35 dar und

**FIG.35b** zeigt die Draufsicht.

Der Mast trägt am oberen Ende vier Tragarme **73,** von denen je zwei Arme einen Holm **74** tragen, an deren vier Enden jeweils ein hängendes Pendel **2** zweiachsig gelenkig befestigt ist.

Der Träger **72** wird über zwei Stützen **75** auf zwei Koppelelementen **8** einachsig gelenkig gelagert. Die Koppelelemente **8** hängen zweiachsig gelenkig gelagert an zwei Pendeln **2** und werden an einem dritten Punkt zweiachsig gelenkig gelagert von einem stehenden Pendel **7** gestützt, das mit seinem unteren Ende zweiachsig gelenkig auf dem oberen Ende des Mastes gelagert ist. Die Stützelemente, Pendel **2** und Pendel **7** sind räumlich geneigt so angeordnet, daß bei Neigung der Achse des oberen Mastendes von der Vertikalen weg der Träger **72** in etwa in waagerechter Position bleibt. Durch Schwingungsentkopplung des Trägers **72** mit seinen Traglasten von der von der Basis angeregten Schwingung des Mastes wirken die getragenen Massen nicht mit Reaktionskräften auf den Mast zurück und vermindern seine Belastung.

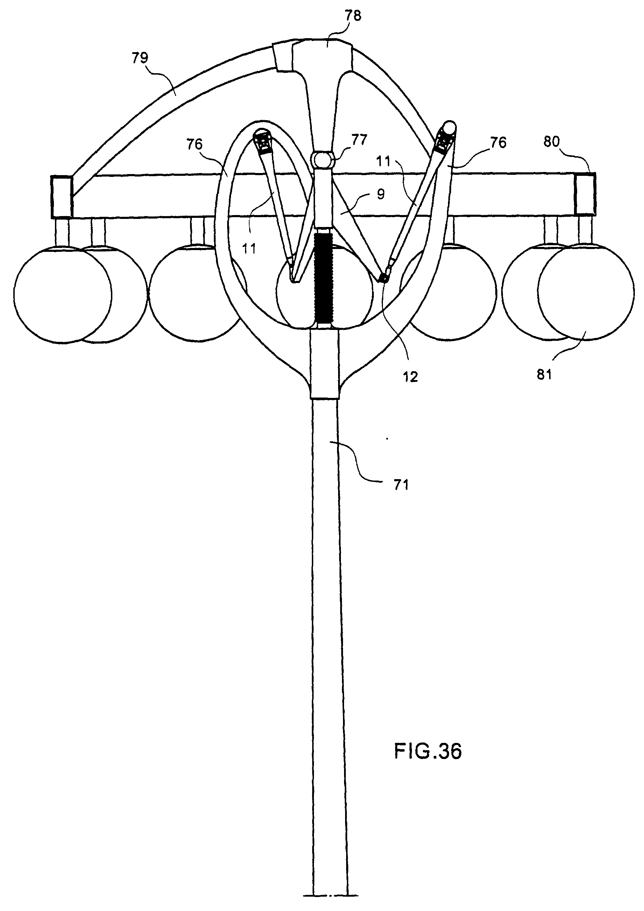

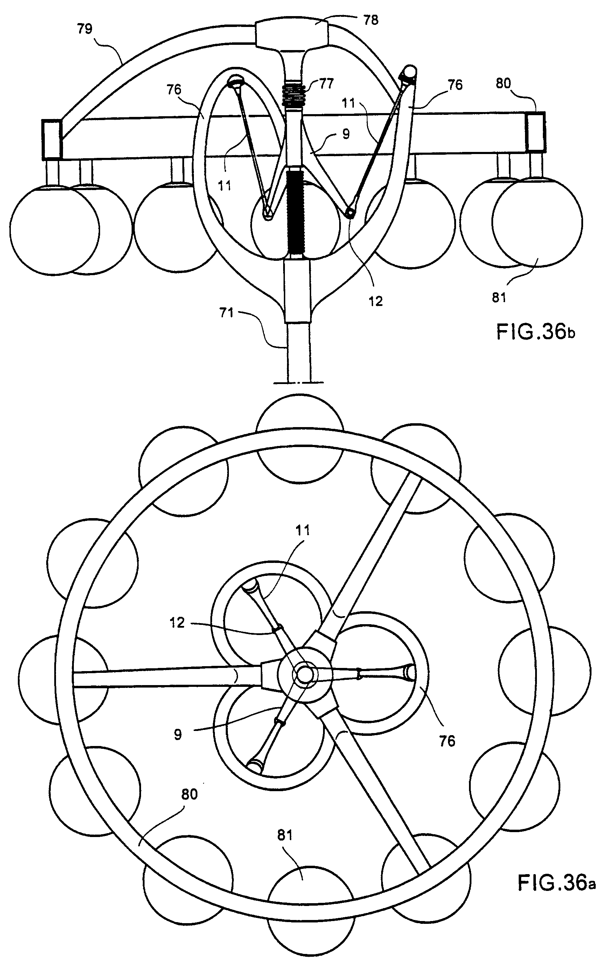

**FIG.36** stellt eine Schwingungsisolation zum Erdbebenschutz für eine Beleuchtungseinheit auf einem Pfahl **71** dar, bei dem ein virtuelles Pendel nach dem Prinzip gemäß schematischer Darstellung in FIG.21 Verwendung findet.

Am oberen Pfahlende sind drei Haltearme **76** in diesem Beispiel in Form eines Ringes, die jeweils am oberen Scheitelpunkt an einem zweiachsig gelenkigen Lager ein Stützelement **11,** ein schräg angeordnetes Pendel tragen. Am unteren Gelenkpunkt **12** wird ein Koppelelement **9** gestützt, das in vertikaler Draufsicht FIG.36a als dreistrahliger Stern erscheint. Das Koppelelement **9** trägt an seiner Spitze in einer kardanischen Lagerung **77** einen Stützkörper **78,** an dem drei oder mehr Speichen **79** angeordnet sind, die mit einem Ring 80 verbunden sind, der mehrere Lampen 81 trägt.

Die Pendel **9** können auch wie in FIG.36b als Seil **83** ausgeführt sein.

Ein elastisches Wellrohr stellt die elektrische Durchführung für die Verbindung zwischen Pfahl **71** und Lampen **81** her.

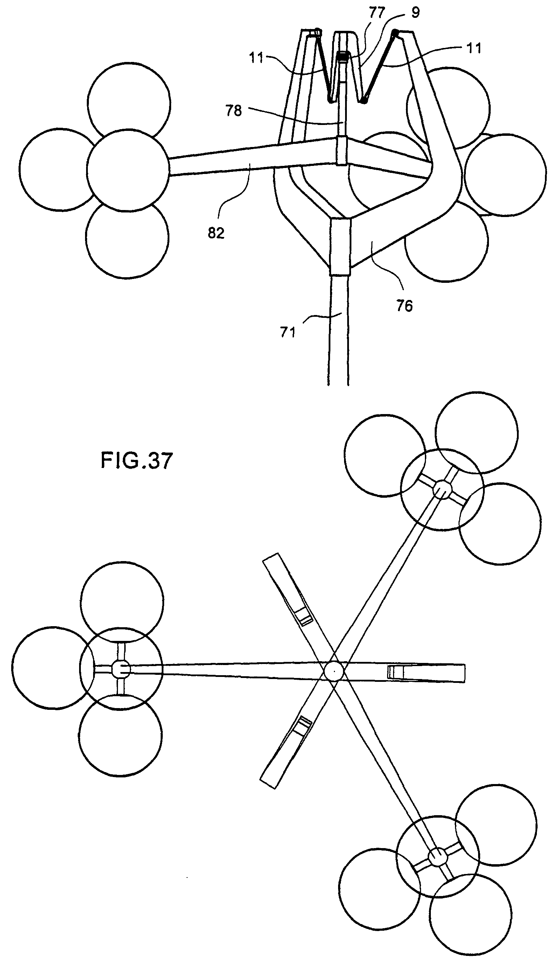

**FIG.37** zeigt ein zweites Beispiel der Anwendung eines virtuellen Pendels nach dem in FIG.21 dargestellten Prinzip für die Schwingungsentkoppelung eines Lampenträgers **82** vom schwingenden Pfahl **71,** dessen Eigenschwingung der Basisschwingung des Bodens überlagert ist.

Der Pfahl **71** trägt am oberen Ende drei Haltearme **76** an denen jeweils Pendel **11** entweder als starres Stützelement mit zweiachsig gelenkigen Lagern an beiden Enden gestaltet oder als einfache Seilstruktur ausgebildet, ein Koppelelement **9** in Form eines Dreibeins tragen, das an einer kardanischen Lagerung **77** einen hängenden Stützkörper **78** trägt, der fest mit drei Haltearmen **76** als Lampenträger verbunden ist.

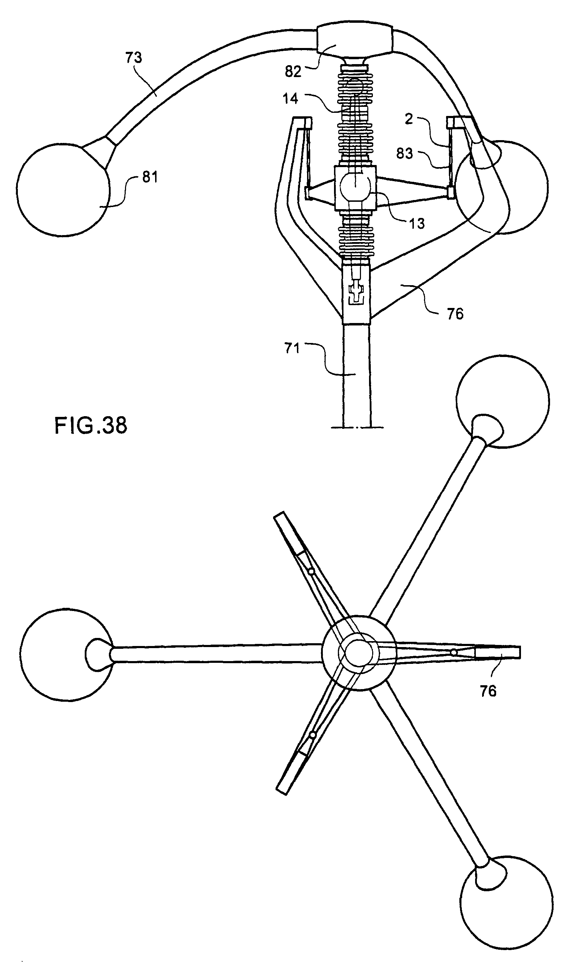

**FIG.38** Bei dieser Ausführung einer schwingungsentkoppelten Lagerung einer Lampengruppe auf einem Pfahl wird ein virtuelles Pendel benützt, das auf dem Prinzip nach FIG.23 beruht. Drei oder mehr Haltearme **76** am oberen Ende des Pfahls **71** tragen mit Seilen **83** oder alternativ mit Pendeln mit beidendig kardanischen Lagern ein Koppelelement **8** mit stemförmig angeordneten Tragarmen **73** entsprechend der Anzahl der Pendel.

Im Zentrum **13** des Koppelelements **8** ist das vertikale Stützelement **14** kardanisch gelagert. Das untere Ende des Stützelements **14** ist im Pfahl **71** radial abgestützt zweiachsig gelenkig und axial verschiebbar gelagert.

Im oberen Ende des Stützelements **14** ist in einer kardanischen Lagerung ein Lampenträger **82** mit mehreren Tragarmen **73** zur Halterung von Lampen **81** gelagert.

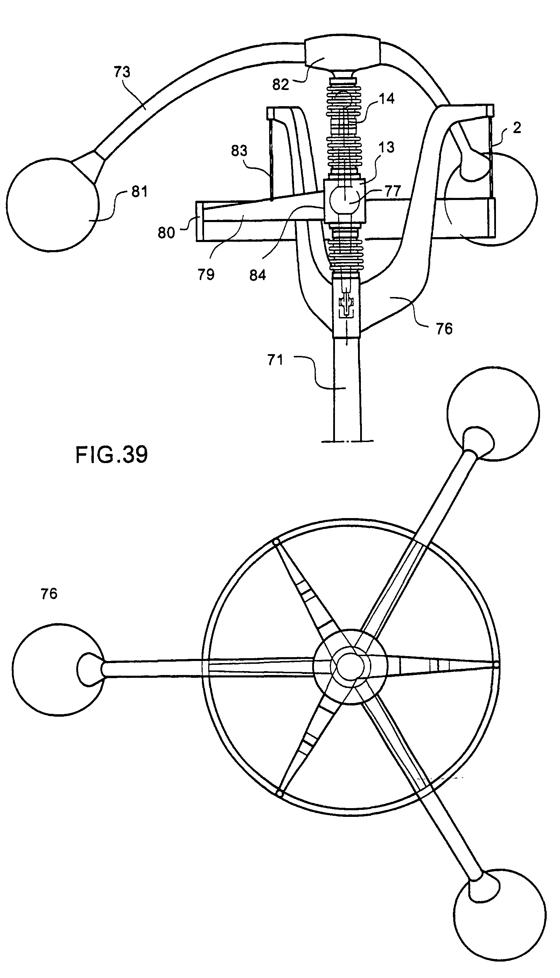

**FIG.39** zeigt eine Variante mit der Anwendung des gleichen Prinzips wie im Beispiel nach FIG.38. Hierbei sind die Haltearme 76 innerhalb der Anordnung der Pendel positioniert. Die Pendel aus Seilen **83** oder Pendel mit beidendigen zweiachsig schwenkbaren Gelenken tragen einen Ring **80,** der über Speichen **79** im Zentrum des Rings eine Nabe **84** trägt, in der in einer kardanischen Lagerung **77** das vertikale Stützelement **14** gehalten ist. Im übrigen entspricht die Ausführung der des Beispiels in FIG.38.

4.8 Erdbebensicherung von hängenden Objekten durch virtuelle Pendel

Hängende Objekte an Gebäudedecken, wie z.B. Lampen, Schau- und Anzeigetafeln geraten bei Gebäudeschwingungen ebenfalls ins Schwingen. Hängende Objekte stellen selbst Pendel dar und haben bei üblichen Dimensionen die Möglichkeit in Resonanzschwingung zu geraten. Die Schwingausschläge werden groß, die Objekte können an der Decke anschlagen, beschädigt oder zerstört werden und mitunter abreißen: Die Gefährdung durch hängende elektrische Objekte besteht in der Gefahr, durch elektrische Kurzschlüsse, Brände auszulösen. Schwere hängende Objekte, wie große Lüster in Sälen und Hallen stellen bei Abreißen auch eine Gefährdung für Personen dar.

Bei bestehenden Gebäuden, kann es daher auch sinnvoll sein, solchen hängenden Objekten das Gefährdungspotential zu nehmen, indem man sie an virtuellen Pendeln aufhängt.

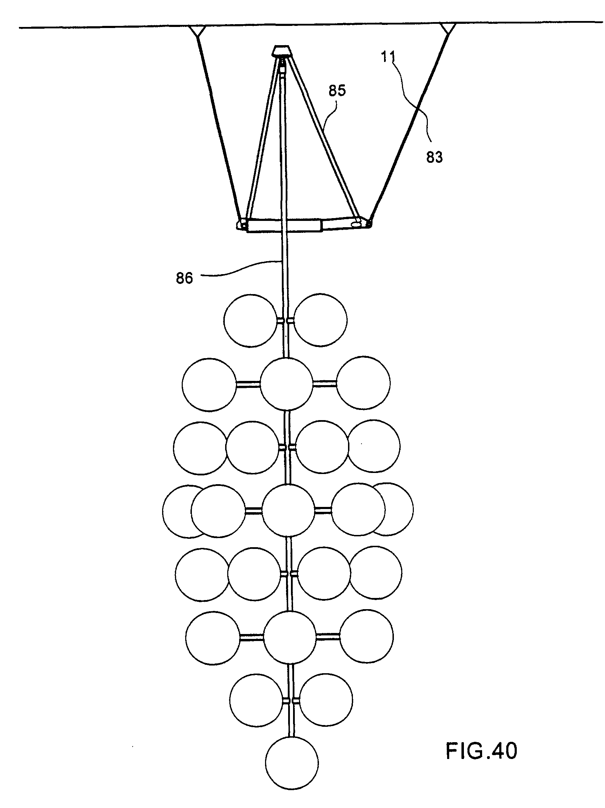

**FIG.40** zeigt die Aufhängung einer Beleuchtungseinheit an einem virtuellen Pendel nach dem Prinzip gemäß FIG.21.

An drei an der Raumdecke an Eckpunkten eines gleichseitigen Dreiecks befestigten Seilen **83** (Kabeln), die schräg dem gemeinsamen Zentrum nach unten sich nähernd geneigt angeordnet sind, wird ein Rohrgestell in Form einer dreiseitigen umgedrehten Pyramide **85** getragen. in der Spitze der Pyramide ist zweiachsig gelenkig, in einfachster Form mittels zweier ineinander verketteten Ringe eine Stange **86** als Träger von Lampen aufgehängt.

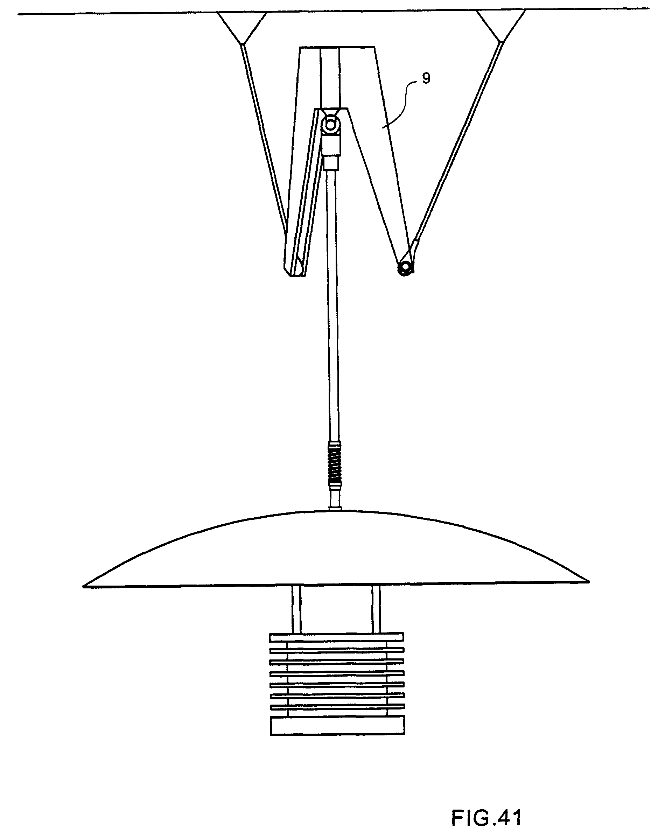

**FIG.41** zeigt eine Lampe, an einem virtuellen Pendel großer Länge hängend, vergleichbar mit dem Beispiel nach FIG.40. Hierbei besteht das Koppelelement **9** aus drei Haltearmen **76,** die die Kanten einer dreiseitigen Pyramide bilden.

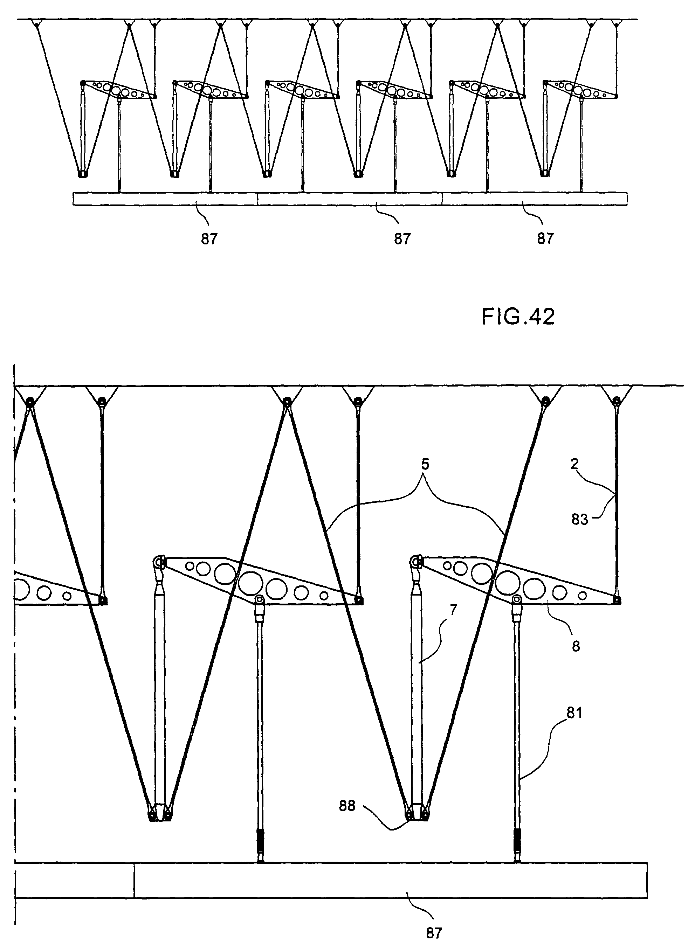

**FIG.42** Die Leuchten **87** sind in Reihe an jeweils zwei virtuellen Pendeln nach dem Schema gemäß FIG.11 aufgehängt. Das stabile Stützelement **2** ist ein an der Decke aufgehängtes Pendel in Form eines zweiachsig gelenkig befestigten Stabes, Seils oder Kette und stützt ein Ende des Koppelelements **8**. Eine Tragstruktur **5** aus vier Gliedern in Form von Stäben, Seilen oder Ketten, die an der Decke befestigt, wie die Kanten einer umgedreht hängenden Pyramide angeordnet sind, bilden den Stützpunkt **88** für den unteren zweiachsig gelenkigen Lagerpunkt des instabilen Stützelements **7**, das am oberen Ende zweiachsig gelenkig mit dem anderen Ende des Koppelelements **8** verbunden ist. Am Koppelelement **8** hängt einachsig gelenkig gelagert die Laststütze **89,** an der vertikal federnd die Leuchte **87** aufgehängt ist.

### 4.9 Schwingungstilgung durch Massen an virtuellen Pendeln

Hochhäuser, schlanke Türme, hohe Masten und Kamine werden durch Erdbeben und starken Wind zu Querschwingungen angeregt, die kritische Auswirkungen haben können. Um die mit der Verformung einhergehenden Ausschlagspannungen zu mindern und Materialermüdung vorzubeugen, werden sehr wirkungsvoll Schwingungstilger benutzt, die Schwingweite zu verringern. Hierbei werden Zusatzmassen am Kopf des Bauwerks oder bei schlanken Kaminen und abgespannten Masten an Stellen, wo die größten Schwingamplituden auftreten, eigenschwingfähig angeordnet und mit dem Gebäude über federnde Stützglieder und Dämpfer verbunden oder durch aktive Systeme bewegt, um über die Antriebsreaktionskräfte der Zusatzmasse der Schwingungstilger der Eigenbewegung des Gebäudes entgegenzuwirken.

Für die Stützung dieser Zusatzmassen lassen sich virtuelle Pendel vorteilhaft einsetzen. Bei geringstem Raumbedarf lassen sich virtuelle Pendel in einfacher Weise für jede gewünschte Eigenfrequenz der gestützten Tilger-Masse durch freie Wahl der Auslegungsparameter-Relationen gestalten.

Bei aktiv angetriebenen Schwingungstilgern ist bei Verwendung virtueller Pendel die sehr geringe Reibung der Masse-Aufhängung und die beliebig gestaltbare Eigenschwing-Periode von Vorteil.

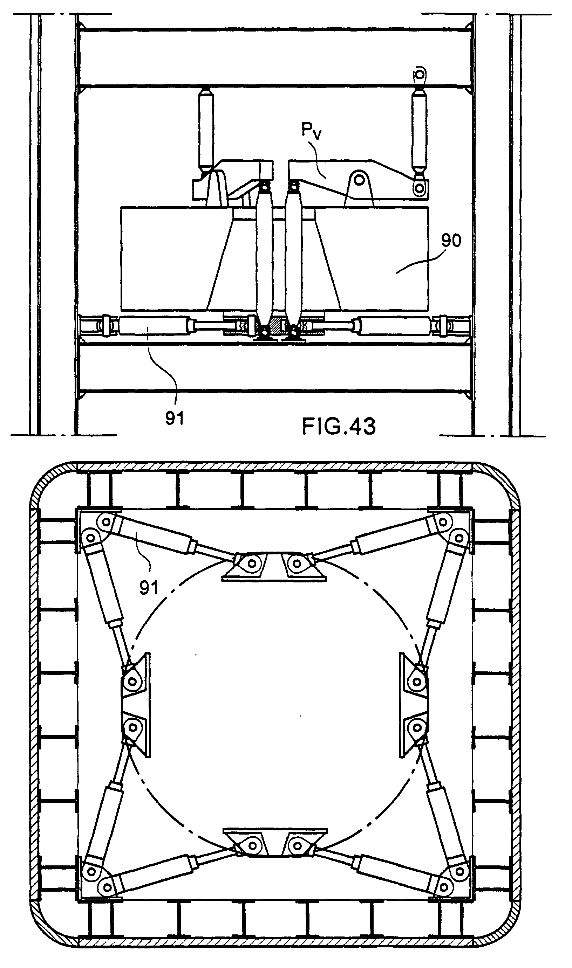

**FIG.43** stellt einen passiven Schwingungstilger in einem Turm dar. Drei virtuelle Pendel $P_V$ nach dem Prinzip entsprechend FIG.11 stützen die Tilger-Masse **90.** Federnde Dämpfer **91** stützen die Masse horizontal gegen die Gebäudemasse ab.

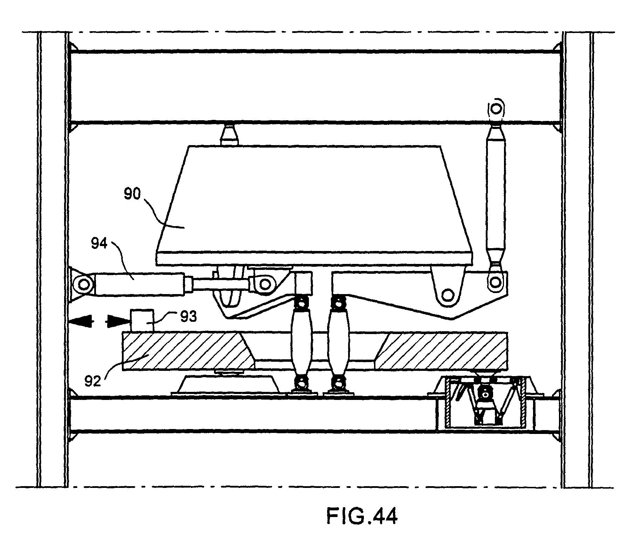

**FIG.44** Das dargestellte aktive Schwingungstilger-System besteht aus der Tilger-Masse **90**, die von drei virtuellen Pendeln $P_V$ nach dem Prinzip entsprechend FIG.11 gestützt wird. Die Referenz-Masse **92** ist auf drei virtuellen Pendeln gestützt nach dem Prinzip entsprechend FIG.21, die sehr reibungsarm und mit geringer Mittellage-Hysterese und sehr langer Eigenschwing-Periode ausgelegt sind.

Sensoren **93** für die Lageerfassung der weitgehend in beiden Horizontalachsen von der Bewegung der Gebäudestruktur abgekoppelten Referenz-Masse **92** in Bezug auf die Gebäudelage liefert über eine Regelung die Stellgröße für die Bewegung der Tilger-Masse 90 über Aktuatoren 94.

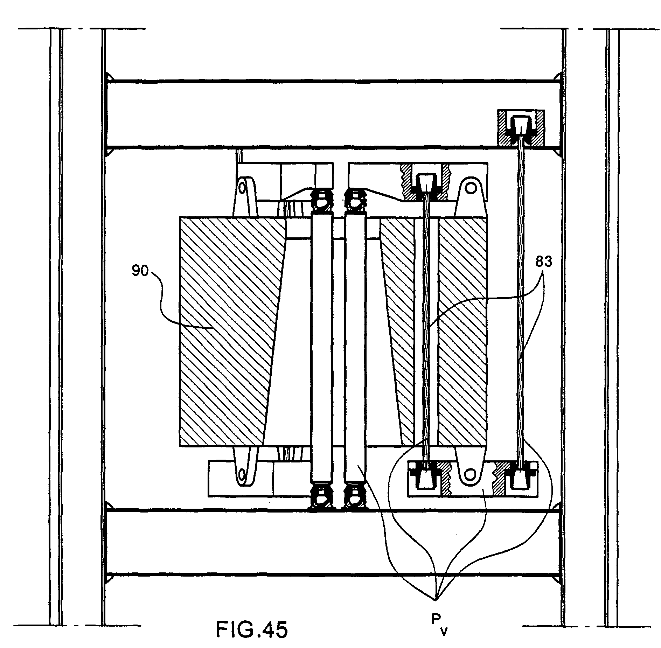

**FIG.45** zeigt das Schwingungstilger-System mit Stützung der Tilger-Masse **90** durch drei virtuelle Pendel $P_V$ nach dem Prinzip entsprechend FIG.13 wie es für ein aktives oder auch passives System Verwendung finden kann. Die zugbelasteten Stützelemente sind in diesem Beispiel mit Seilen ausgeführt.

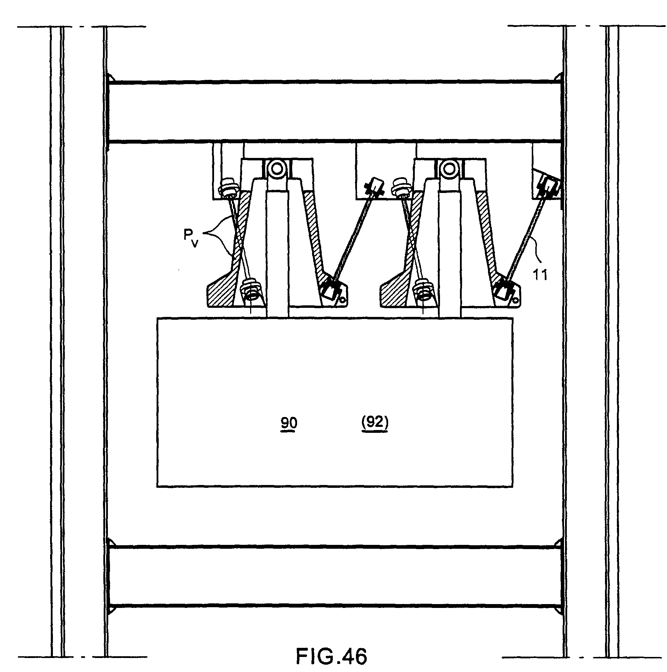

FIG.46 zeigt die Stützung der Tilger-Masse 90 oder Referenz-Masse **92** bei einem aktiven System auf drei virtuelle Pendel $P_V$ nach dem Prinzip entsprechend FIG.21. Die stabilen Stützelemente **11** sind in diesem Beispiel als Seilstruktur ausgeführt.

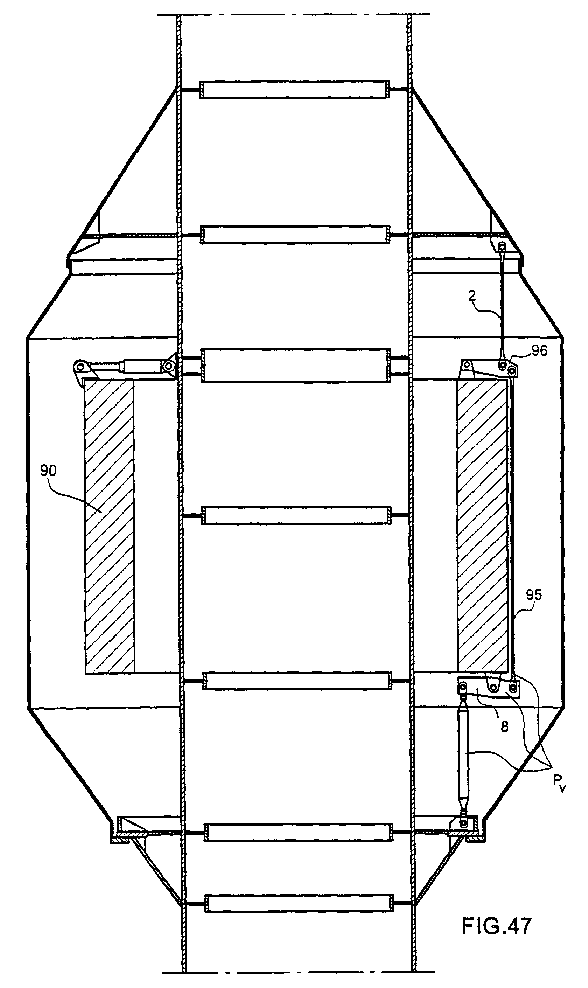

**FIG.47** Bei dem Schwingungstilger-System für Rohr-Masten ist die Tilger-Masse **90** in Form eines Rings außerhalb des Mastes angeordnet und durch drei virtuelle Pendel $P_V$ nach dem Prinzip entsprechend FIG.11 gestützt.

Das stabile Stützelement, Pendel **2** greift nicht direkt an dem Koppelelement **8** an, sondern wird durch eine nicht als Pendel wirksame Verlängerung **95** über einen Zwischenhebel **96** in eine höhere Ebene verlagert und spart dadurch in radialer Erstreckung in Anspruch genommenen Raum ein, was den Luftwiderstand verringert. Durch die Verkleidung **97** wird die Funktion des Schwingungstilgers nicht durch Windkräfte überlagert.

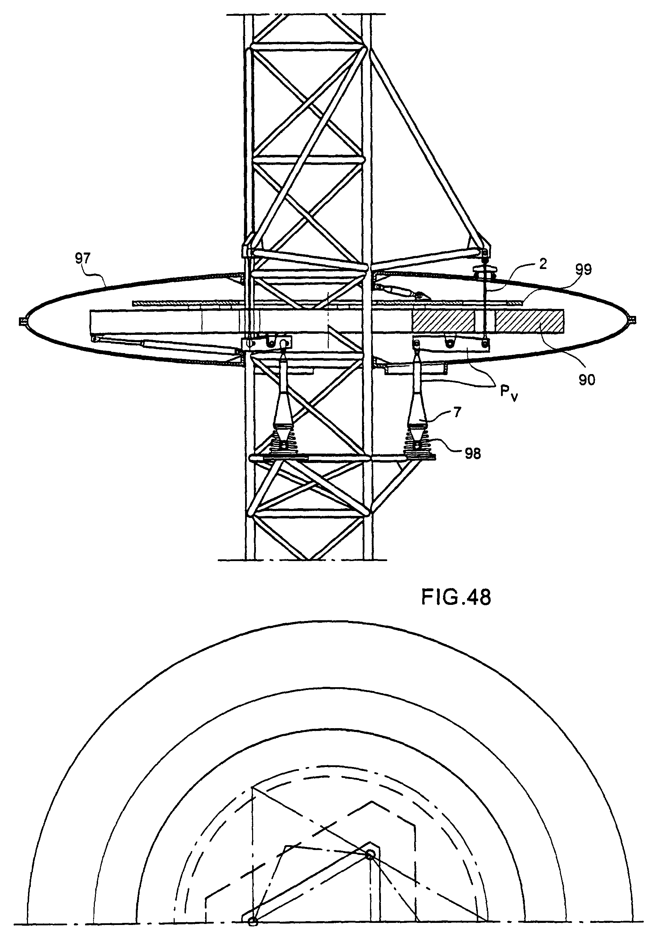

**FIG.48** Bei dem passiven Schwingungstilger-System für einen Gitter-Mast ist die Tilger-Masse **90** zur Minderung des Luftwiderstands in Form einer flachen Ring-Scheibe um den Mast herum angeordnet und durch drei virtuelle Pendel $P_v$ nach dem Prinzip entsprechend FIG.11 gestützt. Die Rückfederung erfolgt neben der Selbstzentrierung durch die virtuellen Pendel $P_v$ durch Federn **98** an dem Fußgelenk des instabilen Stützelements **7**. Die Dämpfung erfolgt durch eine Reibscheibe **99**. Die stabilen Stützelemente **2** sind als Seil ausgebildet.

Damit die Funktion nicht durch Luftkräfte beeinträchtigt wird, ist die Tilger-Struktur weitgehend durch eine aerodynamisch widerstandsarme Verkleidung **97** abgedeckt.

4.10 Verminderung der Gefahr der Bodenverflüssigung (Liquefaction)

Starke Verringerung der Gefahr der Bodenliquidierung

Bei schwingendem Boden rufen die wechselnden Momente aus der Gebäudemasse schwellende Fundamentlasten hervor, die bei bestimmten Untergründen eine Bodenerweichung und Minderung der Tragfähigkeit der Böden zur Folge haben, so daß Gebäude in den Untergrund absinken können.

Da durch virtuelle Pendel gestützte Gebäude von horizontalen Schwingungen des Bodens nahezu vollständig isoliert werden, wird die Gebäudemasse keinen horizontalen Beschleunigungen ausgesetzt, es entstehen keine Reaktionskräfte aus Kippmomenten der Gebäudemasse, so daß die Effekte, die zur Bodenerweichung führen, vermieden oder im Grenzbereich verringert werden.

Die Reaktionskräfte der Gebäudemasse verursachen unter Vibrationen bei gewissen Untergründen Boden-Verflüssigung mit fatalen Auswirkungen. Die Böden werden hochviskoses Liquid und die Gebäude kippen oder versinken im Boden. Ist die Masse des Gebäudes geringer als die Masse des Erdreichs, das von dem Volumen-Anteil des im Boden eingebetteten Bauwerks eingenommen wird, so schwimmt das Gebäude bei Liquefaction auf und erhebt sich aus dem Boden. Durch Erdbebenschutz-Module auf der Basis virtueller Pendel wird die Massen-Reaktionskraft des Gebäudes auf 3/1000 reduziert. Liquefaction wird in Grenzfällen verhindert.

Bei horizontalen Schwingungen des Bodens wird der statischen Last im Fundament ein mit der Schwingung synchron die Richtung wechselndes Kräftepaar überlagert zur Aufnahme des Gebäudekippmoments aus der Beschleunigung der Gebäudemasse.

Die wechselnde Zusatzlast an den Fundamentkanten aus der Beschleunigung der Gebäudemasse ist

$$L_a = m \cdot a \cdot \frac{h_m}{W} \qquad (24)$$

$m$ Masse des Gebäudes

$a$ Beschleunigung im Schwerpunkt des Gebäudes

$h_m$ Höhe des Schwerpunkts des Gebäudes über der Fundament-Kippkante

$W$ größter Abstand der Fundament-Kippkanten in Richtung der Bodenschwingung

Die wechselnden Bodenpressungen erzeugen in feuchten Böden eine Pumpwirkung auf das Wasser im Boden. Hierdurch wird die Haftreibung zwischen den Bodenkörpern wie Sand und Kies durch pulsierende Flotation zwischen den Körpern verringert, der Boden wird zu einem viskosen Fluid, der Boden wird zu einem Brei verflüssigt.

Gebäude können im Boden versinken und bei Unsymmetrie der Vorgänge auch umkippen.

Bei der erfindungsgemäßen Stützung von Objekten tritt die voran dargestellte Reaktionswirkung der getragenen Masse nicht auf, weil sie keiner nennenswerten Beschleunigung ausgesetzt wird. Die statischen Fundamentlasten werden nicht mit Wechsellasten aus Kippmomenten überlagert. Die Gefahr der Bodenverflüssigung wird in hohem Maße verringert.

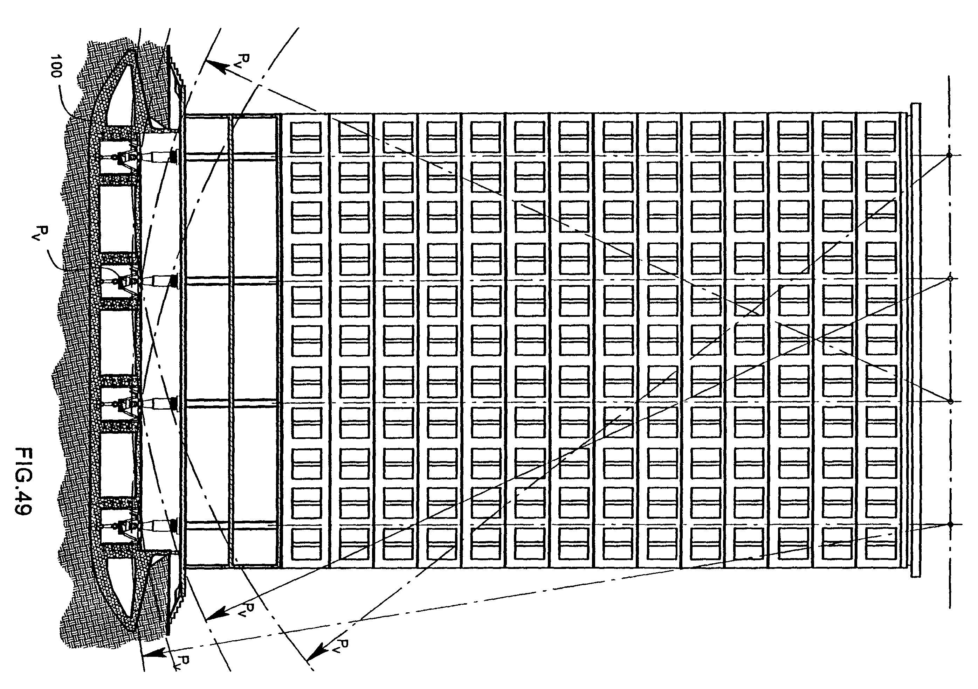

**FIG.49** Damit auch bei sehr weichen und nassen Böden die Gefahr für das durch virtuelle Pendel $P_v$ erdbebengeschützte Gebäude weiter vermindert wird, ist das Fundament als Basis für Erdbebenschutz-Module so gestaltet, daß das Volumen des im Boden eingebetteten Gebäudeunterteils entsprechend der Massedichte des örtlichen Bodens in Leichtbaugestaltung rigide gestaltet und so groß bemessen ist, daß die Masse des verdrängten Bodens der Masse des Gesamtgebäudes entspricht.

Damit die mechanischen Krafteinwirkungen auf das Fundament durch Kompressionswellen im Boden gemindert werden, ist die Fundamentunterseite 100 gekrümmt zum Rand nach außen ansteigend gestaltet.

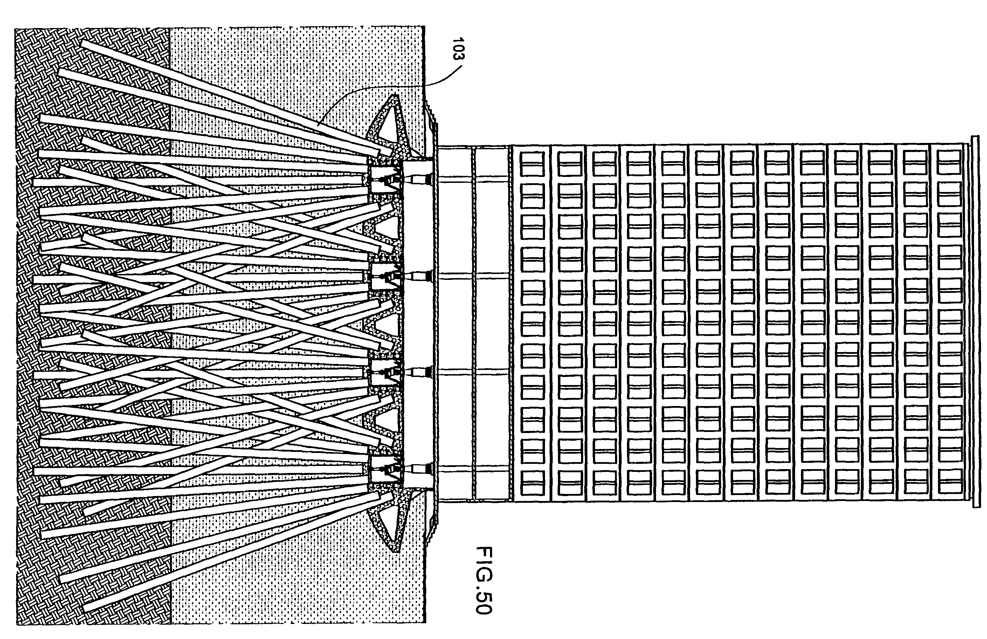

**FIG.50** Ist bei feucht weichen Böden unterhalb der Sedimentschicht in nicht zu großem Abstand festerer Boden oder Felsgrund erreichbar, so ist die Ausführung des Fundaments gemäß Darstellung entsprechend FIG.49 zusätzlich mit einer Pfahlgründung 103 ausgestattet.

4.11 Gebäudeabdichtung zwischen Basis und getragenem Objekt

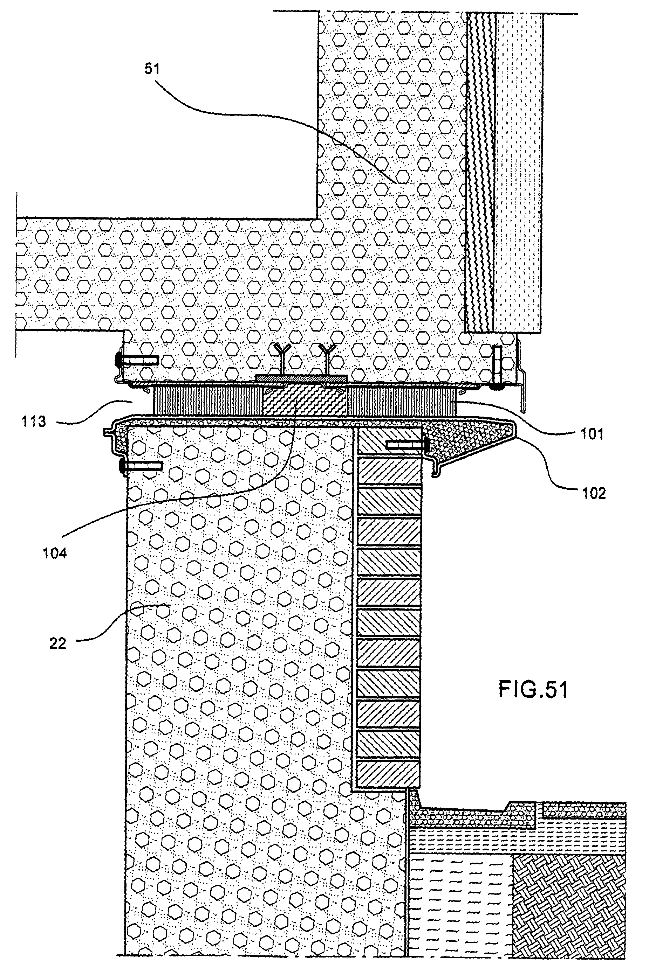

**FIG.51** Zwischen Außenwand des Untergeschosses, das im Erdreich eingebettet ist und bei Erdbeben die horizontale Schwingbewegung des Bodens mitmacht und der von Erdbebenschutz-Modulen nach dem Prinzip virtueller Pendel gestützten Gebäudestruktur 51, die auf der Stelle in Ruhelage verbleibt, ist eine Bewegungsfuge 113 vorgesehen, die jedoch keine Durchlässigkeit für Wind, Staub, Nässe und Ungeziefer haben soll.

An einer Seite der Bewegungsfuge, vorzugsweise an der Oberseite sind Drahtbürstenstreifen 101 und Zwischenräume mit gestopfter Isolierwolle 104 verfüllt. An der gegenüberliegenden Seite ist ein Gleitrahmen 102 mit abgeschrägten Kanten justierbar montiert.

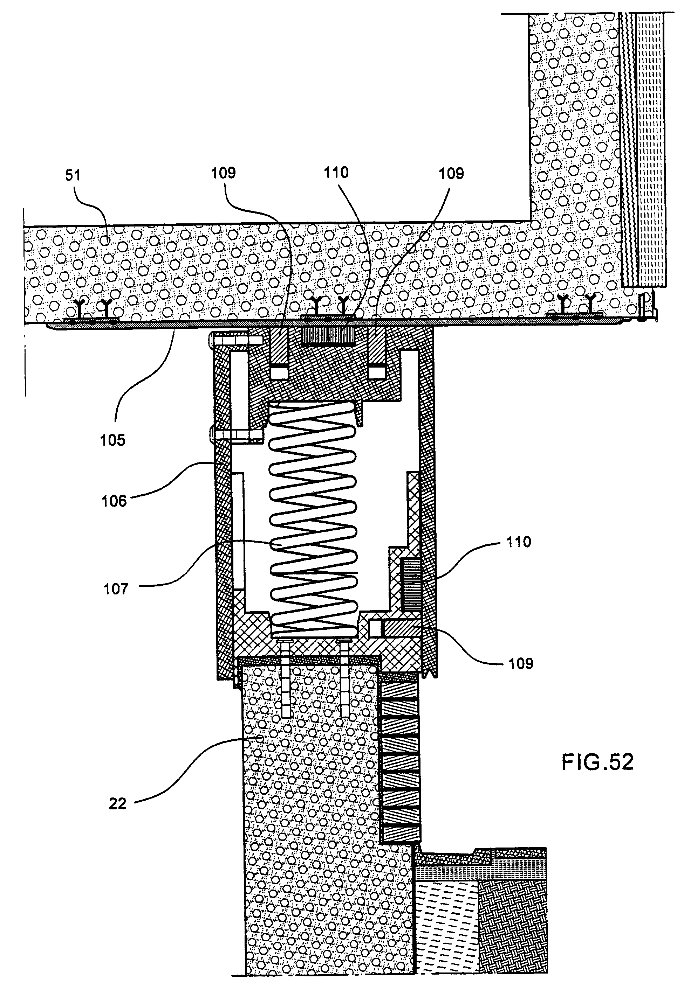

**FIG.52** Sind die Erdbebenschutz-Module zusätzlich zur Unterdrückung von Vertikalschwingungen mit einer Vertikalfederung und Dämpfung ausgerüstet, ist es notwendig, die Bewegungsfugendichtung ebenfalls mit Vertikalfederung auszurüsten.

Gegen die schwingungsisolierte Gebäudestruktur 51 oder eine zusätzliche Gleitschutzlamelle 105 wird ein U-förmiger Dichtrahmen 106 durch Federelemente 107 z.B. in Form von Schrauben- oder Blattfedern gedrückt. Der Rahmen 106 wird durch das U-förmige Unterteil 108, das mit der Gebäudeuntergeschoß-Außenwand 22 fest verbunden ist, vertikal geführt und zum Unterteil mit durch Federkraft angestellte gleitende Dichtleisten 109 abgedichtet. Der Dichtrahmen 106 wird durch vertikal nach oben durch Federn gedrückte Dichtleisten 109 und eine Stopfpackung 110 gegenüber der schwingungsisolierten Gebäudestruktur oder der Gleitschutzlamelle 105 abgedichtet.

4.12 Geringere Brandgefahr durch Verbesserung der Interface-Situation

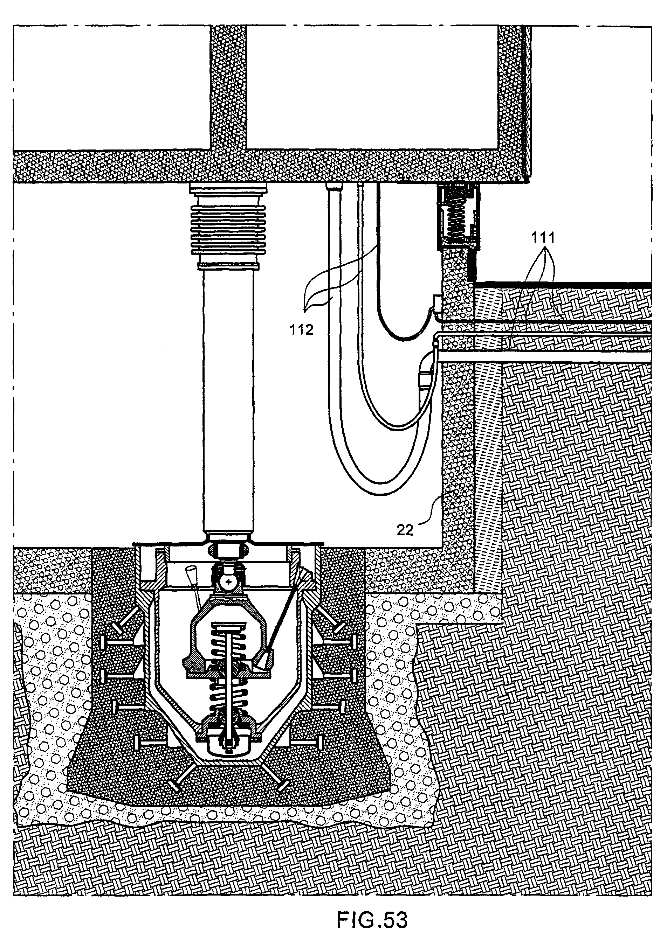

**FIG.53** Da die Gebäude-Masse beim Schwingen des Bodens horizontal im Wechsel der Frequenz beschleunigt wird, wirkt die Reaktionskraft der Masse auf den Boden über vertikale Flächen des im Erdreich eingebetteten Gebäude-Untergeschosses 22 eine Pressung aus. Abhängig von den entstehenden Flächenpressungen wird der Boden gestaucht und entlastet, es entstehen zwischen den im Erdreich liegenden Versorgungsleitungen 111 und den im Gebäude befestigten Leitungsanschlüssen Zerrungen, die zu Leitungsbrüchen führen können. Der Bruch von Gas- und Elektrofeitungen löst einen Brand durch Kurzschluß aus. Diese häufige Brandursache kann dadurch vermindert werden, daß die Stauchungen des Erdreichs und damit verbundene Zerrungen an Leitungen verringert werden, weil die Flächenpressung zum Erdreich verringert wird und die Beschleunigungs-Reaktionskraft nicht mehr aus der Masse des Gesamtgebäudes herrührt, sondern nur aus einem wesentlich geringeren Anteil, nur der Masse des Gebäude-Fundaments. Die örtliche Bruchgefahr verringert sich entsprechend.

Innerhalb des Gebäudes stellen flexible Leitungsverbindungen in hängenden U-Schleifen 112 sicher, daß bei Relativbewegung zwischen schwingender Basis und schwingungsisoliert gestützter Gebäudestruktur 51 keine Leitungsschäden entstehen.

4.13 Tolerierung von Bodenspaltbildung unter Gebäuden

Sogar im ungewöhnlichsten Fall, daß entlang einer Spalte direkt unter einem Gebäude beide Ränder sich in entgegengesetzter Richtung bewegen oder voneinander entfernen und eine offene Spalte hinterlassen, kann das System dies tolerieren, weil die Module unabhängig voneinander funktionieren und Veränderungen der Stützweite auf der Basis ausgleichen.

Das System stellt dennoch Stabilität der getragenen Struktur bereit.

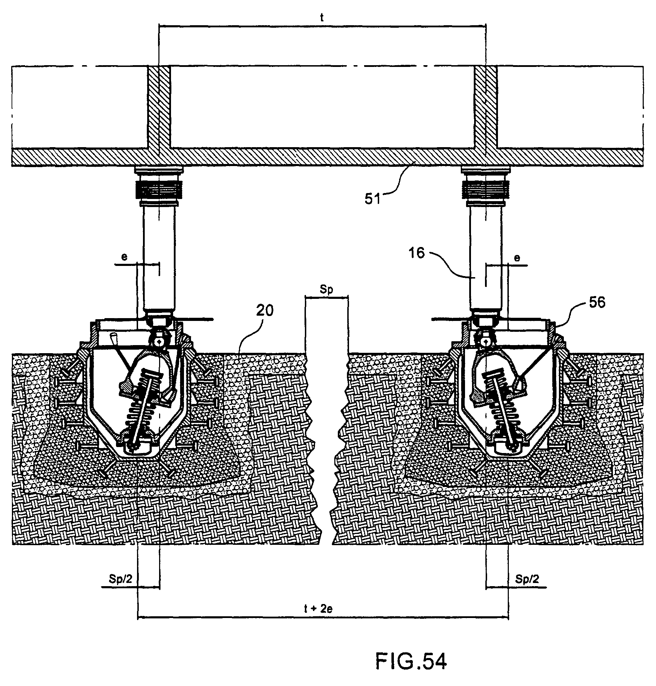

**FIG.54** Der Teilungsabstand **t** der Gebäudestützen an der getragenen Gebäudestruktur 51 ist durch feste Montage unveränderlich. Der Teilungsabstand der Erdbebenschutz-Module 56 auf dem Fundament 20 entspricht dem Teilungsabstand am Gebäudeoberteil.

Kommt es durch Erdbeben-Kompressionswellen zu einer Spaltbildung zwischen den Erdbebenschutz-Modulen 56, so vergrößert sich die Stützweite der Erdbebenschutz-Module 56 um die Spaltbreite **Sp.** Die Erdbebenschutz-Module zentrieren als virtuelle Pendel wirkend den Laststützpunkt im Zentrum seiner Schwingweite unterhalb seines virtuellen Aufhängungspunkts.

Werden die virtuellen Aufhängepunkte von zwei virtuellen Pendeln vergrößert, so nehmen die miteinander fest verbundenen Laststützpunkte eine ausgleichende Stellung ein, so daß die Abweichung vom ursprünglichen Mittellage-Punkt bei beiden virtuellen Pendeln gleich ist.

4.14 Impact-Minderung bei Explosionen

Aufgrund des geringen Verschiebewiderstandes des getragenen Objekts gegenüber der Basis kann erfindungsgemäß das Gebäude oder Objekt bei Luftkräften, welche die Staudrücke stärkster Winde übersteigen, wie sie durch Explosionen in der Nähe eines Gebäudes hervorgerufen werden können, in jeder Richtung ausweichen und somit die Wirkung der Luftkraft-Momente verringern.

Die Windkraftabstützung stellt sich automatisch auf die Windkraft ein mit einer Regelstellgrößen-Änderungsgeschwindigkeit, die den Erfordernissen der Wind kraftänderungsrate entspricht.

Ein Luftdruckanstieg aufgrund einer Explosion erfolgt in einer extrem kurzen Zeit, innerhalb der kein nennenswerter Anstieg der Abstützkraft für die Windkraftkompensation durch die selbsttätige Regelung erfolgt. Somit kann das Gebäude bei plötzlicher Beaufschlagung mit einer Druckwelle bei geringer Gegenkraft zurückweichen, was den Impulsaustausch nicht unbeträchtlich verringert.

5 Kurzbeschreibung der Zeichnungen

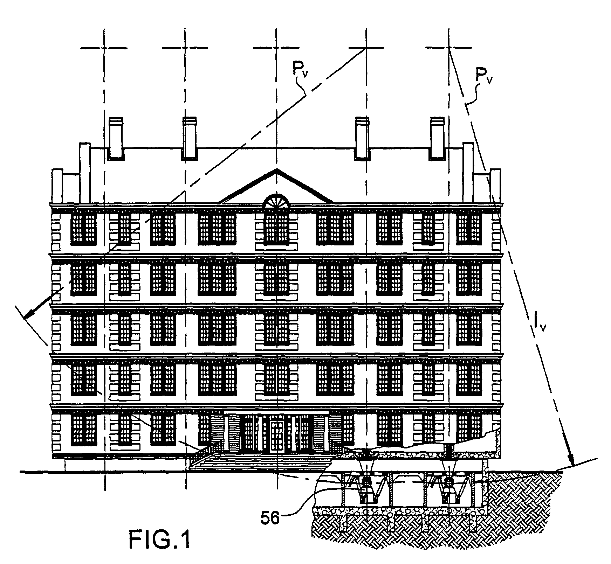

**FIG.1** ist die Darstellung eines Hauses, erfindungsgemäß gestützt auf Erdbebenschutz-Modulen, die virtuelle Pendel großer Länge darstellen mit dem Bewegungsverhalten, als wäre das Haus an langen Pendeln mit der Länge $I_v$, aufgehängt.

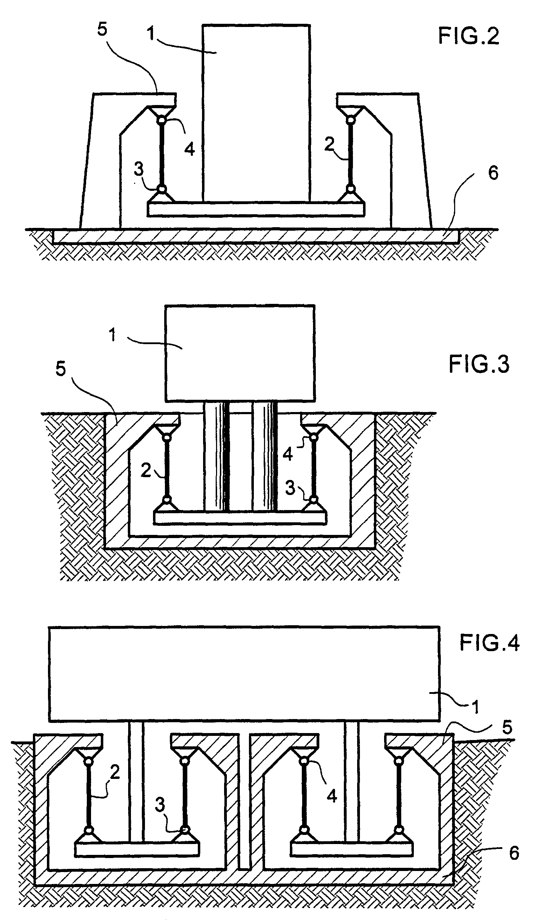

**FIG.2** - **FIG.4** zeigen Vorrichtungen zum Erdbebenschutz entsprechend dem Stand der Technik gemäß Darstellungen aus den bezogenen Schriften.

**FIG.5** veranschaulicht die schematische Darstellung und die benutzten Bezugszeichen und Funktionsgrößen eines mathematischen Pendels, wie sie im Abschnitt "Deduktion zur Lösung der sich stellenden Aufgabe" für die grundsätzlichen Betrachtungen benutzt werden.

**FIG.6** und **FIG. 7** stellen die Überlagerung von anhebender und absenkender harmonischer Bewegung dar.

**FIG.8** dient zur Erläuterung der Erfindung und zeigt in schematischer Darstellung eine Gegenüberstellung von stabilen und labilen Pendeln als Stützglieder.

**FIG.9** ist eine vereinfachte schematische Darstellung eines Beispiels für eine Vorrichtung, die ein virtuelles Pendel großer Länge abbildet bei vergleichsweise geringer vertikaler realer Erstreckung und veranschaulicht das Wirkprinzip zum Erhalt der Aufgabenlösung, wonach ein Punkt dieses kinematischen Schemas als Stützvorrichtung für ein zu tragendes Objekt dienen kann mit einem räumlichen Bewegungsverhalten, als wäre dieser Punkt das schwingende Ende eines langen Pendels.

**FIG.10** ist eine vereinfachte Darstellung der vertikalen Draufsicht auf das Schema von FIG.9.

**FIG. 11** zeigt die benutzten Bezeichnungen zum Schema eines Pendels.

**FIG.12** ist eine vereinfachte schematische Darstellung einer Variante des Schemas von FIG.9.

**FIG.13** stellt ein virtuelles Pendel in einer Variante des Schemas von FIG.12 dar, bei dem der Hebel zur Anlenkung des hängenden stabilen Pendels und der Hebel zur Anlenkung des stehenden labilen Pendels in verschiedene Höhenebenen gelegt sind.

**FIG.14** - **FIG.16** zeigen das virtuelle Pendel von FIG.13 in verschiedenen Bewegungsphasen.

**FIG.17** zeigt das virtuelle Pendel von FIG.13 in der Bewegungsrelation zur schwingenden Basis.

**FIG.18** ist eine vereinfachte schematische Darstellung eines zweiten Beispiels einer anders als im Beispiel in FIG. 9 gestalteten Lösung zur Realisierung eines virtuellen Pendels.

**FIG.19** stellt schematisch die vertikale Draufsicht zum Beispiel in FIG. 18 dar.

**FIG.20** und **FIG.21** zeigen in vereinfachter schematischer Darstellung eine Ergänzung zum Beispiel in FIG.18 und FIG.19 zur Erzielung einer großen virtuellen Pendellänge.

**FIG.22** ist eine schematische Darstellung von Varianten virtueller Pendel.

**FIG.23, 23a, 23b, 23c** zeigen das Schema eines virtuellen Pendels und Bewegungsphasen.

**FIG.24** zeigt die Relativbewegung der Basis zum virtuellen Pendel.

**FIG.25** zeigt in einer prinzipiell ausführbaren Form eine Zentrier- und Windkraft-Haltevorrichtung für ein durch virtuelle Pendel getragenes Objekt.

**FIG.26** ist die Darstellung einer Vorrichtung zur Zentrierung eines durch virtuelle Pendel getragenen Objekts mittels eines Federblocks aus elastomerem Werkstoff.

**FIG.27** ist eine Zentrier- und Windkraft-Abstützvorrichtung für ein durch virtuelle Pendel gestütztes Objekt mittels einer Kugel, die durch Federkraft in einen Trichter gedrückt wird.

**FIG.28** zeigt eine vereinfachte Darstellung eines Schemas für ein hydropneumatisch betätigtes System zur Zentrierung und Windkraftabstützung eines von virtuellen Pendeln getragenes Objekt.

**FIG.29** zeigt eine Vorrichtung zur Zentrierung und Windkraftabstützung eines von virtuellen Pendeln getragenen Objekts mittels einer Schwinge, die sich durch hydropneumatische Federkraft an der mit der Basis verbundenen Fundamentseitenwand abstützt.

**FIG.30** zeigt die gleiche Vorrichtung wie FIG.29 mit zusätzlicher Integration einer Hydraulik-Pumpe, die ihre Antriebsenergie aus der Bewegung der Basis bei Erdbeben bezieht.

**FIG.31** zeigt ein System zur Gebäudezentrierung unter Windlast, wobei ein nicht dem Wind ausgesetzter Gebäudeteil als Lage-Referenz dient.

**FIG.32** gibt schematisch eine Vertikalfederung zur Beschleunigungsminderung wieder.

**FIG.33** stellt ein Erdbebenschutz-Modul dar mit Vertikalfederung und Windkrafthaltung.

**FIG.34** zeigt elastische Verformungen bei kritischen Schwingungen an Laternenpfählen.

**FIG.35** zeigt ein virtuelles Pendel auf einer Mastspitze.

**FIG.35a** ist ein Querschnitt zu FIG.35.

**FIG.35b** ist die Draufsicht zu FIG.35.

**FIG.36, 36a, 36b,** zeigen eine Lampengruppe auf einem Pfahl mit Schwingungsisolation durch ein virtuelles Pendel und Details.

**FIG.37** - **FIG.39** zeigen Varianten von schwingungsisolierten Laternen auf Pfählen.

**FIG.40** und **FIG.41** zeigen hängende Lampen mit Schwingungsisolation durch virtuelle Pendel nach dem Schema von FIG.21.

**FIG.42** zeigt die Aufhängung einer Leuchtenreihe an virtuellen Pendeln nach dem Schema von FIG.9.

**FIG.43** zeigt einen Schwingungstilger mit Stützung auf virtuellen Pendeln nach dem Schema von FIG.9.

**FIG.44** zeigt einen Schwingungstilger wie FIG.43 mit einer Lage-Referenz auf virtuellen Pendeln nach dem Schema von FIG. 21.

**FIG.45** zeigt die Stützung einer Schwingungstilger-Masse auf virtuellen Pendeln nach dem Schema von FIG.13.

**FIG.46** zeigt eine an virtuellen Pendeln nach dem Schema von FIG.21 hängende Masse einer Schwingungstilger-Masse oder Lage-Referenz-Masse.

**FIG.47** zeigt einen mit virtuellen Pendeln gestützten Schwingungstilger an einem Rohrmast.

**FIG.48** zeigt einen mit virtuellen Pendeln gestützten Schwingungstilger an einem Gittermast.

**FIG.49** zeigt ein Erdbebenschutz-Fundament als Basis für virtuelle Pendel.

**FIG.50** zeigt ein Erdbebenschutz-Fundament mit Pfahlgründung als Basis für virtuelle Pendel.

**FIG.51** zeigt die Abdichtung der Bewegungsfuge für schwingungsisolierte Gebäude.

**FIG.52** zeigt die Bewegungsfugen-Abdichtung bei horizontaler und vertikaler Schwingungsisolation eines Gebäudes.

**FIG.53** zeigt die Interface-Situation für Versorgungsleitungen an einem schwingungsisolierten Gebäude.

**FIG.54** zeigt die Auswirkung eines Erdbebenspaltes zwischen Erdbebenschutz-Modulen mit dem Prinzip virtueller Pendel.

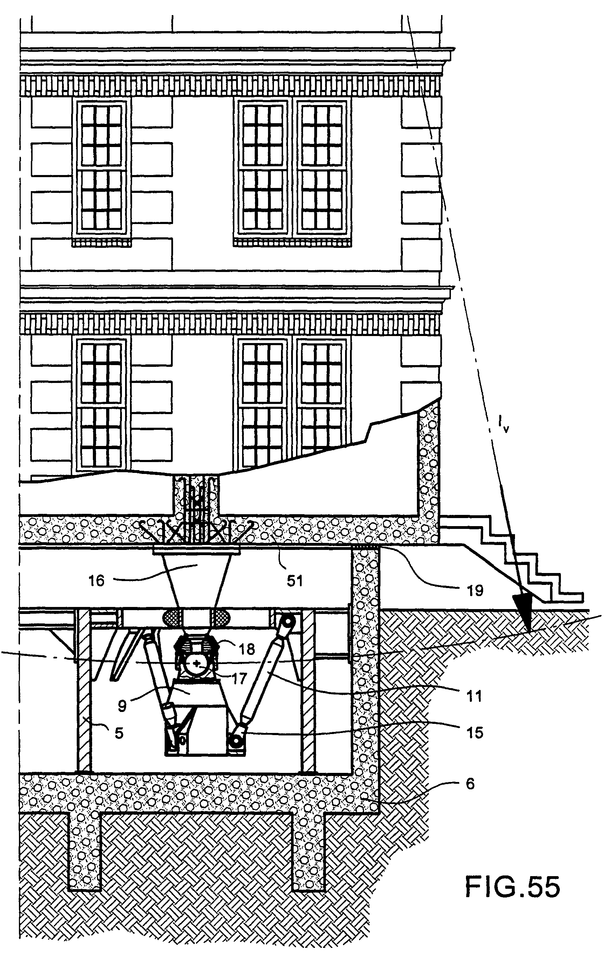

**FIG.55** zeigt ein Erdbebenschutz-Modul mit Einbau in das Untergeschoß eines Gebäudes als Vorrichtung zum Tragen von Gebäuden und Objekten mit der Realisierung eines virtuellen Pendels nach dem Prinzip von FIG.21.

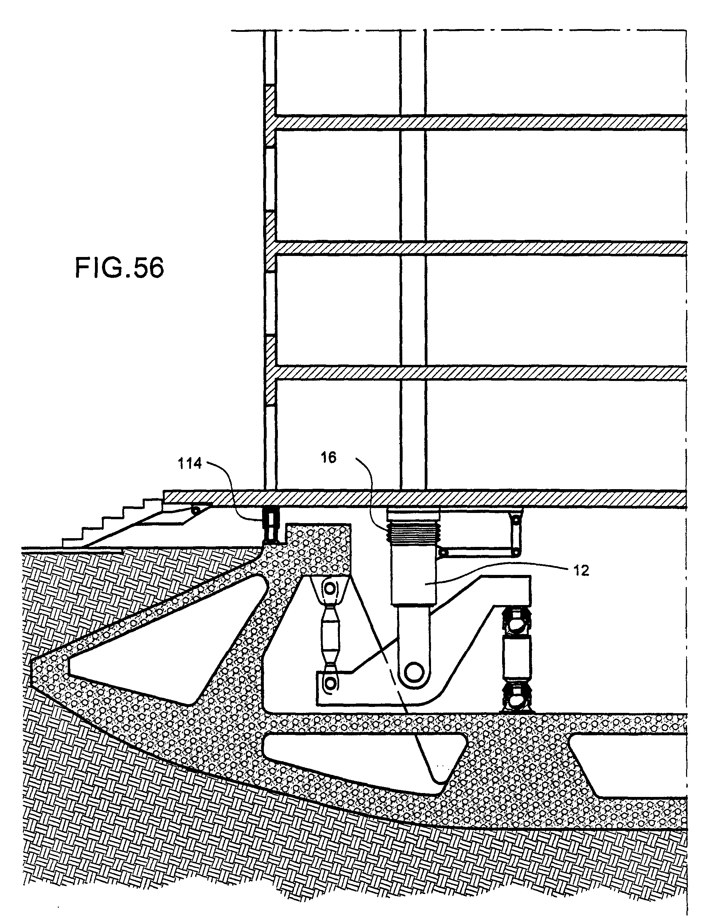

**FIG.56** zeigt die Einbausituation eines Erdbebenschutz-Moduls mit Vertikal-Federung im Untergeschoß eines Gebäudes.

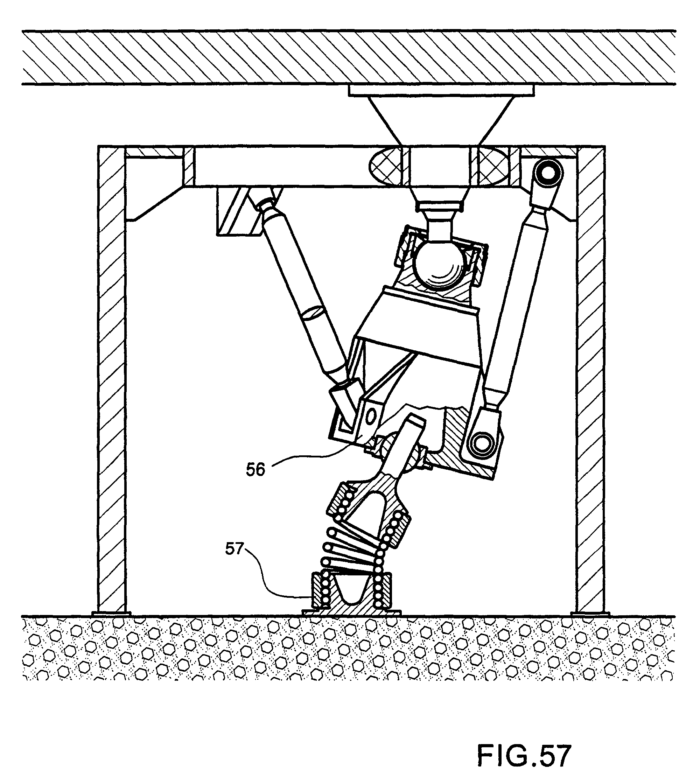

**FIG.57** ist ein Erdbebenschutz-Modul, wie in FIG.55 gezeigt, mit Integration einer Zentrierund Windkraft-Haltevorrichtung nach dem Schema von FIG.25.

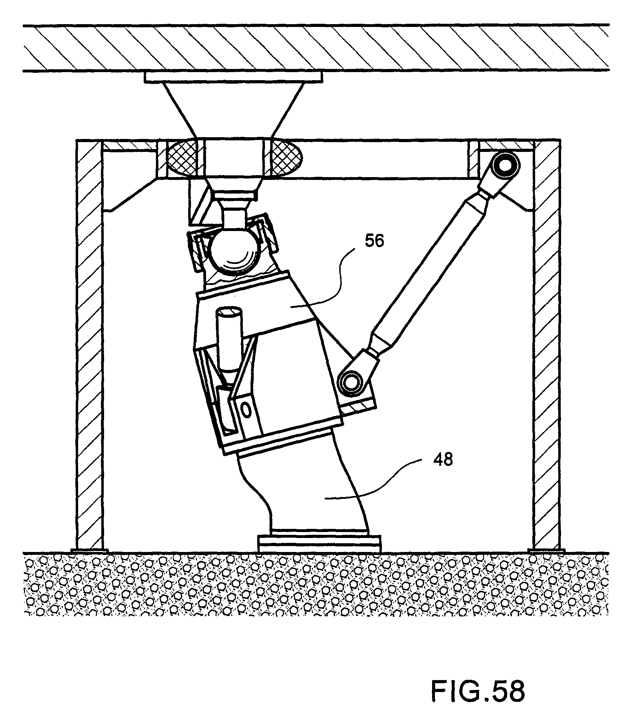

**FIG.58** ist ein Erdbebenschutz-Modul wie in FIG.55, kombiniert mit einem Elastomer-Block als Zentrierfeder.

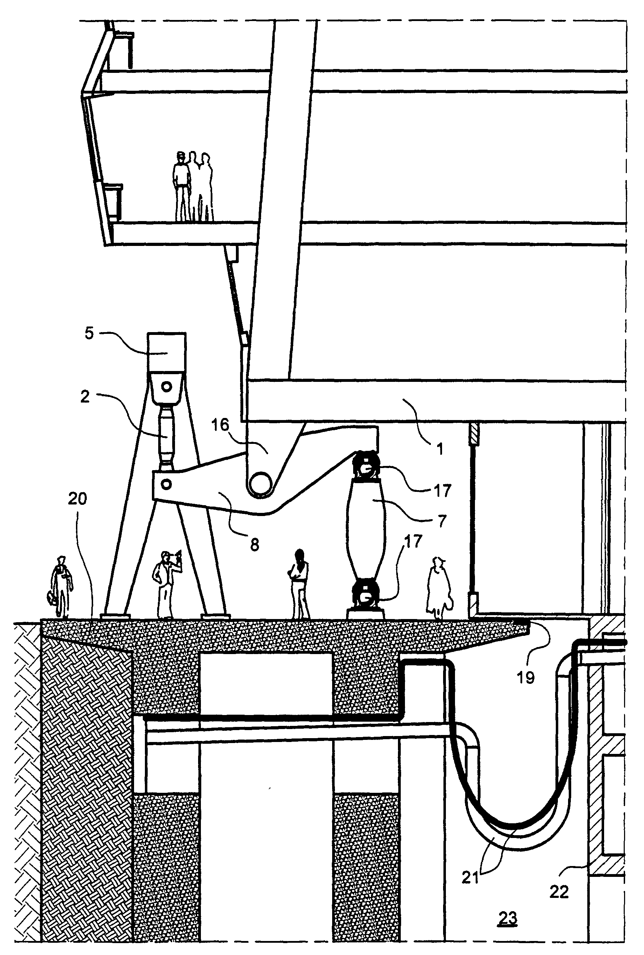

**FIG.59** zeigt ein Erdbebenschutz-Modui mit ebenerdigem Einbau als Vorrichtung zum Tragen von Gebäuden und Objekten mit der Realisierung eines virtuellen Pendels nach dem Prinzip gemäß FIG.12.

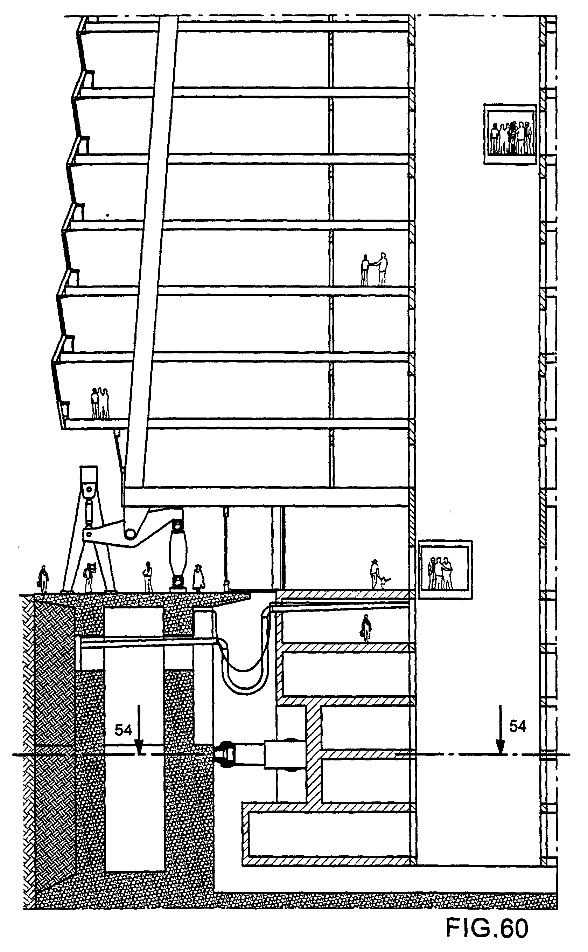

**FIG.60** zeigt den vertikalen Schnitt durch ein Gebäude, getragen von Erdbebenschutz-Modulen wie in FIG.59 mit Darstellung der Lage der Abstütz-Vorrichtungen zur Zentrierung des Gebäudes und zur Aufnahme von Windkräften.

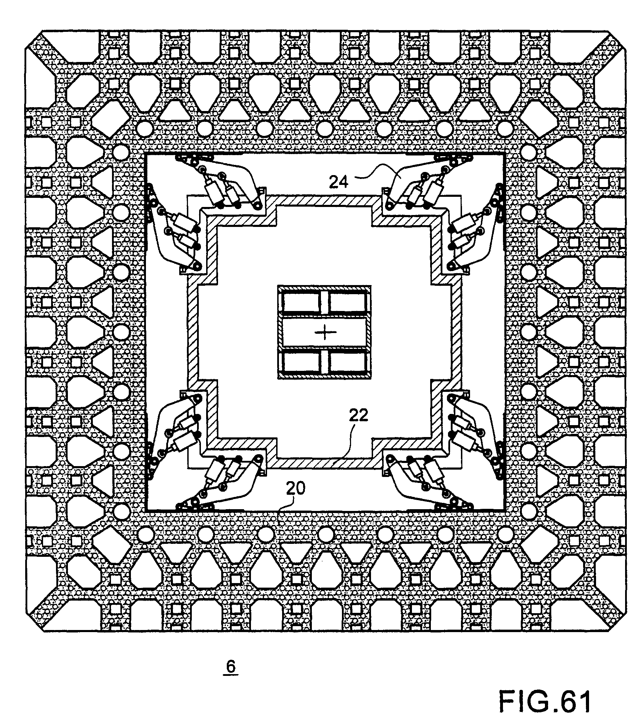

**FIG.61** ist ein horizontaler Schnitt durch das Untergeschoß eines Gebäudes und das Rahmen-Fundament in der Ebene der Zentrier-Vorrichtung und zeigt die Anordnung der Abstützungen eines Beispiels nach FIG.30.

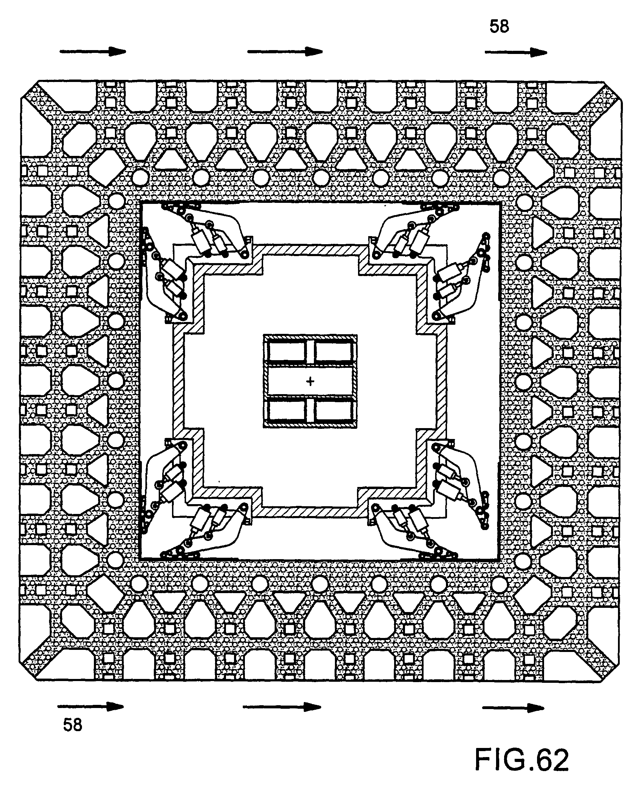

**FIG.62** zeigt eine Deplacierung der Basis mit Fundament relativ zum stillstehenden Untergeschoß des Gebäudes in einer Bewegungsrichtung parallel zu einer Gebäudewand.

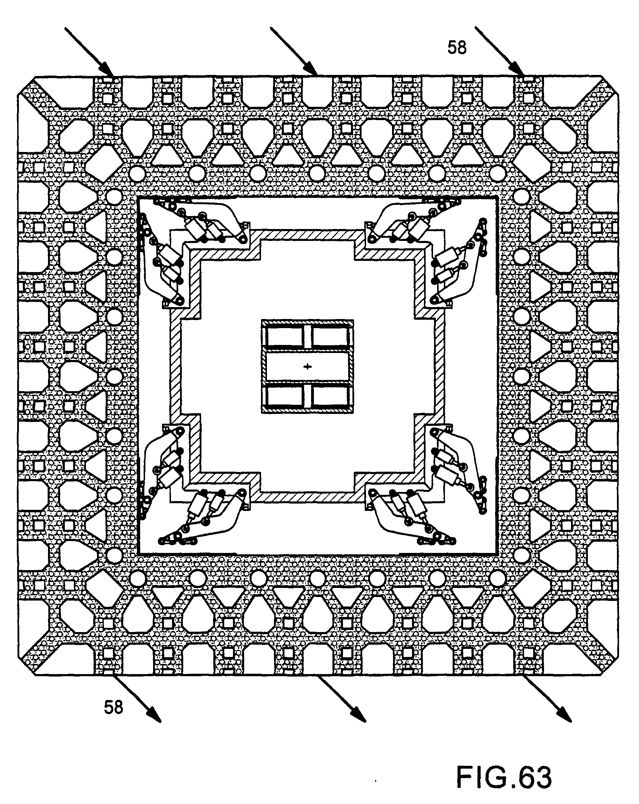

**FIG.63** zeigt eine Deplacierung der Basis mit Fundament relativ zum stillstehenden Untergeschoß des Gebäudes in einer Bewegungsrichtung unter einem Winkel zu einer Gebäudewand.

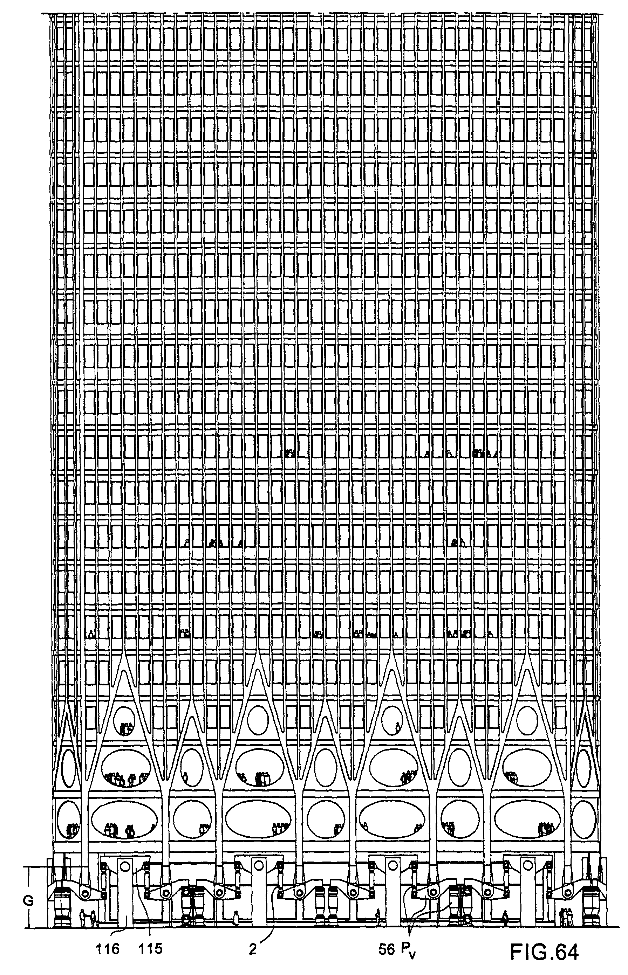

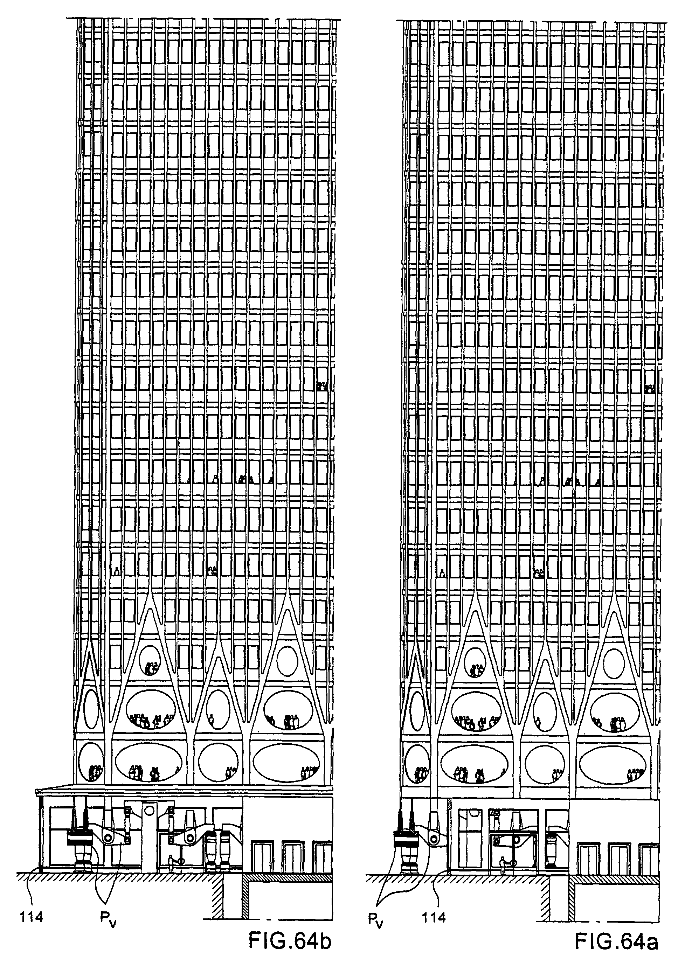

**FIG.64, 64a, 64b** zeigt virtuelle Pendel zur Stützung eines Hochhauses.

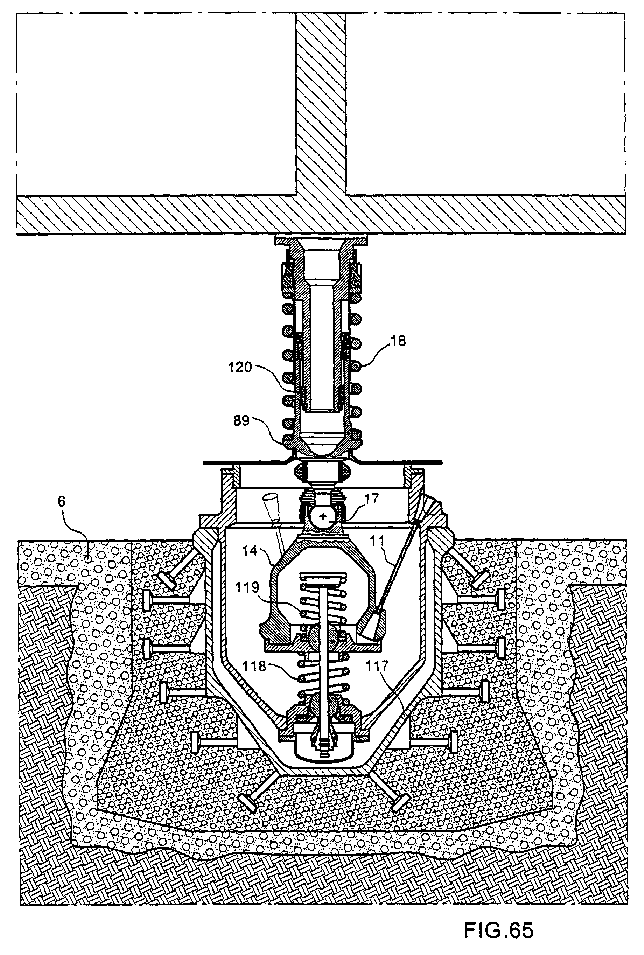

**FIG.65** zeigt ein virtuelles Pendel zum Einbau in eine Beton-Basis nach dem Schema von FIG.21.

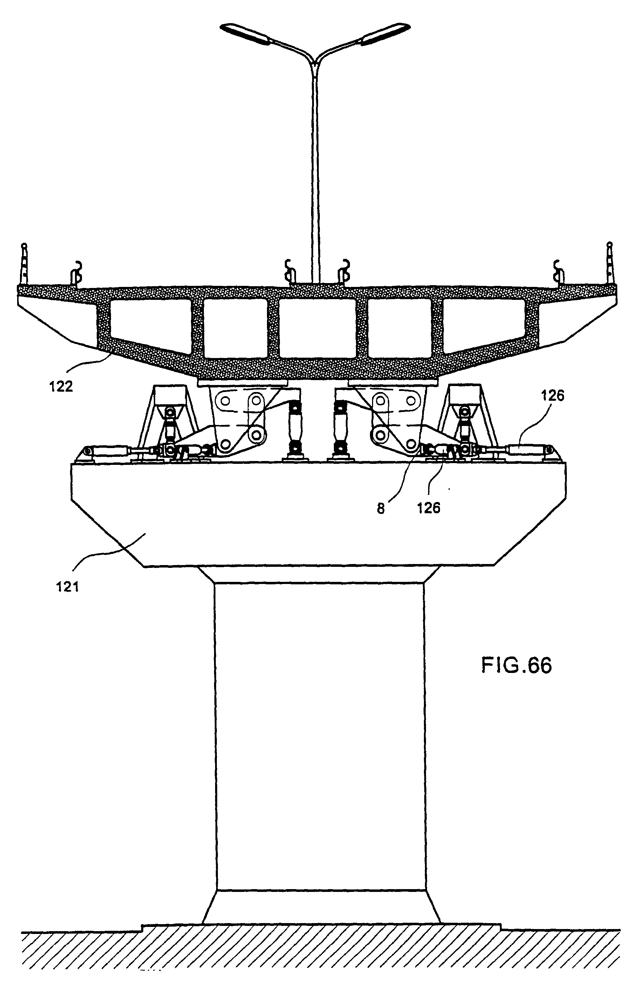

**FIG.66** zeigt die Stützung einer Fahrbahn auf Pylonen über virtuelle Pendel.

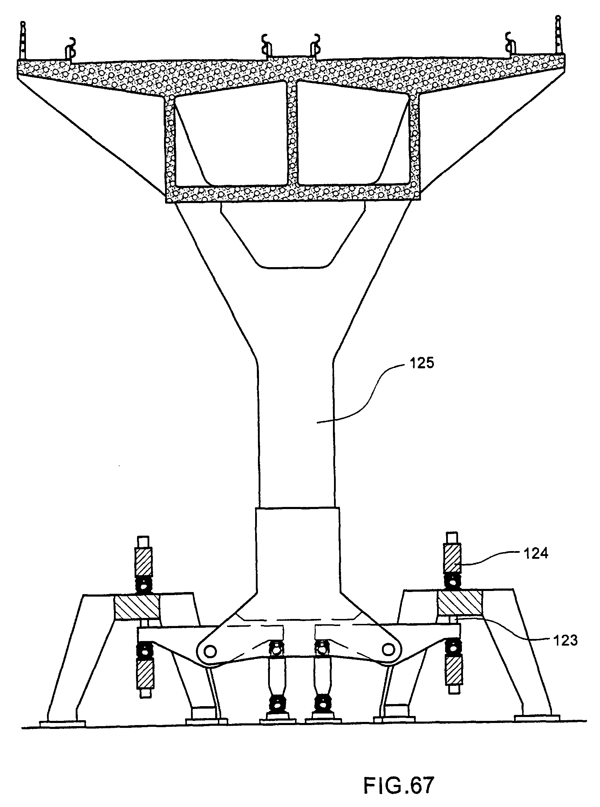

**Fig.67** zeigt die Stützung eines Pylons mit Stützung auf virtuellen Pendeln an der Basis.

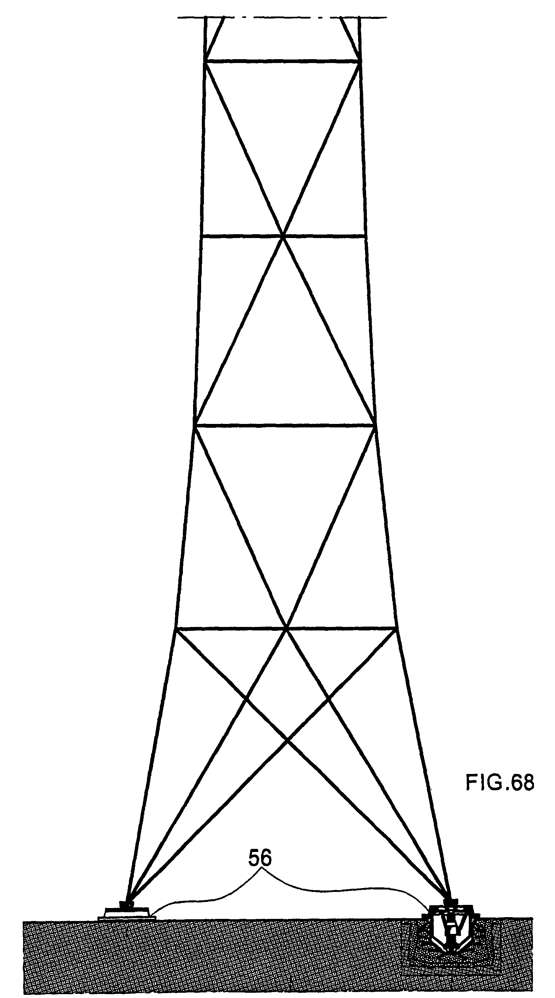

**FIG.68** zeigt die Stützung eines Gittermastes auf virtuellen Pendeln nach dem Schema von FIG.21.

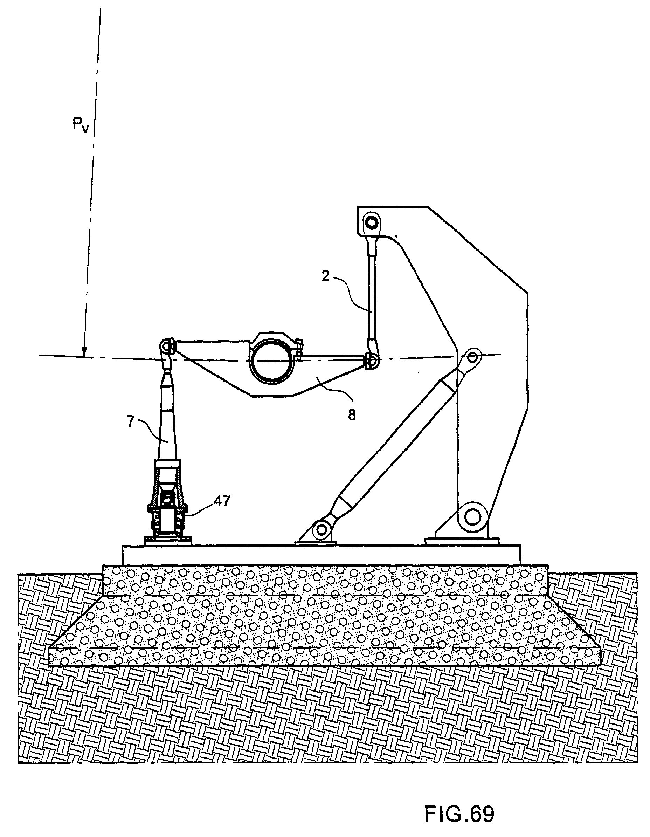

**FIG.69** zeigt die Stützung einer Pipeline auf virtuellen Pendeln.

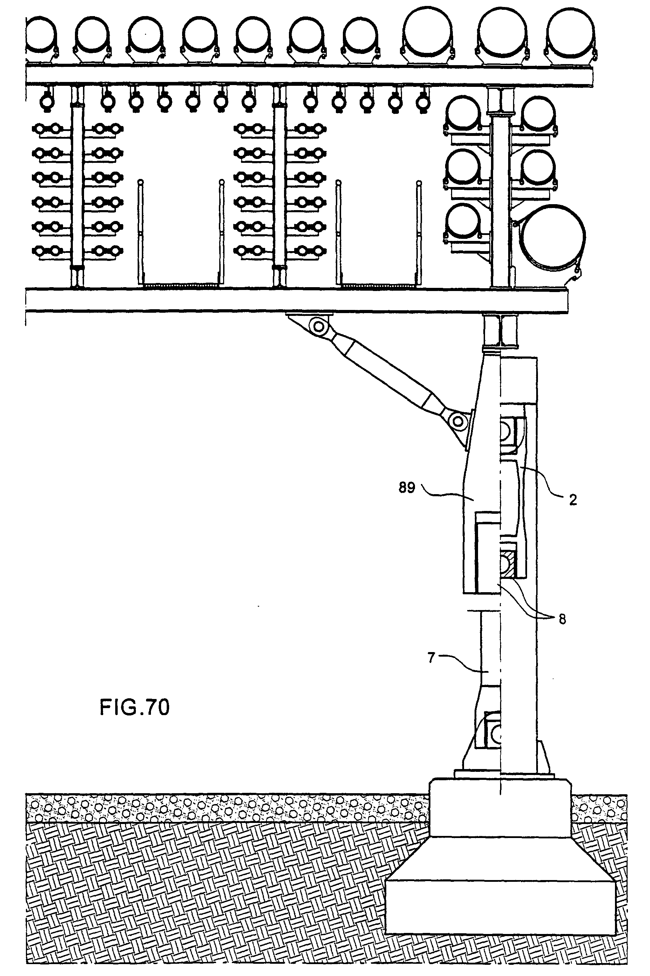

**FIG.70** zeigt die Stützung einer Rohrbrücke auf virtuellen Pendeln.

6 Beschreibung von zweckmäßigen Ausführungen

**FIG.1** zeigt, daß erfindungsgemäß ein Baukörper oder zu schützendes Objekt auf Tragkonstruktionen, die hier Erdbebenschutz-Module **56** genannt werden, gelagert ist, die mit dem Boden über ein durchgehendes gemeinsames Fundament oder auch über jeweils einzelne Fundamentgründungen für das einzelne Erdbebenschutz-Modul fest mit dem Boden verbunden sind. Die Erdbebenschutz-Module tragen den Baukörper und ermöglichen ihm an den Stützpunkten auf den Erdbebenschutz-Modulen ein räumliches Bewegungsverhalten in einer Weise, die etwa einer solchen Bewegungsform gleicht, als wäre das Objekt an sehr langen Pendeln aufgehängt, wodurch das Objekt nur minimale Beschleunigungen erfährt. Bei seiner geringen Bauhöhe stellt ein solches Erdbebenschutz-Modul ein virtuelles Pendel $P_v$ großer virtueller Länge $l_v$ mit langer Periodendauer dar. Diese Tragkonstruktionen oder Erdbebenschutz-Module sind so auslegbar, daß sie für jede gewünschte, oder erforderliche Amplitude einer möglichen Bewegung ausgeführt werden können, so daß extremste horizontale Bodenbewegungen sich nicht auf das getragene Objekt übertragen. Durch entsprechende Auslegung und Dimensionierung kann erreicht werden, daß die Eigen-Schwingfrequenz des auf den Erdbebenschutz-Modulen gelagerten Gebäudes um ein Vielfaches geringer ist, als die Schwingfrequenzen des Bodens, wie sie üblicherweise bei Erdbeben auftreten.

**FIG.55** zeigt ein Erdbebenschutz-Modul **56** in einer Ausführung nach dem Schema gemäß FIG.21 mit Einbau in das Untergeschoß eines Hauses. Drei Stützelemente **11** haben an ihren Enden jeweils ein sphärisches Gelenklager **15** oder alternativ Kardangelenk oder Kugelgelenk **17** und sind an ihrem oberen Ende an einer Tragstruktur **5** zweiachsig gelenkig aufgehängt und tragen am unteren Ende das Koppelelement **9**. Am oberen Ende des Koppelelements **9** ist die mit der getragenen Gebäudestruktur **51** verbundene Gebäudestütze **16** mit einem Kugelkopf **17** gelenkig gelagert. Ein Faltenbalg **18** aus Elastomer-Werkstoff oder Metall dichtet das Kugelkopflager hermetisch ab. Eine gleitende Dichtung **19** dichtet den Spalt zwischen getragenem Baukörper, der sich gegenüber der Basis bewegen kann, zum Gebäudeteil der Basis **6** ab.

**FIG.56** zeigt ein Erdbebenschutz-Modul **56** nach dem Schema gemäß FIG.12 mit Einbau in das Untergeschoß eines Hauses. Die vertikale Schwingungsisolation nach dem Schema entsprechend FIG.32 ist in die Gebäudestütze **16** integriert. Zur Anpassung an die Relativbewegung zwischen Basis und schwingungsisoliertem Gebäudeoberteil ist die Gebäude-Spaltabdichtung **114** nach dem Schema entsprechend FIG.52 ausgeführt.

**FIG.57** zeigt ein Erdbebenschutz-Modul **56** in der ähnlichen Ausführung wie FIG.55. Zusätzlich ist eine Zentrier- und Windkraftabstütz-Vorrichtung **57** integriert in der Bauweise gemäß FIG.25. Diese Lösung hat den Vorteil platzsparend zu sein. Beide Funktionen, das Objekt zu tragen und es genau zu zentrieren und der Windkraft eine Gegenkraft entgegenzustellen, werden in einer Einheit vereinigt.

**FIG.58** zeigt ein Erdbebenschutz-Modul **56** mit einer weiteren Kombination der Trag- und Zentrier-Funktion. Die Zentrierung übernimmt hier ein Elastomer-Federblock **48.**

**FIG.59** zeigt ein Erdbebenschutz-Modul in einer Ausführung nach dem Schema gemäß FIG.12 in einer Schwerlastausführung für hohe Gebäude mit ebenerdiger Montage. Das hängende Pendel **2** hat an beiden Enden jeweils ein sphärisches Gelenklager oder ein Kardangelenk und ist an seinem oberen Ende aufgehängt an der Tragstruktur **5**. Am unteren Lager des Pendels **2** ist der Träger **8** als Koppelelement gelagert. Das andere Ende des Koppelelements **8** stützt sich über ein Kugelgelenk **17** oder alternativ möglich auch über ein Kardangelenk oder sphärisches Gelenklager auf dem stehenden labilen Pendel **7** ab. Das stehende Pendel **7** stützt sich über ein gleiches Gelenk **17** wie am oberen Ende ebenso am unteren Ende auf der Basis in diesem Fall dem Fundament **20** ab. An dem Träger **8** ist die Gebäudestütze **16** einachsig gelenkig gelagert abgestützt und trägt das Gebäude **1**. Das Erdgeschoß des Gebäudes **1** hängt zusammen mit dem Untergeschoß **22** oder mehreren Untergeschossen an dem Gebäude 1. Der Zwischenraum **23** zwischen den Untergeschossen **22** und dem Fundament **20** an der Basis wird durch den Außenbereich des Erdgeschosses abgedeckt und der Bewegungsspalt zum Fundament mit einer Gleitdichtung **19** abgedichtet. Die Verbindungen zur Versorgung und Entsorgung **21** des Gebäudes mit Wasser und Energie und zur Kommunikation sind zwischen der Fundamentbasis **20** und den Untergeschossen **22** des Gebäudes in einer U-Schleife hängend flexibel ausgeführt, so daß Relativbewegungen zwischen Basis und Gebäude möglich sind, ohne daß die Verbindungen gefährdet werden können.

**FIG.60** zeigt einen vertikalen Teilschnitt eines Hochhauses mit der Abstützung durch Erdbebenschutz-Module **56** der Außenkante des Gebäudes entlang aufgereiht in der Bauweise gemäß FIG.59. In einer Ebene **54** eines Untergeschosses **22** sind am Umfang des Gebäudes Horizontalabstützungen **24** angebracht nach dem Prinzip entsprechend FIG.29 oder FIG.30 mit den entsprechenden hydraulischen Ausrüstungen gemäß FIG.28.

**FIG.61** zeigt einen Horizontalschnitt durch ein Gebäude-Untergeschoß **22** und ein rahmenförmig um das Untergeschoß ausgebildetes Fundament 20 als Tragbasis für die Erdbebenschutz-Module in einer Ebene **54** in FIG. 60. An jeder Seite des Untergeschosses **20**, das relativ zur Basis und damit verbundenen Fundament **20** in allen Richtungen beweglich oder verschiebbar ist, befinden sich an jeder Wand je zwei Vorrichtungen zur Horizontal-Abstützung **24** gegen Windkräfte und zur genauen Mittelzentrierung des Gebäudes relativ zum Fundament. Die Abstütz-Vorrichtungen entsprechen dem Schema nach FIG.30. Baut sich am oberen Gebäudeteil eine Windkraft auf, so verbleibt das Gebäude in der gleichen Lage wie in FIG.61 dargestellt. Die Abstützeinrichtungen reagieren auf geringste Einfederung und erhöhen die Abstützkraft in den Federelementen solange, bis Gleichgewicht mit der Windkraft vorhanden ist. Bei genauer Mittellage ohne äußere Kräfte durch Wind ist zwischen den Laufrollen und der Fundamentwand ein geringfügiges Spiel vorgesehen. Alle Feder-Zylinder sind voll ausgefahren bis zu ihrem hydraulisch gedämpften Anschlag.

**FIG.62** Erfolgt eine Verschiebung der Basis in Richtung der dargestellten Pfeile **58** durch ein Erdbeben, so federn die Horizontafabstützungen **24** an der Seite ein, wo sich die Fundamentwand **20** dem Gebäude nähert. Auf der gegenüberliegenden Seite des Gebäudes heben die Abstützungseinrichtungen **24** von der Wand ab.

**FIG.63** Bei Bewegung der Basis in einer nicht einer Gebäudekante parallelen oder dazu senkrechten Richtung **58**, federn die Abstützelemente an zwei Seiten ein und an den gegenüberliegenden Seiten heben sie von der Wand ab.

**FIG.64** zeigt einen Ausschnitt einer Außenansicht eines Hochhauses mit Stützung zu ebener Erde im Sichtbereich auf Erdbebenschutz-Modulen **56** mit Anwendung des Prinzips virtueller Pendel. Die virtuellen Pendel nach dem Schema entsprechend FIG.12 sind paarweise gespiegelt angeordnet. Die hängenden stabilen Pendel **2** werden paarweise zum Toleranzausgleich über einen in seiner Mitte einachsig gelenkig gelagerten Ausgleichsträger **115** auf einer Säule **116** gestützt.

Die Anordnung der Erdbebenschutz-Module läßt erkennen, daß diese Ausführung zur Nachrüstung bestehender Gebäude in Skelettbauweise geeignet ist. Die bestehenden Säulen werden in dem Bereich der Lücke **G** ersetzt durch Einfügen der Elemente des virtuellen Pendels.

**FIG.64a** und **FIG.64b** stellen einen vertikalen Querschnitt zur Ansicht FIG.64 dar und zeigen den Außenabschluß des Gebäudes zu ebener Erde mit der Bewegungstrennfuge und der Gebäude-Spaltabdichtung **114**, wobei einmal die Erdbebenschutz-Module im Außenbereich des Gebäudes und einmal im Inneren des Gebäudeabschlusses sich befinden.

**FIG.65** zeigt ein virtuelles Pendel als Erdbebenschutz-Modul nach dem Prinzip entsprechend FIG.21. In einem in eine Basis **6** einbetonierten Gehäuse **117** wird das vormontierte Modul als Einheit eingesetzt und über Flanschbefestigungen verbunden. Die Laststütze **89** wird mit dem getragenen Objekt durch Flanschverbindung verbunden. Die stabilen Stützelemente, Pendel **11** sind als Seil ausgeführt. Das Koppelelement **14** wird zur Abstützung von Windkräften über die Feder **118** zentriert und zur Aufnahme von vertikaler Negativbeschleunigung durch die Feder **119** niedergehalten. Die Laststütze **89** ist im Koppelelement **14** mit einem Kugelkopf **17** zweiachsig gelenkig gestützt und trägt über eine teleskopische Führung **120** und federnde Abstützung über mechanische Federung **126** oder alternativ pneumatische Federn die Objekt-Last.

**FIG.66** zeigt eine Anordnung, einen auf Pylonen gestützten hochgelegten Fahrdamm **122** gegenüber der Pylon-Plattform **121** von Querschwingungen zu isolieren; auf diese Weise wird der Pylon in seiner Knick-Biegebelastung des Schaftes entlastet, weil er nicht mehr aus Masse-Reaktionskräften aus Querbeschieunigungen des Fahrdamms, sondern im wesentlichen nur durch seine eigene Masse und einem geringeren Anteil der Erdbebenschutz-Modulmasse belastet wird. Die Ausführung der virtuellen Pendel entspricht dem Prinzip entsprechend FIG.13. Sofern dieser Fahrdamm-Stützpunkt ein Festlager ist, wird das Koppelelement mit horizontal wirkenden Federelementen **126** in seiner Mittelstellung gehalten. Erst, wenn die vorgegebene Federkraft überwunden wird, wird freie Relativbewegung zwischen Fahrdamm **122** und Pylonplattform **121** möglich.

**FIG.67** stellt die Schwingungsisolation eines Pylons **125** für hochgestellte Fahrdämme an der Basis dar. Das virtuelle Pendel basiert auf dem Prinzip entsprechend FIG.9. In der dargestellten Form stellt diese Fahrdamm-Stütze gleichzeitig ein Brückenloslager dar. Das stabile, hängende Pendel, Stützelement **2** wird aus zwei Zugstangen **123** und zwei Querträgern **124** gebildet.

**FIG.68** zeigt einen Gittermast, der auf Erdbebenschutz-Modulen gestützt ist, die nach dem Prinzip entsprechend FIG.21 gestaltet sind und mit Windkraftabstützung ausgerüstet sind.

**FIG.69** zeigt die Stützung eines Pipeline-Rohrs durch ein stabiles und ein labiles Pendel 2 und 7 entsprechend dem Schema, entsprechend FIG.9. Das Koppelelement **8** ist selbst als Rohrlager ausgebildet. Das Zentrum des Rohrquerschnitts beschreibt bei horizontaler Verschiebung eine Bahn wie das untere Ende eines langen Pendels. Die Aufhängung des Rohrs erfolgt an einem virtuellen Pendel. Das stehende Pendel **7** wird durch eine gegen einen Anschlag vorgespannte Feder 47 in der Vertikalstellung gehalten. Erst bei einem vorbestimmten Kippmoment am Pendel **7** wird ein Zusammendrücken der Feder 47 erreicht und eine Bewegung des Stützsystems möglich. Das Kippmoment wird derart vorbestimmt, daß nur Massen-Reaktionskräfte aus Querbeschleunigungen entsprechend Erdbebengrößen die Bewegung herbeiführen.

**FIG.70** stellt die Stützung einer Rohrbrücke, wie sie in Chemieanlagen und Raffinerien gebräuchlich sind, auf virtuellen Pendeln dar. Die Laststütze **89** wird vom Koppelelement **8** gestützt, das vom stabilen Stützelement, dem hängenden Pendel **2** und dem labilen Stützelement, dem stehenden Pendel **7** gestützt wird.

**Patentansprüche**

1. Verfahren zum Schutz von Objekten, insbesondere Gebäuden, vor dynamischen Kräften aus Beschleunigungen einer Basis (6) z. B. bei Erdbeben, wobei in einem das Objekt (1) tragenden System die Wirkung von stabilen, in jeder horizontalen Richtung pendelnd schwingfähigen, die Objektmasse anhebenden Stützelementen (2, 11) und von labilen, in jeder horizontalen Richtung pendelnd schwingfähigen, die Objektmasse absenkenden Stützelementen (7, 14) in der Weise durch Koppelung überlagert wird, daß bei wechselnder horizontaler Bewegung der Basis (6) z. B. bei Erdbeben unter dem Einfluß einer Deplacierung der mit der Basis (6) verbundenen Stützpunkte (10) der Stützelemente gegenüber der Lage der trägen Masse des Objekts (1) eine nur geringe Anhebung der Objektmasse (1) auf den Stütz-bzw. Lagerpunten (P) auf den Koppelgliedern oder kombinierten Stütz- oder Koppelgliedern erfolgt, wodurch aufgrund einer geringen Neigung der relativ zur Basis räumlichen Bewegungsbahn der Stütz-bzw. Lagerpunkte (P) eine nur geringe in die Richtung der Ruhelage stabilisierende Rückstellkraft ($F_R$) durch die der Gravitation ausgesetzte Objekt-Masse entsteht, woraus bei Auftreten von hohen Querbeschleunigungen an der Basis dennoch eine nur geringe Objektbeschleunigung mit langer Periodendauer der Eigenschwingung resultiert (FIG. 9, 12, 13, 16, 17, 21, 22, 23, 24).

2. Vorrichtung zur Durchführung des Verfahrens nach Anspruch 1, **dadurch gekennzeichnet, daß** zur schwingungsentkoppelten Lagerung eines Objekts (1), insbesondere eines Gebäudes an seinen statischen Stützpunkten (10) gegenüber einer schwingenden Basis (6) zum Schutz des Objekts (1) gegen Schwingungen der Basis (6) die Abstützungen des Objekts (1) auf jeweils einer Vorrichtung an einem bestimmten Stütz-bzw. Lagerpunkt (P) auf einem Koppelelement oder kombinierten Stütz- und Koppelelement (8, 9) erfolgt, das seinerseits über nach allen Richtungen pendelnd gelagerte Stützelemente die es miteinander koppelt, an der schwingenden Basis (6) abgestützt ist, wobei die Stützelemente ein System von stabilen, in jeder horizontalen Richtung pendelnd schwingfähigen, die Objektmasse anhebenden Stützelementen (2, 11 ), und von labilen, in jeder horizontalen. Richtung pendelnd schwingfähigen, die Objektmasse absenkenden Stützelementen (7, 14) aufweisen und wobei die Dimensionierung und Anordnung der Stützelemente in ihrer Ausgangslage so getroffen ist, daß auf jedem Koppelelement oder kombinierten Stütz- und Koppelelement an der Stelle für den Stütz-bzw. Lagerpunkt (P) des zu stützenden Objekts (1) eine vergleichbare Bewegungsmöglichkeit in jeder horizontalen Richtung zustandekommt, wie sie das freie Ende eines sehr langen in jeder Richtung zweiachsig schwingfähigen Pendels in Form einer konkaven Kugelschale beschreibt, wodurch die Wirkung von in jeder Richtung schwingenden virtuellen Pendeln entsteht (FIG. 9,-12, 13, 16, 17, 21, 22, 23, 24).

3. Vorrichtung nach Anspruch 2, **dadurch gekennzeichnet, daß** das Koppelelement (8, 9) an einer Anlenkseite der Stützelemente (2, 7, 11, 14) eine Anhebung und an einer gegenüberliegenden Seite eine Absenkung erfährt und daß der Stütz-bzw. Lagerpunkt (P) zur Abstützung des Objekts (1) auf dem Koppelelement (8, 9) bei einer zugrundegelegten Horizontalamplitude der schwingenden Basis (6) eine nur geringe Bewegung ausführt, daß er eine flach gekrümmte, nach oben offene konkave Ortsfläche beschreibt (FiG. 9, 12, 13, 16, 17).

4. Vorrichtung nach Anspruch 2 oder 3, **dadurch gekennzeichnet, daß** zwei Stützelemente (2, 7, 11, 14) durch ein Koppelelement (8), (8b) jeweils zweiachsig gelenkig verbunden sind, wobei ein Stützelement (2, 12) als ein am oberen Ende zweiachsig gelenkig pendelnd an einem mit der Basis (6) verbundenen Stützpunkt (10) aufgehängtes stabiles Pendel und das andere Stützelement (7, 14) als ein am unteren Ende auf der Basis (6) zweiachsig gelenkig gelagertes stehendes labiles Pendel ausgebildet ist, und daß das Koppelelement (8) an dem Objekt in einer waagerechten Achse gelagert ist, so daß es relativ zu dem Objekt (1) keine Drehung um die Hochachse ausführen kann (FIG. 9, 12, 13,16, 17).

5. Vorrichtung nach Anspruch 4, **dadurch gekennzeichnet, daß** das Koppelelement (8) in ein weiteres Koppelelement (8b) gegliedert und über das Koppelelement (8a) beidseitig einachsig gelenkig damit verbunden ist, und daß das Stützelement (8b), welches einachsig gelenkig an der Laststütze ($W_l$) gelagert ist, sich auf dem labilen Pendel, Stützelement (7) zweiachsig gelenkig stützt (FIG. 13 bis 17).

6. Vorrichtung nach Anspruch 2 oder 3, **dadurch gekennzeichnet, daß** drei Stützelemente (11) an einem Koppelelement (9, 14) an drei Punkten am Umfang zweiachsig gelenkig angelenkt, in der Ruhelage von dem Zentrum des Koppelelements (9) weg nach oben schräg nach außen geneigt angeordnet und zweiachsig gelenkig an der Basis (6) aufgehängt sind (FIG. 21).

7. Vorrichtung nach Anspruch 6, **dadurch gekennzeichnet, daß** der Stütz-bzw. Lagerpunkt (P) zur Abstützung des Objekts (1), oberhalb einer durch die drei Lagerpunkte (12) der Stützelemente (11, 14) an dem Koppelelement (9) gebildeten Ebene angeordnet ist (FIG. 19, 20).

8. Vorrichtung nach Anspruch 2, **dadurch gekennzeichnet, daß** das Koppelelement (8), das mit mindestens zwei Stützelementen (2) zweiachsig gelenkig verbunden ist, die jedes an ihrem oberen Ende zweiachsig gelenkig pendelnd an einem mit der Basis (6) verbundenen Stützpunkt (10) in paralleler Anordnung aufgehängt sind, in seiner Mitte ein Stützelement (14) trägt, das im Koppelelement (8) einachsig gelenkig gelagert ist, wobei die Schwenkbewegung des Stützelements (14) in die Richtung der Stützpunkte des Koppelelements (8) an den Stützelementen (2) zeigt, und das an seinem unteren Ende unterhalb seiner Lagerung auf dem Koppelelement (8) zweiachsig gelenkig und axial verschiebbar gelagert ist, und das oberhalb seiner Lagerung auf dem Koppelelement (8) an einem zweiachsig gelenkigen Stütz-bzw. Lagerpunkt (P) das Objekt trägt (FIG. 22, 23, 24).

9. Vorrichtung nach Anspruch 2 oder 8, **dadurch gekennzeichnet, daß** bei der Vorrichtung abweichend von der Ausführung nach Anspruch 8 das Koppelelement (8) an mehreren symmetrisch angeordneten Stützelementen (2) in paralleler Lage gestützt ist, und daß das Stützelement (14) auf dem Koppelelement (8) zweiachsig gelenkig gelagert ist (FIG. 22, 23, 24).

10. Vorrichtung nach einem der Ansprüche 2 bis 9, **dadurch gekennzeichnet, daß** zur Aufnahme von Windkräften unter dem getragenen Objekt (1) zwischen der Basis (6) und dem Objekt (1) ein Querkräfte aufnehmender Stab angeordnet ist, bei dem ein Ende des Stabes mit dem Ende einer an der Basis (6) oder an dem getragenen Objekt (1) nicht gelenkig befestigten vorgespannten Zugfeder (41) nicht gelenkig fest verbunden ist und dessen anderes Ende sich mit einem Zapfen (42) in einem an dem gegenüber sich befindlichen Objekt (1) beziehungsweise an der Basis (6) befestigten in einem zweiachsig schwenkbaren Lager (43) axial verschiebbar abstützt, wodurch die Lage von Objekt (1) und Basis (6) relativ zueinander fixiert wird und eine relative Verschiebbarkeit zwischen Basis (6) und Objekt (1) erst entsteht, wenn eine an dem Zapfen (42) wirkende Querkraft eine durch die Vorspannung der Zugfeder (41) vorbestimmte Größe übersteigt (FIG. 25).

11. Vorrichtung nach einem der Ansprüche 2 bis 9, **dadurch gekennzeichnet, daß** unter dem getragenen Objekt (1) zwischen der Basis (6) und Objekt (1) ein Querkräfte aufnehmender Stab angeordnet ist, bei dem ein Ende des Stabes mit einem an der Basis (6) oder an dem getragenen Objekt (1) fest verbundenen Federblock (48) aus elastomerem Werkstoff fest verbunden ist und dessen anderes Ende sich mit einem Zapfen (42) in einem an dem gegenüber sich befindlichen Objekt (1) beziehungsweise an der Basis (6) befestigten in einem zweiachsig schwenkbaren Lager axial verschiebbar abstützt. wodurch die Lage von Objekt (1) und Basis (6) relativ zueinander elastisch fixiert wird (FIG. 26).

12. Vorrichtung nach einem der Ansprüche 2 bis 9, **dadurch gekennzeichnet, daß** zur Aufnahme von Windkräften unter dem getragenen Objekt (1) eine oder mehrere Haltevorrichtungen (50) befestigt sind, womit jeweils eine in allen Richtungen drehbar gelagerte in einer vertikalen Achse geführte Zentrierkugel (44) mit einer vorbestimmten Kraft einer mechanischen oder hydropneumatischen Feder (47) nach unten in das Zentrum eines mit der Basis (6) fest verbundenen Zentriertrichters (45) gedrückt wird, der einen von einem Anfangswert in seinem Zentrum nach außen bis auf 180° zunehmenden, Öffnungswinkel aufweist, wodurch eine formschlüssige Verbindung zwischen Objekt (1) und Basis (6) zustande kommt, die in der Lage ist, bis zu einem von der Federkraft und dem Öffnungswinkel im Zentrum des Trichters abhängigen Grenzwert horizontale Kräfte zu übertragen, bei dessen Überschreitung die Zentrierkugel (44) vertikal gegen die Federkraft durch die Schräge des Trichters angehoben wird und in den Bereich des flacher werdenden Trichters rollt, wobei die horizontal übertragbare Kraft kleiner wird und außerhalb des Trichters Null wird, so daß während Relativbewegungen zwischen Objekt (1) und Basis (6) bei Schwingungen der Basis (6) durch Erdbeben nur geringe oder abhängig von der Schwingweite der Basis (6) nahezu keine horizontalen Kräfte von der Basis auf das Objekt übertragen werden (FIG. 17).

13. Vorrichtung nach Anspruch 12 zur Zentrierung eines durch die Eigenschaft seiner Lagerung leicht horizontal verschiebbaren Objekts oder Gebäudes und Bereitstellung einer Haltekraft, **dadurch gekennzeichnet, daß** eine vertikal geführte und in einem Rollkugelbett (49) gelagerte Zentrierkugel (44) mit einer mechanischen oder hydropneumatischen oder viskoselastischen Federkraft in einen Zentriertrichter (45) gedrückt wird, so daß eine an der Gebäudestruktur (51) horizontal wirkende Windkraft keine Reaktionskraft im Berührungspunkt der Zentrierkugel (44) im Zentriertrichter (45) hervorrufen kann, deren Vertikalkomponente ($F_V$) die Zentrierkugel (44) in der vertikalen Führung gegen die Federkraft zurückdrücken kann (FIG.27).

14. Vorrichtung, nach Anspruch 12, **dadurch gekennzeichnet, daß** ein Zentriertrichter (45) außerhalb des Kreises, den die Berührungslinie von Zentrierkugel (44) im Kontakt in der tiefsten Lage mit dem Zentriertrichter (45) bildet, einen bis auf 180° größer werdenden Öffnungswinkel (y) aufweist, so daß die horizontale Komponente ($F_H$) aus der Normalkraft im Berührungspunkt von Zentrierkugel (44) und Zentriertrichter (45) vom Zentrum des Zentriertrichters (45) radial-nach außen abnimmt, wenn eine horizontale Verschiebekraft, die größer als die maximale horizontale Windkraft ist, die Zentrierkugel (44) in ihre vertikale Führung einfedern läßt und der Berührungspunkt zwischen Zentrierkugel (44) und Zentriertrichter (45) radial nach außen im Zentriertrichter (45) wandert (FIG. 27).

15. Vorrichtung nach Anspruch 12, **dadurch gekennzeichnet, daß** die Zentrierkugel (44) in einer vertikalen Führung ungebremst gegen eine vertikal wirkende Federkraft einfedern kann, wenn aus einer waagerechten Verschiebung des Zentriertrichters (45) hervorgerufene Vertikalkraft ($F_V$) die Federkraft übersteigt, und daß ein Zurückfedern der vertikalen Führung mit der Zentrierkugel (44) durch hydraulische Drosselung auf eine geringe Geschwindigkeit gebremst wird, so daß die Zeit für den Vollen Rückfederhub ein Vielfaches einer maximalen Erdbeben-Schwingungsperiode beträgt (FIG. 27).

16. Vorrichtung nach einem der Ansprüche 2 bis 9, **dadurch gekennzeichnet, daß** zur Aufnahme von Windkräften zwischen senkrechten Seitenwänden der Basis (6) und auf gleicher Höhe liegenden Punkten des getragenen Objekts (1) rings um das in eine Mulde in der Basis (6) hineinragende Objekt (1) herum verteilt mindestens drei Paare, je ein Paar für die Bewegungs-Achsen, eines für vertikal und zwei für horizontal, jeweils zum Objekt (1) paarweise spiegelbildlich angeordnete mit mechanischer oder hydropneumatischer Feder (47) mit flacher Federkennung in Richtung auf die Seitenwand des Fundaments bis zu einem vorbestimmten Anschlag an geeigneten Führungen ausfahrbare Gleitschuhe oder Rollen (25) oder Mehrrollen-Laufwerke mit horizontaler Laufrichtung rings um das Objekt (1) angeordnet sind (FIG. 28, 29).

17. Vorrichtung nach Anspruch 15, **dadurch gekennzeichnet, daß** die Vorrichtung zur Sicherstellung ringsum gleichmäßig horizontaler Abstände zur Seitenwand (20) der Basis bei geringster Einfederung durch Verschieben des Objekts relativ zur Basis durch Windkraft selbsttätig, durch hydraulische Tastventile geregelt, die Federkraft erhöht, bis volle Ausfederung in Sollstellung zentriert erreicht ist, und bei Verlagerung der Basis während Einfederns bei Erdbebenschwingungen aufgrund der flachen Federkennung die Abstützkraft gegen vorhandene Wind kraft nur gering erhöht wird, so daß nur eine geringe Differenzkraft als Beschleunigungskraft mit Wirkung auf die Objektmasse wirksam wird (FIG. 28, 29).

18. Vorrichtung nach Anspruch 16 und 17, **dadurch gekennzeichnet, daß** die Relativbewegung zwischen dem mit der Basis schwingenden Fundament und der durch virtuelle Pendel schwingungsisolierten Gebäudestruktur dazu benutzt wird, eine oder mehrere Pumpen (37) für die Servoenergiegewinnung anzutreiben, die für sich einzeln oder in Kombination mit Zentrier- und Windkraft-Abstützelementen, die mit der Relativbewegung in Verbindung stehen, angeordnet sein können (FIG. 28, 30).

19. Vorrichtung nach einem der Ansprüche 2 bis 9, **dadurch gekennzeichnet, daß** ein separat vom Hauptgebäude durch virtuelle Pendel schwingungsisoliert gestützter Gebäudeteil außerhalb von Windbeaufschlagung als Lagereferenz für eine Lageregelung des Hauptgebäudes unter Windbelastung dient (FIG. 31 ).

20. Vorrichtung nach einem der Ansprüche 2 bis 9, **dadurch gekennzeichnet, daß** die Laststütze zwischen dem Stütz-bzw. Lagerpunkt (P) des virtuellen Pendels und dem gestützten Objekt als vertikales Federbein mit einer Federung mit sehr flacher Kennung und darauf abgestimmter Dämpfung gestaltet ist, wobei die Federelemente mechanischer, hydraulisch-pneumatischer, oder fluidelastischer Art sein können (FIG. 32).

21. Vorrichtung nach einem der Ansprüche 6, 10 oder 20, **dadurch gekennzeichnet, daß** Vorrichtungen für die Windkraftabstützung und Vertikalfederung mit dem virtuellen Pendel in einer Einheit zusammengefaßt sind (FIG. 33).

22. Vorrichtung nach Anspruch 4, **dadurch gekennzeichnet, daß** das Koppelelement (8) von virtuellen Pendeln auf Pfählen von zwei hängenden Pendeln, Stützelementen (2) und einem stehenden Pendel, Stützelement (7) gehalten wird, und daß die Stützelemente (2) und (7) räumlich schräg angeordnet sind, um die Schrägstellung des Mastendes beim Schwingausschlag auszugleichen, damit der Lagerpunkt nicht im gleichen Maße die Schrägstellung erfährt (FIG. 35, 35a, 35b).

**23.** Vorrichtung nach Anspruch 6, **dadurch gekennzeichnet, daß** das Koppelelement (9) seinen. Laststützpunkt (P) an der Unterseite hat und hängende Objekte trägt und daß die Stützelemente (2, 11) aus Seilen bestehen (FIG. 37, 40, 42).

**24.** Vorrichtung nach Anspruch 7 und 8, **dadurch gekennzeichnet, daß** die Stützelemente (2) aus Seiten bestehen (FIG. 38, 39).

**25.** Vorrichtung nach Anspruch 4, **dadurch gekennzeichnet, daß** das hängende Pendel, Stützelement (2) an einer Raumdecke hängt, die mit der Basis über das Gebäude verbunden ist und daß das instabile Pendel, Stützelement (7) an seinem Fußpunkt als Basis Von dem Knotenpunkt, der von vier oder drei an einer Gebäudedecke hängenden schräg aufeinander zulaufenden Stäben, Seilen oder Ketten gebildet wird, gestützt wird (FIG: 42).

**26.** Vorrichtung nach einem der Ansprüche 4, 5, 6 oder 23, **dadurch gekennzeichnet, daß** mindestens drei virtuelle Pendel eine Masse als Schwingungstilger tragen (FIG. 44, 45, 46, 47, 48).

**27.** Vorrichtung nach einem der Ansprüche 4, 5, 6, 8, 9 oder 23, **dadurch gekennzeichnet, daß** die stabilen hängenden Pendel durch Seile oder Ketten dargestellt werden (FIG. 36b, 37,38, 39, 40, 41, 42, 45, 46, 47, 48).

**28.** Vorrichtung als Basis für Erdbebenschutz-Module nach einem der Ansprüche 2 bis 9, **dadurch gekennzeichnet, daß** das Fundament für den Aufbau der virtuellen Pendel an seiner Unterseite nach den Außenkanten ansteigend gewölbt ausgeführt ist und als Basis für Erdbebenschutzmodule dient (FIG. 49, 56).

**29.** Vorrichtung nach Anspruch. 4, **dadurch gekennzeichnet, daß** das Koppelelement (8) unmittelbar Lagerung für ein Objekt darstellt (FIG.69).

**Claims**

**1.** Method for the protection of structures, in particular buildings, from the action of dynamic forces produced by acceleration of a base (6), for example during seismic events, where in a system supporting the structure (1) the action of stable supporting elements (2, 11) capable of pendulum oscillation in any horizontal direction that raise the mass of the structure and of unstable supporting elements (7, 14) capable of pendulum oscillation in any horizontal direction that lower the mass of the structure are superimposed by coupling in such a way that, with alternating horizontal movement of the base (6), for example during seismic events under the influence of displacement of the supporting points (10) of the supporting elements linked with the base (6), only a slight rise in the mass of the structure (1) relative to the position of the inert mass of the structure (1) on the supporting or bearing points (P) on the coupling members or the combined supporting or coupling members is produced, as a result of which, due to an only slight inclination of the spatial trajectory of the supporting or bearing points (P) relative to the base, only a small restoring force ($F_R$) acting in the direction of the equilibrium position is produced by the mass of the structure exposed to gravitation which, during the occurrence of high transverse acceleration at the base, nevertheless results in only a slight acceleration of the structure with a long period of natural oscillation (Fig. 9, 12, 13, 16, 17, 21, 22, 23, 24).

**2.** Device for performing the method in accordance with Claim 1, **characterised in that** for the oscillation-decoupled support of a structure (1), in particular of a building, on its static supporting points (10) relative to an oscillating base (6) so as to protect the structure (1) from oscillation of the base (6), the structure (1) is supported on a device at each defined supporting or bearing point (P) on a coupling element or combined bearing and coupling element (8, 9) that is itself supported on the oscillating base (6) by means of supporting elements capable of pendulum oscillation in all directions which it links with one another, where the supporting elements have a system of stable supporting elements (2, 11) capable of horizontal pendulum oscillation in any direction that raise the mass of the structure, and of unstable supporting elements (7, 14) capable of horizontal pendulum oscillation in any direction that lower the mass of the structure, and where the supporting elements are dimensioned and disposed in their normal position in such a manner that at each coupling element or combined supporting and coupling element in the place for the supporting and bearing point (P) of the structure (1) to be supported, a freedom of movement in any horizontal direction is achieved which is comparable to that of the free end of a very long pendulum capable of oscillation in any direction about two axes so as to describe the form of a concave spherical cup so that the effect of virtual pendulums that oscillate in every direction is produced (Fig. 9, 12, 13, 16, 17, 21, 22,23,24).

3. Device in accordance with Claim 2, **characterised in that** the coupling element (8, 9) is raised on one connecting side of the supporting elements (2, 7, 11, 14) and lowered at one opposing side, and that the supporting and bearing point (P) for the support of the structure. (1) on the coupling element (8, 9) at a basic horizontal amplitude of the oscillating base (6) only performs a slight movement describing a flat, curved, concave area which is open at the top. (Fig. 9, 12, 13, 16, 17).

4. Device in accordance with Claim 2 or 3, **characterised in that** two supporting elements (2, 7, 11, 14) are pivotally connected biaxially by a coupling element (8), (8b), where one supporting element (2, 12) is a stable pendulum pivotally suspended biaxially at its upper end from a supporting point (10) connected with the base (6), and the other supporting element (7, 14) is an upright unstable pendulum pivotally mounted biaxially at the lower end on the base (6) and that the coupling element (8) is supported against the structure in a horizontal axis so that it cannot rotate relative to the structure (1) about the vertical axis (Fig-9, 12, 13, 16, 17).

5. Device in accordance with Claim 4, **characterised in that** the coupling element (8) is incorporated into a further coupling element (8b) and monoaxially pivotally connected with it on both sides via the coupling element (8a), and that the supporting element (8b) that is supported pivotally monoaxially at the load support ($W_l$) is pivotally supported biaxially on the unstable pendulum, supporting element (7) (Fig. 13 to 17).

6. Device in accordance with Claim 2 or 3, **characterised in that** three supporting elements (11) are pivotally linked biaxially to a coupling element (9, 14) at three points of the periphery, positioned obliquely inclined in upward and outward direction away from the centre of the coupling element (9) in the rest position and are pivotally suspended biaxially from the base (6). (Fig. 21).

7. Device in accordance with Claim 6, **characterised in that** the supporting and bearing point (P) for the support of the structure (1) is disposed above a level formed by the three bearing points (12) of the supporting elements (11, 14) at the coupling element (9). (Fig. 19, 20),

8. Device in accordance with Claim 2, **characterised in that** the coupling element (8) which is pivotally linked biaxially with at least two supporting elements (2), which are each pivotally suspended biaxially in parallel arrangement at their upper ends for pendulum oscillation from supporting point (10) connected with the base (6) carries a supporting element (14) at its centre which is pivotally supported monoaxially in the coupling element (8), where the pivotal movement of the supporting element (14) points in the direction of the supporting points of the coupling element (8) at the supporting elements (2) and which, at its lower end, below its support on the coupling element (8), is pivotally mounted biaxially and axially movable and, above its support on the coupling element (8) supports the structure at a biaxially pivotal supporting and bearing point (P). (Fig. 22, 23, 24).

9. Device in accordance with Claim 2 or 8, **characterised in that** in variation from the embodiment of the device in accordance with Claim 8, the coupling element (8) is supported on several, symmetrically disposed supporting elements (2) in parallel position and that the supporting element (14) is pivotally mounted biaxially on the coupling element (8). (Fig. 22, 23, 24).

10. Device in accordance with one of Claims 2 to 9, **characterised in that** to take up wind loads a bar taking up transverse loadings is disposed between the base (6) and the structure (1) beneath the supported structure (1), where the one end of the bar has a fixed, non-pivotal connection with the end of a preloaded tensioning spring (41) non-pivotally connected to the base (6) or the supported structure (1) and its other end is supported with a pin (42) in a biaxially pivoting bearing (43) in the opposing structure (1) or attached to the base (6) respectively so as to be axially displaceable, so that the position of the structure (1) and the base (6) relative to one another is fixed and so that relative displacement between base (6) and the structure (1) only occurs, when a transverse loading acting on the pin (42) exceeds a value which is predetermined by the preloading of tensioning spring (41). (Fig. 25).

11. Device in accordance with one of Claims 2 to 9, **characterised in that** a bar which takes up transverse loadings is disposed beneath the supported structure (1) between the base (6) and the structure (1), one end of which has a fixed connection with a spring buffer (48) made of elastomeric material that is attached in fixed position to the base (6) or the supported structure (1), and the other end of which is supported so as to be axially displaceable with a pin (42) in a biaxial pivotal bearing attached to the structure (1) in opposition or to the base (6) so that the position of the structure (1) and the base (6) relative to one another is elastically fixed. (Fig. 26).

**12.** Device in accordance with one of Claims 2 to 9, **characterised in that** one or several retaining devices (50) for the absorption of wind loads are disposed below the supported structure (1), with which in each case a centring sphere (44) which is pivotally mounted so that it can rotate in all directions and guided in a perpendicular axis is pressed downwards with a predetermined force produced by a mechanical or hydropneumatic spring (47) into the centre of a centring funnel (45) rigidly connected with the base (6), said funnel having an angle of aperture which increases from a starting angle at its centre in outward direction up to 180° which produces a form-positive connection between the structure (1) and the base (6) capable of transmitting horizontal forces up to a limit value determined by the spring loading and angle of aperture at the centre of the funnel, where the centring sphere (44) is vertically lifted against the action of the spring and through the slope of the funnel once the limit value is exceeded and rolls into the shallower portion of the funnel, when the horizontally transmissible force is decreased and becomes zero outside the funnel, so that during relative movement between the structure (1) and the base (6) as a result of oscillation of the base (6) through seismic action, only small forces or, depending on the breadth of the oscillation of the base (6), virtually no horizontal forces are transmitted from the base to the structure. (Fig. 17).

**13.** Device in accordance with Claim 12 for centring a structure or building which can easily be horizontally displaced owing to the properties of its supports and for providing a retaining force, **characterised in that** a vertically guided centring sphere (44) supported in a ball bearing bed (49) is pressed into a centring funnel (45) under the action of a mechanical or hydropneumatic or viscoelastic spring force so that a wind load acting horizontally on the building structure (51) cannot produce a reactive force at the point of contact of the centring sphere (44) in the centring funnel (45) with a vertical component ($F_V$) that is capable of pressing the centring sphere (44) back in its vertical guide against the spring force. (Fig. 27).

**14.** Device in accordance with Claim 12, **characterised in that**, outside the circle formed by the contact line of a centring sphere (44) in contact with the centring funnel (45) in the lowest position; the centring funnel (45) has an angle of aperture (y) which increases as far as to 180°, so that the horizontal components ($F_H$) of the normal force at the point of contact between centring sphere (44) and centring funnel (45) decreases from the centre of the centring funnel (45) radially in outward direction, when a horizontal displacement force which is greater than the maximum horizontal wind loading causes the centring sphere (44) to move back into its vertical guide with the point of contact between centring sphere (44) and centring funnel (45) moving in radially outward direction in the centring funnel (45). (Fig. 27).

**15.** Device in accordance with Claim 12, **characterised in that** the centring sphere (44) can move back in a vertical guide against a vertically acting spring force without being attenuated, if a vertical force ($F_V$) produced by horizontal displacement of the centring funnel (45) exceeds the spring force, and that a spring-return of the vertical guide with the centring sphere (44) is attenuated through hydraulic damping to a low speed, so that the time for the full spring return stroke is a multiple of a maximum seismic oscillation period. (Fig. 27).

**16.** Device according to one of Claims 2 to 9, **characterised in that** for the purpose of absorption of wind forces, at least three pairs of sliding shoes or rollers (25), which can extend on suitable guides as far as a pre-determined stop, or multiple roller running mechanisms running horizontally around the structure (1), are disposed between vertical side walls of base (6) and points of the supported structure (1) located at the same height and distributed around the structure (1) projecting into a depression in the base (6), one pair for each movement axis, namely one for vertical and two for horizontal, arranged in pairs in opposite hand in relation to the structure (1) with mechanical or hydropneumatic spring (47) with flat characteristic in the direction of the side wall of the foundation. (Fig. 28, 29).

**17.** Device in accordance with Claim 15, **characterised in that** in order to ensure uniform horizontal distances from the side wall (20) of the base through minimum spring deflection through displacement of the structure relative to the base under the action of wind, the device increases the spring force automatically under the control of hydraulic sensing valves, until full spring deflection centred in the nominal position is achieved, and that, in the event of displacement of the base with spring deflection under the influence of seismic forces, because of the flat spring characteristics the supporting force as against existing wind pressure is only increased slightly, so that only a small differential force acts as an acceleration force on the mass of the structure. (Fig. 28, 29).

**18.** Device in accordance with Claims 16 and 17, **characterised in that** the relative movement between the foundation oscillating with the base and the building structure that has been isolated from the oscillation by virtual pendulums is used to drive one or several pumps (37) for the generation of servo-energy which may be arranged either independently or in combination with centring elements and wind load supporting elements associated with the relative movement. (Fig. 28, 30).

**19.** Device in accordance with one of Claims 2 to 9, **characterised in that** part of the building supported separately from the main building and isolated from oscillation by virtual pendulums which is excluded from wind load is used as a location reference for the control of the position of the main building under wind load. (Fig. 31).

**20.** Device in accordance with one of Claims 2 to 9, **characterised in that** the load support between supporting and bearing point P of the virtual pendulum and the supported structure is designed as a vertical strut which has very flat spring characteristics and an attenuation to match, where the spring elements may be mechanical, hydraulic-pneumatic or fluid-elastic elements. (Fig. 32).

**21.** Device in accordance with one of Claims 6, 10 or 20, **characterised in that** devices for supporting wind loads and vertical springs are combined with the virtual pendulum to form a single unit. (Fig. 33).

**22.** Device in accordance with Claim 4, **characterised in that** the coupling element (8) is made up from virtual pendulums on piles from two suspended pendulums, supporting elements (2) and one standing pendulum, supporting element (7), and that the supporting elements (2) and (7) are disposed spatially skew so as to compensate for the skew position of the mast end during oscillatory deflection, so that the bearing point is not exposed to the skew position to the same extent. (Fig. 35, 35a, 35b).

**23.** Device in accordance with Claim 6, **characterised in that** the coupling element (9) has its load bearing point (P) on its underside and carries suspended structures and that the supporting elements (2, 11) consist of cables. (Fig. 37, 40, 42).

**24.** Device in accordance with Claim 7 and 8, **characterised in that** the supporting elements (2) consist of cables. (Fig. 38, 39).

**25.** Device in accordance with Claim 4, **characterised in that** the suspended pendulum, supporting element (2), is suspended from a room ceiling which is connected to the base through the building and that the unstable pendulum, supporting element (7), is supported at its foot as the base by the system point formed by four, or three, obliquely converging bars, cables or chains suspended from a building ceiling. (Fig. 42).

**26.** Device in accordance with one of Claims 4, 5, 6 or 23, **characterised in that** at least three virtual pendulums carry an oscillation damping mass. (Fig. 44, 45, 46, 47, 48).

**27.** Device in accordance with one of Claims 4, 5, 6, 8, 9 or 23, **characterised in that** the stable, suspended pendulums are represented by cables or chains. (Fig. 36b, 37, 38, 39, 40, 41, 42, 45, 46, 47, 48).

**28.** Device as a base for seismic protection modules in accordance with one of Claims 2 to 9, **characterised in that** the foundation for the construction of the virtual pendulums has the shape of a curve ascending towards the outer edges and serves as a base for seismic protection modules (Fig. 49, 56).

**29.** Device in accordance with Claim 4, **characterised in that** the coupling element (8) represents the direct support of a structure. (Fig. 69).

**Revendications**

**1.** Procédé pour la protection d'objets, notamment de bâtiments, contre les forces dynamiques provenant d'accélération d'une base (6) par exemple lors d'un tremblement de terre, sachant que dans un système supportant l'objet (1) l'action d'éléments de soutien (2, 11) stables, soulevant la masse de l'objet, pouvant osciller dans chaque direction horizontale et d'éléments de soutien (7, 14) instables faisant descendre la masse de l'objet, pouvant osciller dans chaque direction horizontale est superposée par couplage de telle manière qu'avec un mouvement horizontal changeant de la base (6) par exemple lors d'un tremblement de terre sous l'influence d'un déplacement des points de soutien (10) reliés à la base (6) des éléments de soutien par rapport à la situation de la masse porteuse de l'objet (1) une élévation seulement minime de la masse de l'objet (1) sur les points de soutien et/ou de pose (P) se produit sur les éléments de couplage ou les éléments combinés de couplage et de soutien, moyennant quoi en raison d'une inclinaison minime de la trajectoire de mouvement spatial par rapport à la base des points de soutien et/ou de pose (P) il se produit une force de rappel ($F_R$) stabilisante seulement minime en direction de la position de repos à travers la masse de l'objet exposée à la gravitation, d'où résulte en cas d'accélérations transversales élevées sur la base néanmoins une accélération seulement minime de l'objet avec une durée plus longue de cycles d'ondes propres (FIG. 9, 12, 13, 16, 17, 21, 22, 23, 24).

2. Dispositif pour la mise en oeuvre du procédé selon la revendication 1, **caractérisé en ce que** pour la pose découplée des ondes d'un objet (1), notamment d'un bâtiment sur ses points de soutien statiques (10) par rapport à une base oscillante (6) pour la protection de l'objet (1) contre les ondes de la base (6) les supports de l'objet (1) interviennent chaque fois sur une installation sur un point de soutien et/ou de pose (P) déterminé sur un élément de couplage ou un élément combiné de couplage et de soutien (8, 9), qui de son côté est soutenu sur la base (6) oscillante par l'intermédiaire d'éléments de soutien, qui les raccordent entre eux, placés de manière oscillante dans toutes les directions, sachant que les éléments de soutien comportent un système d'éléments de soutien (2, 11) stables, soulevant la masse de l'objet, pouvant osciller dans chaque direction horizontale et d'éléments de soutien (7, 14) instables faisant descendre la masse de l'objet, pouvant osciller dans chaque direction horizontale et sachant que le dimensionnement et la disposition des éléments de soutien sont obtenus dans leur position de sortie de telle manière que sur chaque élément de couplage ou élément combiné de soutien et de couplage à l'endroit du point de soutien et/ou de pose (P) de l'objet à soutenir (1) une possibilité de mouvement comparable se produit dans chaque direction comme elle décrit l'extrémité libre d'un pendule biaxial très long pouvant osciller dans chaque direction horizontale, en forme d'une cuvette sphérique concave, dans laquelle intervient l'action d'un pendule virtuel oscillant dans chaque direction (FIG. 9, 12, 13, 16, 17, 21, 22, 23, 24).

3. Dispositif selon la revendication 2, **caractérisé en ce que** l'élément de couplage (8, 9) effectue sur un côté d'articulation des éléments de soutien (2, 7, 11, 14) à une élévation et sur un côté opposé un abaissement et **en ce que** le point de soutien et/ou de pose (P) pour le soutien de l'objet (1) sur l'élément de couplage (8, 9) avec une amplitude horizontale pris pour base de la base oscillante (6) ne réalise qu'un mouvement minime et **en ce qu'**il décrit une surface locale concave courbée à plat, ouverte vers le haut (FIG. 9, 12, 13, 16, 17).

4. Dispositif selon la revendication 2 ou 3, **caractérisé en ce que** deux éléments de soutien (2, 7, 11, 14) sont reliés et articulés chaque fois biaxialement par un élément de couplage (8), (8b), dans lequel un élément de soutien (2, 12) est configuré comme un pendule stable suspendu à l'extrémité supérieure en oscillant et articulé biaxialement sur un point de soutien (10) relié à la base (6) et l'autre élément de soutien (7, 14) comme un pendule instable monté articulé biaxialement sur l'extrémité inférieure sur la base (6) et **en ce que** l'élément de couplage (8) est monté sur l'objet dans un axe horizontal, de telle manière que par rapport à l'objet (1), il ne peut exécuter aucune torsion autour de l'axe vertical (FIG. 9, 12, 13, 16, 17) .

5. Dispositif selon la revendication 4, **caractérisé en ce que** l'élément de couplage (8) est rangé dans un autre élément de couplage (8b) et relié articulé des deux côtés uniaxialement au-dessus de l'élément de couplage (8a) et **en ce que** l'élément de soutien (8b), lequel est monté articulé uniaxialement sur les supports de charge ($W_1$), s'appuie articulé biaxialement sur le pendule instable, élément de soutien (7) (FIG 13 à 17).

6. Dispositif selon la revendication 2 ou 3, **caractérisé en ce que** trois éléments de soutien (11) sont articulés biaxialement à un élément de couplage (9, 14) sur trois points à la périphérie, disposés inclinés à l'écart vers le haut, en diagonale vers l'extérieur dans la position de repos à partir du centre de l'élément de couplage (9) et suspendus articulés biaxialement à la base (6) (FIG. 21).

7. Dispositif selon la revendication 6, **caractérisé en ce que** le point de soutien et/ou de pose (P) pour le soutien de l'objet (1) est disposé sur l'élément de couplage (9) au-dessus d'une surface formée des trois points de pose (12) des éléments de soutien (11, 14) (FIG 19, 20).

8. Dispositif selon la revendication 2, **caractérisé en ce que** l'élément de couplage (8), qui est relié articulé biaxialement avec au moins deux éléments de soutien (2), suspendus en disposition parallèle chacun articulé en oscillant biaxialement à leur extrémité supérieure à un point de soutien (10) relié à la base (6), porte dans son centre un élément de soutien (14), qui est monté articulé uniaxialement dans l'élément de couplage (8), sachant que le mouvement oscillant de l'élément de soutien (14) indique dans la direction des points de soutien de l'élément de couplage (8) sur les éléments de soutien (2), et qui est monté en pouvant coulisser axialement et articulé biaxialement à son extrémité inférieure en dessous de sa position sur l'élément de couplage (8) et qui au-dessus de sa position sur l'élément de couplage (8) porte l'objet sur un point de soutien et/ou de pose (P) articulé biaxialement (FIG 22, 23, 24).

9. Dispositif selon la revendication 2 ou 8, **caractérisé en ce que** dans le dispositif différemment de la réalisation selon la revendication 8, l'élément de couplage (8) est appuyé en position parallèle à plusieurs éléments de soutien (2) disposés symétriquement et **en ce que** l'élément de soutien (14) est monté articulé biaxialement sur l'élément de couplage (8) (FIG 22, 23, 24).

**10.** Dispositif selon une des revendications 2 à 9, **caractérisé en ce que** pour l'absorption de l'énergie éolienne sous l'objet supporté (1) une barre absorbant la force transversale est disposée entre la base (6) et l'objet (1), dans laquelle une extrémité de la barre est reliée de façon non articulée solidement avec l'extrémité d'un ressort de traction (41) pré-tendu fixé non articulé à la base (6) ou à l'objet supporté (1) et dont l'autre extrémité s'appuie en pouvant coulisser axialement avec un tourillon (42) dans un objet (1) se trouvant en face de lui, de préférence sur la base (6) fixé dans une position (43) orientable biaxialement, la position de l'objet (1) et de la base (6) étant fixée l'un par rapport à l'autre et une mobilité relative intervient d'abord entre la base (6) et l'objet (1), lorsqu'une force transversale agissant sur le tourillon (42) dépasse une dimension prédéterminée par la tension initiale du ressort de traction (41) (FIG 25).

**11.** Dispositif selon une des revendications 2 à 9, **caractérisé en ce que** sous l'objet supporté (1) entre la base (6) et l'objet (1) est disposée une barre absorbant la force transversale, dans laquelle une extrémité de la barre est reliée solidement à un ressort de traction (48) en matériau élastomère solidement relié à la base (6) ou à l'objet supporté (1) et dont l'autre extrémité s'appuie en pouvant coulisser axialement avec un tourillon (42) dans un objet (1) se trouvant en face d'elle fixé de préférence à la base (6) dans une position orientable biaxialement, la position de l'objet (1) et de la base (6) étant fixée l'un par rapport à l'autre de manière élastique (FIG. 26).

**12.** Dispositif selon une des revendications 2 à 9, **caractérisé en ce que** pour l'absorption de l'énergie éolienne sous l'objet supporté (1) un ou plusieurs dispositifs de soutien (50) sont fixés, avec lesquels chaque fois une boule de centrage (44) guidée dans un axe vertical, montée pour pouvoir pivoter dans toutes les directions, est pressée avec une force prédéterminée d'un ressort mécanique ou hydropneumatique (47) vers le dessous dans le centre d'une trémie de centrage (45) reliée solidement à la base (6), qui comporte un angle d'ouverture d'une valeur initiale dans son centre vers l'extérieur croissant jusqu'à 180°, moyennant quoi une liaison par conjugaison de formes est réalisée entre l'objet (1) et la base (6), qui est en mesure de transmettre des forces horizontales jusqu'à une valeur limite dépendant de l'élasticité et de l'angle d'ouverture au centre de la trémie, lors du dépassement desquelles la boule de centrage (44) est soulevée verticalement contre l'élasticité par la diagonale de la trémie et roule dans la zone de la trémie qui devient plate, sachant que la force transmise horizontalement diminue et devient nulle à l'extérieur de la trémie, de sorte que pendant les mouvements relatifs entre l'objet (1) et la base (6) . lors des oscillations de la base (6) provoquées par un tremblement de terre seulement presque aucune force horizontale infime ou en fonction des ondes d'oscillation de la base (6) n'est transmise de la base sur l'objet (FIG 17).

**13.** Dispositif selon la revendication 12 pour le centrage d'un objet ou d'un bâtiment pouvant coulisser légèrement horizontalement grâce à la qualité de sa position et l'activation d'une résistance, **caractérisé en ce qu'**une boule de centrage (44) entraînée verticalement et montée dans un banc de boule de commande (49) est pressée avec une élasticité mécanique ou hydropneumatique ou visco-élastique dans une trémie de centrage (45), de telle manière qu'une énergie éolienne agissant horizontalement sur la structure du bâtiment (51) ne peut provoquer aucune force de réaction sur le point d'appui de la boule de centrage (44) dans la trémie de centrage (45), dont les composants verticaux ($F_V$) peuvent refouler la boule de centrage (44) dans le guidage vertical contre l'élasticité (FIG. 27)

**14.** Dispositif selon la revendication 12 **caractérisé en ce qu'**une trémie de centrage (45) à l'extérieur du cercle que forme la tangente de la boule de centrage (44) en contact dans la position la plus profonde avec la trémie de centrage (45), comporte un angle d'ouverture (y) pouvant atteindre 180°, de telle manière que les composants horizontaux ($F_H$) absorbent radialement vers l'extérieur à partir de la force normale sur le point d'appui à partir de la boule de centrage (44) et la trémie de centrage (45) à partir du centre de la trémie de centrage (45), lorsqu'une force de déplacement horizontale, qui est plus grande que l'énergie éolienne horizontale maximale, fait rentrer la boule de centrage (44) dans son guidage vertical et le point d'appui entre la boule de centrage (44) et la trémie de centrage (45) se déporte vers l'extérieur de manière radiale dans la trémie de centrage (45) (FIG. 27)

**15.** Dispositif selon la revendication 12, **caractérisé en ce que** la boule de centrage (44) peut rentrer dans un guidage vertical sans freinage contre une élasticité agissant verticalement, lorsque à partir d'un déplacement horizontal de la trémie de centrage (45) la force verticale ($F_V$) provoquée dépasse l'élasticité et **en ce qu'**un retour de ressort du guidage vertical avec la boule de centrage (44) est freiné par étranglement hydraulique à une vitesse réduite, de telle manière que la durée de la course complète de retour de ressort correspond à un multiple d'un cycle maximal de tremblements de terre (FIG. 27).

**16.** Dispositif selon une des revendications 2 à 9, **caractérisé en ce que** pour l'absorption de l'énergie éolienne entre les parois latérales verticales de la base (6) et les points de l'objet supporté (1) situés à la même hauteur tout autour de l'objet (1) avançant dans un cuvette dans la base (6) réparties autour au moins trois paires, chaque paire pour les axes de mouvement, une paire pour l'axe vertical et deux pour l'axe horizontal, chaque fois disposés sur l'objet (1) par paire en image inversée avec ressort (47) mécanique ou hydropneumatique avec caractéristique de flexibilité plate en direction de la paroi latérale de la fondation jusqu'à une butée prédéterminée sur des guidages appropriés, des patins de guidage amovibles ou des rouleaux (25) ou des chariots de roulement multi-rouleaux avec sens de marche horizontal sont disposés tout autour de l'objet (1) (FIG. 28, 29).

**17.** Dispositif selon la revendication 15, **caractérisé en ce que** le dispositif pour la mise à l'abri tout autour d'espacements uniformément horizontaux vers la paroi latérale (20) de la base avec compression du ressort la plus réduite par déplacement de l'objet par rapport à la base par énergie éolienne réglée automatiquement par clapets de contact hydrauliques augmente l'élasticité jusqu'à ce que le débattement complet soit atteint dans le maintien en position centrée et lors du transfert de la base pendant la compression du ressort lors d'oscillations de tremblement de terre en raison de la caractéristique de flexibilité plate la force de support par rapport à l'énergie éolienne existante n'est augmentée que faiblement de telle manière que seule une force différentielle infime devient efficace comme force accélératrice avec effet sur la masse de l'objet (FIG. 28, 29).

**18.** Dispositif selon les revendications 16 et 17, **caractérisé en ce que** le mouvement relatif entre la fondation oscillant avec la base et la structure du bâtiment isolé des oscillations par un pendule virtuel est utilisé afin d'entraîner une ou plusieurs pompes (37) pour la production de servoénergie, qui peut être disposée pour elle-même individuellement ou combinée avec des éléments de soutien du centrage et de l'énergie éolienne, qui sont en liaison avec le mouvement relatif (FIG. 28, 30).

**19.** Dispositif selon l'une des revendications 2 à 9, **caractérisé en ce qu'**une partie du bâtiment soutenu et isolé des oscillations, séparément du bâtiment principal, par un pendule virtuel en dehors de l'alimentation en vent sert de référence planimétrique pour un contrôle d'orientation du bâtiment principal sous charge de vent (FIG. 31).

**20.** Dispositif selon l'une des revendications 2 à 9, **caractérisé en ce que** les supports de charge entre le point de soutien et/ou de pose (P) du pendule virtuel et l'objet supporté est formé comme une jambe élastique verticale avec une suspension à ressort avec une caractéristique très plate et une atténuation accordée là-dessus, sachant que les composants du ressort peuvent être de type mécanique, hydropneumatique ou élastico-fluides (FIG. 32).

**21.** Dispositif selon l'une des revendications 6, 10 ou 20, **caractérisé en ce que** les dispositifs pour la protection contre l'énergie éolienne et la suspension à ressort verticale sont réunis avec le pendule virtuel dans une unité. (FIG. 33).

**22.** Dispositif selon la revendication 4, **caractérisé en ce que** l'élément de couplage (8) est tenu par pendules virtuels sur des pieux à partir de deux pendules suspendus, éléments de soutien (2) et un pendule posé debout, élément de soutien (7) et **en ce que** les éléments de soutien (2) et (7) sont disposés en diagonale dans l'espace, pour compenser l'inclination de l'extrémité du pylône lors d'une amplitude d'oscillations, afin que le point de pose n'expérimente pas l'inclination de la même manière (FIG. 35, 35a, 35b) .

**23.** Dispositif selon la revendication 6, **caractérisé en ce que** l'élément de couplage (9) a son point de support de charge (P) sur le dessous et porte des objets suspendus et **en ce que** les éléments de soutien (2, 11) se composent de câbles (FIG. 37, 40, 42).

**24.** Dispositif selon les revendications 7 et 8, **caractérisé en ce que** les éléments de soutien (2) se composent de câbles (FIG. 38, 39).

**25.** Dispositif selon la revendication 4, **caractérisé en ce que** le pendule suspendu, élément de soutien (2) est suspendu à un plafond, qui est relié à la base pardessus le bâtiment et **en ce que** le pendule instable, élément de soutien (7) est soutenu sur son pied comme base par le point nodal qui est formé de quatre ou trois barres, câbles ou chaînes passant en diagonale l'un sur l'autre suspendus à un plafond de bâtiment (FIG. 42).

**26.** Dispositif selon l'une des revendications 4, 5, 6 ou 23, **caractérisé en ce qu'**au moins trois pendules virtuels portent une masse comme amortisseur d'oscillations (FIG. 44, 45, 46, 47, 48).

**27.** Dispositif selon l'une des revendications 4, 5, 6, 8, 9 ou 23, **caractérisé en ce que** les pendules stables suspendus sont représentés par des câbles ou des chaînes (FIG. 36b, 37, 38, 39, 40, 41, 42, 45, 46, 47, 48) .

**28.** Dispositif comme base du module de protection contre les tremblements de terre, selon l'une des revendications 2 à 9, **caractérisé en ce que** la fondation pour la construction du pendule virtuel sur son dessous est réalisée bombée en remontant après les bords extérieurs et sert de module de protection contre les tremblements de terre (FIG. 49, 56).

**29.** Dispositif selon la revendication 4, **caractérisé en ce que** l'élément de couplage (8) représente directement la position pour un objet (FIG 69).

FIG.1

FIG.2

FIG.3

FIG.4

FIG. 5

FIG. 6

FIG.7

FIG. 8

FIG. 9

FIG.10

FIG. 11

FIG. 12

FIG.13

FIG.14

FIG.15

FIG.16

FIG.17

FIG. 18

FIG. 19

FIG. 20

FIG. 21

FIG.22

FIG.23

$I_v$

1

6

FIG.23a

$I_v$

1

6

FIG.23b

FIG.23c

FIG.24

FIG. 25

FIG. 26

FIG.27

FIG.28

FIG.29

$$F_w = C_2 * f + F_w$$

$$F_0 = C_0 * f$$

FIG.30

FIG.31

FIG.32

FIG.33

FIG.34

FIG.35

FIG.35a

FIG.35b

FIG.36

FIG.36b

FIG.36a

FIG.37

FIG.38

FIG.39

FIG.40

FIG.41

FIG.42

FIG.43

FIG.44

FIG.45

FIG.46

FIG.47

FIG.48

$P_v$

$P_v$

$P_v$

$P_v$

100

$P_v$

FIG.49

FIG.50

103

51

113

101

102

104

22

FIG.51

51    109    110    109

105

106

107

110

22

109

FIG.52

FIG.53

EP 1 003 948 B1

FIG.54

93

FIG.55

FIG.56

56

57

FIG.57

FIG.58

FIG.60

<u>6</u>

FIG.61

58

58

FIG.62

58

58

FIG.63

116    115              2              56 P$_v$              FIG.64

FIG.64b

FIG.64a

FIG.65

122

126

126

8

121

FIG.66

FIG.67

FIG.68

56

FIG.69

FIG.70